(19) Europäisches Patentamt / European Patent Office / Office européen des brevets

(11) **EP 4 161 198 A1**

(12) **EUROPEAN PATENT APPLICATION**
published in accordance with Art. 153(4) EPC

(43) Date of publication:
**05.04.2023 Bulletin 2023/14**

(21) Application number: **21814005.1**

(22) Date of filing: **25.04.2021**

(51) International Patent Classification (IPC):
**H04W 72/12** *(2009.01)*        **H04L 1/16** *(2006.01)*
**H04L 1/18** *(2006.01)*         **H04L 5/00** *(2006.01)*

(52) Cooperative Patent Classification (CPC):
**H04L 1/1861; H04L 1/1864; H04L 5/00;**
**H04W 72/12**

(86) International application number:
**PCT/CN2021/089742**

(87) International publication number:
**WO 2021/238545 (02.12.2021 Gazette 2021/48)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.05.2020  CN 202010467902**

(71) Applicant: **Datang Mobile Communications**
**Equipment Co., Ltd.**
**Beijing 100085 (CN)**

(72) Inventors:
• **GAO, Xuejuan**
  **Beijing 100085 (CN)**
• **SI, Qianqian**
  **Beijing 100085 (CN)**

(74) Representative: **Körfer, Thomas**
**Mitscherlich PartmbB**
**Patent- und Rechtsanwälte**
**Sonnenstrasse 33**
**80331 München (DE)**

(54) **INFORMATION TRANSMISSION METHOD AND APPARATUS**

(57)    Disclosed are an information transmission method and apparatus, which are used for realizing hybrid automatic repeat request acknowledgment (HARQ-ACK) feedback when one piece of downlink control information (DCI) schedules one PDSCH to be transmitted on a plurality of carriers. The information transmission method provided in the present application comprises: when one piece of DCI can schedule one downlink transmission to be performed on a plurality of carriers, by means of taking the plurality of carriers as a group, determining an HARQ-ACK codebook; and sending the HARQ-ACK codebook.

Determining an HARQ-ACK codebook with a plurality of carriers as a group, when one DCI is used to schedule one downlink transmission on the plurality of carriers — S101

Sending the HARQ-ACK codebook — S102

FIG. 3

EP 4 161 198 A1

**Description**

**Cross-Reference of Related Applications**

The application claims the priority from Chinese Patent Application No. 202010467902.1, filed with the China National Intellectual Property Administration on May 28, 2020 and entitled "Information Communication Method and Apparatus", which is hereby incorporated by reference in its entirety.

**Technical Field**

The application relates to the field of communication technologies, and particularly to an information communication method and apparatus.

**Background**

With respect to the Downlink Control Information (DCI) scheduling a Physical Downlink Shared CHannel (PDSCH), it is only supported in the prior art that the one DCI schedules transmission of one PDSCH over a carrier, so the PDSCH exists independently on each carrier. Thus, in the prior art, the semi-static Hybrid Automatic Repeat reQuest (HARQ) acknowledgment codebook is an HARQ-ACK codebook generated for each carrier, and then the codebooks of carriers are cascaded together to obtain the final HARQ-ACK codebook for transmission. Here the HARQ acknowledgment includes Acknowledgment (ACK) and Negative Acknowledgment (NACK). For convenience of description herein, the HARQ-ACK is uniformly used to represent the HARQ acknowledgment.

If the one DCI schedules transmission of one PDSCH over a plurality of carriers, the method of independently generating an HARQ-ACK codebook for each carrier and then cascading codebooks together in the prior art is still used, so that the redundant HARQ-ACK feedback bits are reserved for the plurality of scheduled carriers, thereby reducing the transmission efficiency and performance of the HARQ-ACK.

Therefore, at present, when the one DCI schedules transmission of one PDSCH simultaneously over a plurality of carriers, the HARQ-ACK is fed back for each PDSCH but not for each carrier. In this case, there is no clear solution on how to perform the HARQ-ACK feedback in the prior art.

**Summary**

The embodiments of the application provide an information communication method and apparatus, so as to realize the HARQ-ACK feedback when one DCI schedules transmission of one PDSCH simultaneously on a plurality of carriers.

On the terminal side, an information communication method according to an embodiment of the application includes:

determining an HARQ-ACK codebook with a plurality of carriers as a group, when one DCI is used to schedule one downlink transmission on the plurality of carriers;

sending the HARQ-ACK codebook.

In the embodiment of the application, an HARQ-ACK codebook is determined with a plurality of carriers as a group when one DCI is used to schedule one downlink transmission on the plurality of carriers. and the HARQ-ACK codebook is sent, thereby realizing the HARQ-ACK feedback when one DCI schedules the transmission of one PDSCH simultaneously on the plurality of carriers.

Optionally, determining the HARQ-ACK codebook specifically includes:

when the HARQ-ACK codebook is transmitted in a first time unit with index n (that is, when HARQ-ACK transmission for the downlink transmission scheduled by the DCI needs to be performed in the first time unit with index n, the HARQ-ACK codebook transmitted in the first time unit with index n needs to be generated), determining each first time unit with index $n-K1_i$ according to each value $K1_i$ in a feedback timing K1 set, and determining the quantity $M_{c\text{-}max}$ of candidate downlink transmission opportunities corresponding the first time unit with index $n-K1_i$;

cascading the $M_{c\text{-}max}$ candidate downlink transmission opportunities corresponding to each first time unit with index $n-K1_i$ together according to a fixed order of corresponding K1 values within the feedback timing K1 set, to form a set of candidate downlink transmission opportunities corresponding to the plurality of carriers;

determining the HARQ-ACK codebook according to the set of candidate downlink transmission opportunities corresponding to the plurality of carriers.

Optionally, the quantity $M_{c-max}$ is determined in one of following manners:

Manner 1-1: determining the quantity $M_{c-max}$ as the maximum number of candidate downlink transmission opportunities in each second time unit for which an HARQ-ACK feedback is performed in the first time unit with index n on each of the plurality of carriers;

Manner 1-2: for each first time unit with index $n-K1_i$, determining the quantity $M_{c-max}$ as the maximum number of candidate downlink transmission opportunities in a second time unit corresponding to the first time unit with index $n-K1_i$ on each of the plurality of carriers;

Manner 1-3: determining the quantity $M_{c-max}$ as the number of candidate downlink transmission opportunities in a second time unit corresponding to the first time unit with index $n-K1_i$ on a specific carrier among the plurality of carriers.

Optionally, in the Manner 1-2, if there are a plurality of second time units corresponding to the first time unit with index n-K1; on one carrier, then the candidate downlink transmission opportunities in the second time unit corresponding to the first time unit with index $n-K1_i$ on the one carrier are a union set of candidate downlink transmission opportunities in the plurality of second time units (specifically obtained by cascading the candidate downlink transmission opportunity sets corresponding respectively to the plurality of second time units together in the sequential order of the second time units);

in the Manner 1-3, if there are a plurality of second time units corresponding to the first time unit with index $n-K1_i$ on the specific carrier, then the candidate downlink transmission opportunities in the second time unit corresponding to the first time unit with index $n-K1_i$ on the specific carrier are a union set of candidate downlink transmission opportunities in the plurality of second time units.

Optionally, candidate downlink transmission opportunities in a second time unit on a carrier are determined based on all Start and Length Indicator Values (SLIVs) in a Time Domain Resource Assignment (TDRA) table or based on a valid SLIV in the TDRA table, and the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

Optionally, when the candidate downlink transmission opportunities in one second time unit on one carrier are determined based on the valid SLIV in the TDRA table, whether an SLIV is valid is determined in at least one of following ways:

when the TDRA table is the TDRA table shared by the plurality of carriers, for each of the plurality of carriers, it is judged in a second time unit whether an SLIV in the TDRA table includes an uplink symbol configured on the current carrier; in response to that the SLIV in the TDRA table does not include the uplink symbol configured on the current carrier, the SLIV is determined to be valid; in response to that the SLIV in the TDRA table includes the uplink symbol configured on the current carrier, the SLIV is determined to be invalid; or, when the SLIV includes an uplink symbol in the second time unit corresponding to each of the plurality of carriers, the SLIV is determined to be invalid, otherwise the SLIV is determined to be valid, that is, when the SLIV includes no uplink symbol in a second time unit corresponding to at least one of the plurality of carriers, the SLIV is determined to be valid;

when the TDRA table is the TDRA table configured for the DCI, a row in the TDRA table corresponds to an SLIV group with a plurality of SLIVs, and each SLIV in the SLIV group corresponds to each of the plurality of carriers, then: when each of the SLIVs includes an uplink symbol in a second time unit on a corresponding carrier, the SLIV group is determined to be invalid, otherwise the SLIV group is determined to be valid, that is, when an SLIV among the SLIVs includes no uplink symbol in a second time unit on at least one of corresponding carriers, the SLIV is determined to be valid;

when the TDRA table is the TDRA table corresponding to a respective one of the plurality of carriers, for each of the plurality of carriers, it is judged in a second time unit whether an SLIV in a TDRA table corresponding to the current carrier includes an uplink symbol configured on the current carrier; in response to that the SLIV in the TDRA table corresponding to the current carrier does not include the uplink symbol configured on the current carrier, the SLIV is determined to be valid; in response to that the SLIV in the TDRA table corresponding to the current carrier includes the uplink symbol configured on the current carrier, the SLIV is determined to be invalid;

here, if a downlink transmission with M time repetitions is configured for a carrier, M second time units for transmission repetitions need to be determined based on a second time unit corresponding to the first time unit on a carrier; when the SLIV includes no uplink symbol in at least one of the M second time units for transmission repetitions, the SLIV is determined to be valid, otherwise the SLIV is determined to be invalid, that is, when the SLIV includes an uplink symbol in each of the M second time units for transmission repetitions, the SLIV is determined to be invalid.

Optionally, when the number $M_c$ of candidate downlink transmission opportunities in a second time unit corresponding to the first time unit with index n-K1; on one of the plurality of carriers is less than $M_{c-max}$, the $M_c$ candidate downlink transmission opportunities on the carrier are determined to correspond to first $M_c$ candidate downlink transmission opportunities or last $M_c$ candidate downlink transmission opportunities among the $M_{c-max}$ candidate downlink transmission opportunities.

Optionally, determining the HARQ-ACK codebook according to the set of candidate downlink transmission opportunities corresponding to the plurality of carriers, includes:

determining the number of HARQ-ACK bits corresponding to the set of candidate downlink transmission opportunities corresponding to the plurality of carriers in the HARQ-ACK codebook; and one downlink transmission opportunity corresponds to an HARQ-ACK feedback of X bits, and X depends on configuration parameters of PDSCH, for example, whether it is single Transport Block (TB), multi-TB or Code Block Group (CBG) transmission, whether to use HARQ-ACK spatial bundling if multi-TB transmission, etc.;

mapping an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

Optionally, mapping an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers, includes:

when the DCI schedules the downlink transmission on the plurality of carriers, determining a mapping position of the HARQ-ACK of the downlink transmission in the HARQ-ACK codebook according to a specific carrier among the plurality of carriers; and/or

when the DCI schedules the downlink transmission on one of the plurality of carriers, determining a mapping position of the HARQ-ACK of the downlink transmission in the HARQ-ACK codebook according to the carrier on which the downlink transmission is performed.

Optionally, determining a mapping position of the HARQ-ACK of the downlink transmission in the HARQ-ACK codebook according to a specific carrier among the plurality of carriers, includes:

determining a candidate downlink transmission opportunity of the downlink transmission, among the $M_{c-max}$ candidate downlink transmission opportunities of the first time unit with index $n-K1_i$ corresponding to a second time unit where the downlink transmission is performed on the specific carrier, and mapping the HARQ-ACK of the downlink transmission to an HARQ-ACK position corresponding to the candidate downlink transmission opportunity of the downlink transmission in the HARQ-ACK codebook;

determining a mapping position of the HARQ-ACK of the downlink transmission in the HARQ-ACK codebook according to a carrier on which the downlink transmission is performed, includes:

determining a candidate downlink transmission opportunity of the downlink transmission, among the $M_{c-max}$ candidate downlink transmission opportunities of the first time unit with index $n-K1_i$ corresponding to a second time unit where the downlink transmission is performed on a carrier on which the downlink transmission is performed, and mapping the HARQ-ACK of the downlink transmission to an HARQ-ACK position corresponding to the candidate downlink transmission opportunity of the downlink transmission in the HARQ-ACK codebook.

Optionally, determining the HARQ-ACK codebook includes:

taking an HARQ-ACK codebook corresponding to a specific carrier among the plurality of carriers as the HARQ-ACK codebook corresponding to the plurality of carriers; or

taking candidate downlink transmission opportunities corresponding to a specific carrier among the plurality of carriers as candidate downlink transmission opportunities corresponding to the plurality of carriers, and generating the HARQ-ACK codebook based on the candidate downlink transmission opportunities corresponding to the plurality of carriers.

Optionally, an HARQ-ACK codebook corresponding to a specific carrier among the plurality of carriers is taken as the HARQ-ACK codebook corresponding to the plurality of carriers, or candidate downlink transmission opportunities corresponding to a specific carrier among the plurality of carriers are taken as candidate downlink transmission opportunities corresponding to the plurality of carriers, and the HARQ-ACK codebook is generated based on the candidate downlink transmission opportunities corresponding to the plurality of carriers, in response to satisfying one or any combinations of following conditions:

the plurality of carriers has a same TDRA table, the plurality of carriers has a same slot structure, the plurality of carriers has a same Sub-Carrier Space (SCS), SLIVs on the plurality of carriers except the specific carrier are included in a TDRA table of the specific carrier, or the DCI always schedules downlink transmission on one or more carriers including the specific carrier among the plurality of carriers.

Optionally, the specific carrier is a carrier with a smallest or largest index among the plurality of carriers, or a carrier with a smallest or largest SCS among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

Optionally, HARQ-ACKs of the downlink transmission scheduled by the DCI on the plurality of carriers and a downlink transmission scheduled by the DCI on one carrier are not transmitted in a same PUCCH or in a same first time unit.

Optionally, the first time unit includes: one of a predefined time period, subframe, slot, or subslot composed of A symbols, and A is a positive integer; and/or

the second time unit includes: one of a predefined time period, subframe, slot or subslot composed of B symbols, and B is a positive integer;

definitions of the first time unit and the second time unit are same or different.

Optionally, the HARQ-ACK codebook is generated in a semi-static manner; and/or the downlink transmission includes at least one of a PDSCH or a PDCCH indicating downlink Semi-Persistent Scheduling (SPS) resource release.

Correspondingly, on the base station side, an information communication method according to an embodiment of the application includes:

determining that an HARQ-ACK codebook is generated with a plurality of carriers as a group, when one DCI is used to schedule one downlink transmission on the plurality of carriers;

receiving the HARQ-ACK codebook.

Optionally, determining that the HARQ-ACK codebook is generated with the plurality of carriers as a group, includes:

when the HARQ-ACK codebook is transmitted in a first time unit with index n, determining each first time unit with index $n-K1_i$ according to each value $K1_i$ in a feedback timing K1 set, and determining a quantity $M_{c\text{-}max}$ of candidate downlink transmission opportunities of each first time unit with index $n-K1_i$;

cascading $M_{c\text{-}max}$ candidate downlink transmission opportunities of each first time unit with index $n-K1_i$ together according to a fixed order of corresponding $K1_i$ values within the feedback timing K1 set, to form a set of candidate downlink transmission opportunities corresponding to the plurality of carriers;

determining that the HARQ-ACK codebook is generated according to the set of candidate downlink transmission opportunities corresponding to the plurality of carriers.

Optionally, the quantity $M_{c\text{-}max}$ is determined in one of following manners:

Manner 1-1: determining the quantity $M_{c\text{-}max}$ as a maximum quantity of candidate downlink transmission opportunities in each second time unit for which an HARQ-ACK feedback is performed in the first time unit with index n on each of the plurality of carriers;

Manner 1-2: for each first time unit with index $n-K1_i$, determining the quantity $M_{c\text{-}max}$ as a maximum quantity of candidate downlink transmission opportunities in a second time unit corresponding to the first time unit with index $n-K1_i$ on each of the plurality of carriers;

Manner 1-3: determining the quantity $M_{c\text{-}max}$ as a quantity of candidate downlink transmission opportunities in a second time unit corresponding to the first time unit with index $n-K1_i$ on a specific carrier among the plurality of carriers.

Optionally, in the Manner 1-2, if there are a plurality of second time units corresponding to the first time unit with index $n-K1_i$ on one carrier, then the candidate downlink transmission opportunities in the second time unit corresponding to the first time unit with index $n-K1_i$ on the one carrier are a union set of candidate downlink transmission opportunities in the plurality of second time units;

in the Manner 1-3, if there are a plurality of second time units corresponding to the first time unit with index $n-K1_i$ on the specific carrier, then the candidate downlink transmission opportunities in the second time unit corresponding to the first time unit with index $n-K1_i$ on the specific carrier are a union set of candidate downlink transmission opportunities in the plurality of second time units.

Optionally, candidate downlink transmission opportunities in a second time unit on a carrier are determined based on all SLIVs in a TDRA table or based on a valid SLIV in the TDRA table, and the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

Optionally, when the candidate downlink transmission opportunities in one second time unit on one carrier are determined based on the valid SLIV in the TDRA table, whether an SLIV is valid is determined in at least one of following ways:

when the TDRA table is a TDRA table shared by the plurality of carriers, for each of the plurality of carriers, it is judged in a second time unit whether an SLIV in the TDRA table includes an uplink symbol configured on the current carrier; in response to that the SLIV in the TDRA table does not include the uplink symbol configured on the current carrier, the SLIV is determined to be valid; in response to that the SLIV in the TDRA table includes the uplink symbol configured on the current carrier, the SLIV is determined to be invalid; or, when the SLIV includes an uplink symbol in the second time unit corresponding to each of the plurality of carriers, the SLIV is determined to be invalid, otherwise the SLIV is determined to be valid;

when the TDRA table is a TDRA table configured for the DCI, a row in the TDRA table corresponds to an SLIV group with a plurality of SLIVs, and each SLIV in the SLIV group corresponds to each of the plurality of carriers, then: when each of the SLIVs includes an uplink symbol in a second time unit on a corresponding carrier, the SLIV group is determined to be invalid, otherwise the SLIV group is determined to be valid;

when the TDRA table is a TDRA table corresponding to a respective one of the plurality of carriers, for each of the plurality of carriers, it is judged in a second time unit whether an SLIV in a TDRA table corresponding to the current carrier includes an uplink symbol configured on the current carrier; in response to that the SLIV in the TDRA table corresponding to the current carrier does not include the uplink symbol configured on the current carrier, the SLIV is determined to be valid; in response to that the SLIV in the TDRA table corresponding to the current carrier includes the uplink symbol configured on the current carrier, the SLIV is determined to be invalid;

here, if a downlink transmission with M time repetitions is configured for a carrier, M second time units for transmission repetitions need to be determined based on a second time unit corresponding to the first time unit on one carrier; when the SLIV includes no uplink symbol in at least one of the M second time units for transmission repetitions, the SLIV is determined to be valid, otherwise the SLIV is determined to be invalid.

Optionally, when the quantity $M_c$ of candidate downlink transmission opportunities in a second time unit corresponding to the first time unit with index $n-K1_i$ on one of the plurality of carriers is less than $M_{c-max}$, the $M_c$ candidate downlink transmission opportunities on the carrier are determined to correspond to first $M_c$ candidate downlink transmission opportunities or last $M_c$ candidate downlink transmission opportunities among the $M_{c-max}$ candidate downlink transmission opportunities.

Optionally, determining that the HARQ-ACK codebook is generated according to the set of candidate downlink transmission opportunities corresponding to the plurality of carriers, includes:

determining the number of HARQ-ACK bits corresponding to the set of candidate downlink transmission opportunities corresponding to the plurality of carriers included in the HARQ-ACK codebook;

determining that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

Optionally, determining that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers, includes:

when the DCI schedules the downlink transmission on the plurality of carriers, determining a mapping position of the HARQ-ACK of the downlink transmission in the HARQ-ACK codebook according to a specific carrier among the plurality of carriers; and/or

when the DCI schedules the downlink transmission on one of the plurality of carriers, determining a mapping position of the HARQ-ACK of the downlink transmission in the HARQ-ACK codebook according to a carrier on which the downlink transmission is performed.

Optionally, determining a mapping position of the HARQ-ACK of the downlink transmission in the HARQ-ACK codebook according to a specific carrier among the plurality of carriers, includes:

determining a candidate downlink transmission opportunity of the downlink transmission, among the $M_{c\text{-max}}$ candidate downlink transmission opportunities of the first time unit with index $n\text{-}K1_i$ corresponding to a second time unit where the downlink transmission is performed on the specific carrier, and determining that the HARQ-ACK of the downlink transmission is mapped to an HARQ-ACK position corresponding to the candidate downlink transmission opportunity of the downlink transmission in the HARQ-ACK codebook;

determining a mapping position of the HARQ-ACK of the downlink transmission in the HARQ-ACK codebook according to a carrier on which the downlink transmission is performed, includes:

determining a candidate downlink transmission opportunity of the downlink transmission, among the $M_{c\text{-max}}$ candidate downlink transmission opportunities of the first time unit with index $n\text{-}K1_i$ corresponding to a second time unit where the downlink transmission is performed on a carrier on which the downlink transmission is performed, and determining that the HARQ-ACK of the downlink transmission is mapped to an HARQ-ACK position corresponding to the candidate downlink transmission opportunity of the downlink transmission in the HARQ-ACK codebook.

Optionally, determining that the HARQ-ACK codebook is generated with the plurality of carriers as a group, includes:

determining that the HARQ-ACK codebook corresponding to the plurality of carriers is an HARQ-ACK codebook corresponding to a specific carrier among the plurality of carriers; or

taking candidate downlink transmission opportunities corresponding to a specific carrier among the plurality of carriers as candidate downlink transmission opportunities corresponding to the plurality of carriers, and determining that the HARQ-ACK codebook is generated based on the candidate downlink transmission opportunities corresponding to the plurality of carriers.

Optionally, it is determined that the HARQ-ACK codebook corresponding to the plurality of carriers is an HARQ-ACK codebook corresponding to a specific carrier among the plurality of carriers, or, candidate downlink transmission opportunities corresponding to a specific carrier among the plurality of carriers are taken as candidate downlink transmission opportunities corresponding to the plurality of carriers, and it is determined that the HARQ-ACK codebook is generated based on the candidate downlink transmission opportunities corresponding to the plurality of carriers, in response to satisfying one or any combination of following conditions: the plurality of carriers has a same TDRA table, the plurality of carriers has a same slot structure, the plurality of carriers has a same SCS, SLIVs on the plurality of carriers except the specific carrier are included in a TDRA table of the specific carrier, or the DCI always schedules downlink transmission on one or more carriers including the specific carrier among the plurality of carriers.

Optionally, the specific carrier is a carrier with a smallest or largest index among the plurality of carriers, or a carrier with a smallest or largest SCS among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

Optionally, HARQ-ACKs of the downlink transmission scheduled by the DCI on the plurality of carriers and a downlink transmission scheduled by the DCI on one carrier are not received in a same PUCCH or in a same first time unit.

Optionally, the first time unit includes: one of a predefined time period, subframe, slot, or subslot composed of A symbols, and A is a positive integer; and/or

the second time unit includes: one of a predefined time period, subframe, slot or subslot composed of B symbols, and B is a positive integer;

definitions of the first time unit and the second time unit are same or different.

Optionally, the HARQ-ACK codebook is generated in a semi-static manner; and/or the downlink transmission includes at least one of a PDSCH or a PDCCH indicating downlink SPS resource release.

On the terminal side, an information communication apparatus according to an embodiment of the application includes:

a determining unit, configured to determine an HARQ-ACK codebook with a plurality of carriers as a group, when one DCI is used to schedule one downlink transmission on the plurality of carriers;

a sending unit, configured to send the HARQ-ACK codebook.

Optionally, the determining unit is specifically configured to:

when the HARQ-ACK codebook is transmitted in a first time unit with index n, determine each first time unit with index $n-K1_i$ according to each value $K1_i$ in a feedback timing K1 set, and determine a quantity $M_{c-max}$ of candidate downlink transmission opportunities of each first time unit with index $n-K1_i$;

cascade $M_{c-max}$ candidate downlink transmission opportunities of each first time unit with index $n-K1_i$ together according to a fixed order of corresponding $K1_i$ values within the feedback timing K1 set, to form a set of candidate downlink transmission opportunities corresponding to the plurality of carriers;

determine the HARQ-ACK codebook according to the set of candidate downlink transmission opportunities corresponding to the plurality of carriers.

Optionally, the quantity $M_{c-max}$ is determined in one of following manners:

Manner 1-1: determining the quantity $M_{c-max}$ as the maximum number of candidate downlink transmission opportunities in each second time unit for which an HARQ-ACK feedback is performed in the first time unit with index n on each of the plurality of carriers;

Manner 1-2: for each first time unit with index $n-K1_i$, determining the quantity $M_{c-max}$ as the maximum number of candidate downlink transmission opportunities in a second time unit corresponding to the first time unit with index $n-K1_i$ on each of the plurality of carriers;

Manner 1-3: determining the quantity $M_{c-max}$ as a quantity of candidate downlink transmission opportunities in a second time unit corresponding to the first time unit with index $n-K1_i$ on a specific carrier among the plurality of carriers.

Optionally, in the Manner 1-2, if there are a plurality of second time units corresponding to the first time unit with index n-K1; on one carrier, then the candidate downlink transmission opportunities in the second time unit corresponding to the first time unit with index $n-K1_i$ on the one carrier are a union set of candidate downlink transmission opportunities in the plurality of second time units;

in the Manner 1-3, if there are a plurality of second time units corresponding to the first time unit with index $n-K1_i$ on the specific carrier, then the candidate downlink transmission opportunities in the second time unit corresponding to the first time unit with index $n-K1_i$ on the specific carrier are a union set of candidate downlink transmission opportunities in the plurality of second time units.

Optionally, candidate downlink transmission opportunities in a second time unit on a carrier are determined based on all Start and Length Indicator Values, SLIVs, in a Time Domain Resource Assignment, TDRA, table or based on a valid SLIV in the TDRA table; here the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

Optionally, when the candidate downlink transmission opportunities in the second time unit on the carrier are determined based on the valid SLIV in the TDRA table, whether an SLIV is valid is determined in at least one of following ways:

when the TDRA table is a TDRA table shared by the plurality of carriers, for each of the plurality of carriers, it is judged in a second time unit whether an SLIV in the TDRA table comprises an uplink symbol configured on a current carrier; in response to that the SLIV in the TDRA table does not comprise the uplink symbol configured on the current carrier, the SLIV is determined to be valid; in response to that the SLIV in the TDRA table comprises the uplink symbol configured on the current carrier, the SLIV is determined to be invalid; or, when the SLIV includes an uplink symbol in the second time unit corresponding to each of the plurality of carriers, the SLIV is determined to be invalid, otherwise the SLIV is determined to be valid;

when the TDRA table is the TDRA table configured for the DCI, a row in the TDRA table corresponds to an SLIV group with a plurality of SLIVs, and each SLIV in the SLIV group corresponds to each of the plurality of carriers, then: when each of the SLIVs includes an uplink symbol in a second time unit on a corresponding carrier, the SLIV group is determined to be invalid, otherwise the SLIV group is determined to be valid;

when the TDRA table is a TDRA table corresponding to a respective one of the plurality of carriers, for each of the plurality of carriers, it is judged in a second time unit whether an SLIV in a TDRA table corresponding to the current carrier comprises an uplink symbol configured on the current carrier; in response to that the SLIV in the TDRA table corresponding to the current carrier does not comprise the uplink symbol configured on the current carrier, the SLIV is determined to be valid; in response to that the SLIV in the TDRA table corresponding to the current carrier comprises the uplink symbol configured on the current carrier, the SLIV is determined to be invalid;

here, if a downlink transmission with M time repetitions is configured for a carrier, M second time units for transmission repetitions is determined based on a second time unit corresponding to the first time unit on one carrier; when the SLIV includes no uplink symbol in at least one of the M second time units for transmission repetitions, the SLIV is determined to be valid, otherwise the SLIV is determined to be invalid.

Optionally, when the number $M_c$ of candidate downlink transmission opportunities in a second time unit corresponding to the first time unit with index $n-K1_i$ on one of the plurality of carriers is less than $M_{c-max}$, it is determined that $M_c$ candidate downlink transmission opportunities on the one carrier correspond to first $M_c$ candidate downlink transmission opportunities or last $M_c$ candidate downlink transmission opportunities among the $M_{c-max}$ candidate downlink transmission opportunities.

Optionally, the determining unit is specifically configured to:

determine a quantity of HARQ-ACK bits corresponding to the set of candidate downlink transmission opportunities corresponding to the plurality of carriers included in the HARQ-ACK codebook;

map an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

Optionally, the determining unit is specifically configured to:

determine a mapping position of the HARQ-ACK of the downlink transmission in the HARQ-ACK codebook according to a specific carrier among the plurality of carriers, when the DCI schedules the downlink transmission on the plurality of carriers; and/or

determine a mapping position of the HARQ-ACK of the downlink transmission in the HARQ-ACK codebook according to a carrier on which the downlink transmission is performed, when the DCI schedules the downlink transmission on one of the plurality of carriers.

Optionally, the determining unit is specifically configured to:

determine a candidate downlink transmission opportunity of the downlink transmission, among the $M_{c-max}$ candidate downlink transmission opportunities of the first time unit with index $n-K1_i$ corresponding to a second time unit where the downlink transmission is performed on the specific carrier, and map the HARQ-ACK of the downlink transmission to an HARQ-ACK position corresponding to the candidate downlink transmission opportunity of the downlink transmission in the HARQ-ACK codebook;

determine a candidate downlink transmission opportunity of the downlink transmission, among the $M_{c-max}$ candidate downlink transmission opportunities of the first time unit with index $n-K1_i$ corresponding to a second time unit where the downlink transmission is performed on a carrier on which the downlink transmission is performed, and map the HARQ-ACK of the downlink transmission to an HARQ-ACK position corresponding to the candidate downlink transmission opportunity of the downlink transmission in the HARQ-ACK codebook.

Optionally, the determining unit is specifically configured to:

take an HARQ-ACK codebook corresponding to a specific carrier among the plurality of carriers as the HARQ-ACK codebook corresponding to the plurality of carriers; or

take candidate downlink transmission opportunities corresponding to a specific carrier among the plurality of carriers as candidate downlink transmission opportunities corresponding to the plurality of carriers, and generate the HARQ-ACK codebook based on the candidate downlink transmission opportunities corresponding to the plurality of carriers.

Optionally, an HARQ-ACK codebook corresponding to a specific carrier among the plurality of carriers is taken as the HARQ-ACK codebook corresponding to the plurality of carriers, or, candidate downlink transmission opportunities corresponding to a specific carrier among the plurality of carriers are taken as candidate downlink transmission opportunities corresponding to the plurality of carriers, and the HARQ-ACK codebook is generated based on the candidate downlink transmission opportunities corresponding to the plurality of carriers, in response to satisfying one or any combination of following conditions:

the plurality of carriers has a same TDRA table, the plurality of carriers has a same slot structure, the plurality of carriers has a same SCS, SLIVs on the plurality of carriers except the specific carrier are included in a TDRA table of the specific carrier, or the DCI always schedules downlink transmission on one or more carriers including the specific carrier among the plurality of carriers.

Optionally, the specific carrier is a carrier with a smallest or largest index among the plurality of carriers, or a carrier with a smallest or largest SCS among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

Optionally, HARQ-ACKs for the downlink transmission scheduled by the DCI on the plurality of carriers and a downlink transmission scheduled by the DCI on one carrier are not transmitted in a same PUCCH or in a same first time unit.

Optionally, the first time unit includes: one of a predefined time period, subframe, slot, or subslot composed of A symbols, and A is a positive integer; and/or

the second time unit includes: one of a predefined time period, subframe, slot or subslot composed of B symbols, and B is a positive integer;
definitions of the first time unit and the second time unit are same or different.

Optionally, the HARQ-ACK codebook is generated in a semi-static manner; and/or the downlink transmission includes at least one of a PDSCH or a PDCCH indicating downlink SPS resource release.

On the base station side, an information communication apparatus provided by an embodiment of the application includes:

a determining unit, configured to determine that an HARQ-ACK codebook is generated with a plurality of carriers as a group, when one DCI is used to schedule one downlink transmission on the plurality of carriers;
a receiving unit, configured to receive the HARQ-ACK codebook.

Optionally, the determining unit is specifically configured to:

when the HARQ-ACK codebook is received in a first time unit with index n, determine each first time unit with index $n-K1_i$ according to each value $K1$ in a feedback timing K1 set, and determine a quantity $M_{c-max}$ of candidate downlink transmission opportunities of each first time unit with index $n-K1_i$;
cascade $M_{c-max}$ candidate downlink transmission opportunities of each first time unit with index $n-K1_i$ together according to a fixed order of corresponding $K1_i$ values within the feedback timing K1 set, to form a set of candidate downlink transmission opportunities corresponding to the plurality of carriers;
determine that the HARQ-ACK codebook is generated according to the set of candidate downlink transmission opportunities corresponding to the plurality of carriers.

Optionally, the quantity $M_{c-max}$ is determined in one of following manners:

Manner 1-1: determining the quantity $M_{c-max}$ as the maximum number of candidate downlink transmission opportunities in each second time unit for which an HARQ-ACK feedback is performed in the first time unit with index n on each of the plurality of carriers;
Manner 1-2: for each first time unit with index $n-K1_i$, determining the quantity $M_{c-max}$ as the maximum number of candidate downlink transmission opportunities in a second time unit corresponding to the first time unit with index $n-K1_i$ on each of the plurality of carriers;
Manner 1-3: determining the quantity $M_{c-max}$ as the number of candidate downlink transmission opportunities in a second time unit corresponding to the first time unit with index $n-K1_i$ on a specific carrier among the plurality of carriers.

Optionally, in the Manner 1-2, if there are a plurality of second time units corresponding to the first time unit with index n-K1; on one carrier, then the candidate downlink transmission opportunities in the second time unit corresponding to the first time unit with index $n-K1_i$ on the one carrier are a union set of candidate downlink transmission opportunities in the plurality of second time units;

in the Manner 1-3, if there are a plurality of second time units corresponding to the first time unit with index $n-K1_i$ on the specific carrier, then the candidate downlink transmission opportunities in the second time unit corresponding to the first time unit with index $n-K1_i$ on the specific carrier are a union set of candidate downlink transmission opportunities in the plurality of second time units.

Optionally, candidate downlink transmission opportunities in a second time unit on a carrier are determined based on all SLIVs in a TDRA table or based on a valid SLIV in the TDRA table, and the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

Optionally, when the candidate downlink transmission opportunities in one second time unit on the carrier are determined based on the valid SLIV in the TDRA table, whether an SLIV is valid is determined in at least one of following ways:

when the TDRA table is the TDRA table shared by the plurality of carriers, for each of the plurality of carriers, it is judged in a second time unit whether an SLIV in the TDRA table includes an uplink symbol configured on the current carrier; in response to that the SLIV in the TDRA table does not include the uplink symbol configured on the current carrier, the SLIV is determined to be valid; in response to that the SLIV in the TDRA table includes the uplink symbol configured on the current carrier, the SLIV is determined to be invalid; or, when the SLIV includes an uplink symbol in the second time unit corresponding to each of the plurality of carriers, the SLIV is determined to be invalid, otherwise the SLIV is determined to be valid;

when the TDRA table is the TDRA table configured for the DCI, a row in the TDRA table corresponds to an SLIV group with a plurality of SLIVs, and each SLIV in the SLIV group corresponds to each of the plurality of carriers, then: when each of the SLIVs includes an uplink symbol in a second time unit on a corresponding carrier, the SLIV group is determined to be invalid, otherwise the SLIV group is determined to be valid;

when the TDRA table is the TDRA table corresponding to a respective one of the plurality of carriers, for each of the plurality of carriers, it is judged in a second time unit whether an SLIV in a TDRA table corresponding to the current carrier includes an uplink symbol configured on the current carrier; in response to that the SLIV in the TDRA table corresponding to the current carrier does not comprise the uplink symbol configured on the current carrier, the SLIV is determined to be valid; in response to that the SLIV in the TDRA table corresponding to the current carrier comprises the uplink symbol configured on the current carrier, the SLIV is determined to be invalid;

and, if a downlink transmission with M time repetitions is configured for a carrier, M second time units for transmission repetitions need to be determined based on a second time unit corresponding to the first time unit on one carrier; when the SLIV includes no uplink symbol in at least one of the quantity M of second time units for transmission repetitions, the SLIV is determined to be valid, otherwise the SLIV is determined to be invalid.

Optionally, when the number $M_c$ of candidate downlink transmission opportunities in a second time unit corresponding to the first time unit with index n-K1; on one of the plurality of carriers is less than $M_{c\text{-max}}$, the $M_c$ candidate downlink transmission opportunities on the carrier are determined to correspond to first $M_c$ candidate downlink transmission opportunities or last $M_c$ candidate downlink transmission opportunities among the $M_{c\text{-max}}$ candidate downlink transmission opportunities.

Optionally, the determining unit is specifically configured to:

determine a quantity of HARQ-ACK bits corresponding to the set of candidate downlink transmission opportunities corresponding to the plurality of carriers included in the HARQ-ACK codebook;

determine that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

Optionally, the determining unit is specifically configured to:

determine a mapping position of the HARQ-ACK of the downlink transmission in the HARQ-ACK codebook according to a specific carrier among the plurality of carriers, when the DCI schedules the downlink transmission on the plurality of carriers; and/or

determine a mapping position of the HARQ-ACK of the downlink transmission in the HARQ-ACK codebook according to a carrier on which the downlink transmission is performed, when the DCI schedules the downlink transmission on one of the plurality of carriers.

Optionally, the determining unit is specifically configured to:

determine a candidate downlink transmission opportunity of the downlink transmission, among the $M_{c\text{-max}}$ candidate downlink transmission opportunities of the first time unit with index n-K1$_i$ corresponding to a second time unit where the downlink transmission is performed on the specific carrier, and determine that the HARQ-ACK of the downlink transmission is mapped to an HARQ-ACK position corresponding to the candidate downlink transmission opportunity of the downlink transmission in the HARQ-ACK codebook;

determine a candidate downlink transmission opportunity of the downlink transmission, among the $M_{c\text{-max}}$ candidate downlink transmission opportunities of the first time unit with index n-K1$_i$ corresponding to a second time unit where the downlink transmission is performed on a carrier on which the downlink transmission is performed, and determine that the HARQ-ACK of the downlink transmission is mapped to an HARQ-ACK position corresponding to the candidate downlink transmission opportunity of the downlink transmission in the HARQ-ACK codebook.

Optionally, the determining unit is specifically configured to:

determine that the HARQ-ACK codebook corresponding to the plurality of carriers is an HARQ-ACK codebook corresponding to a specific carrier among the plurality of carriers; or

take candidate downlink transmission opportunities corresponding to a specific carrier among the plurality of carriers as candidate downlink transmission opportunities corresponding to the plurality of carriers, and determine that the HARQ-ACK codebook is generated based on the candidate downlink transmission opportunities corresponding to the plurality of carriers.

Optionally, it is determined that the HARQ-ACK codebook corresponding to the plurality of carriers is an HARQ-ACK codebook corresponding to a specific carrier among the plurality of carriers, or, candidate downlink transmission opportunities corresponding to a specific carrier among the plurality of carriers are taken as a candidate downlink transmission opportunities corresponding to the plurality of carriers, and it is determined that the HARQ-ACK codebook is generated based on the candidate downlink transmission opportunities corresponding to the plurality of carriers, in response to satisfying one or any combination of following conditions:

the plurality of carriers has a same TDRA table, the plurality of carriers has a same slot structure, the plurality of carriers has a same SCS, SLIVs on the plurality of carriers except the specific carrier are included in a TDRA table of the specific carrier, or the DCI always schedules downlink transmission on one or more carriers including the specific carrier among the plurality of carriers.

Optionally, the specific carrier is a carrier with a smallest or largest index among the plurality of carriers, or a carrier with a smallest or largest SCS among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

Optionally, HARQ-ACKs for the downlink transmission scheduled by the DCI on the plurality of carriers and a downlink transmission scheduled by the DCI on one carrier are not received in a same PUCCH or in a same first time unit.

Optionally, the first time unit includes: one of a predefined time period, subframe, slot, or subslot composed of A symbols, and A is a positive integer; and/or

the second time unit includes: one of a predefined time period, subframe, slot or subslot composed of B symbols, and B is a positive integer;

definitions of the first time unit and the second time unit are same or different.

Optionally, the HARQ-ACK codebook is generated in a semi-static manner; and/or the downlink transmission includes at least one of a PDSCH or a PDCCH indicating downlink SPS resource release.

Another embodiment of the application provides an information communication apparatus, which includes a memory and a processor, and the memory is configured to store program instructions, and the processor is configured to invoke the program instructions stored in the memory and perform the following process in accordance with the obtained program:

determining an HARQ-ACK codebook with a plurality of carriers as a group, when one DCI is used to schedule one downlink transmission on the plurality of carriers;

sending the HARQ-ACK codebook.

Optionally, the processor is specifically configured to:

determine each first time unit with index $n-K1_i$ according to each value $K1$; in a feedback timing $K1$ set, and determine a quantity $M_{c\text{-}max}$ of candidate downlink transmission opportunities of each first time unit with index $n-K1_i$, when the HARQ-ACK codebook is transmitted in a first time unit $n$;

cascade $M_{c\text{-}max}$ candidate downlink transmission opportunities of each first time unit with index $n-K1_i$ together according to a fixed order of corresponding $K1_i$ values within the feedback timing $K1$ set, to form a set of candidate downlink transmission opportunities corresponding to the plurality of carriers;

determine the HARQ-ACK codebook according to the set of candidate downlink transmission opportunities corresponding to the plurality of carriers.

Optionally, the quantity $M_{c\text{-}max}$ is determined in one of following manners:

Manner 1-1: determining the quantity $M_{c\text{-}max}$ as the maximum quantity of candidate downlink transmission opportunities in each second time unit for which an HARQ-ACK feedback is performed in the first time unit with index $n$ on each of the plurality of carriers;

Manner 1-2: for each first time unit with index $n-K1_i$, determining the $M_{c\text{-}max}$ as the maximum quantity of candidate downlink transmission opportunities in a second time unit corresponding to the first time unit with index n-K1; on each of the plurality of carriers;

Manner 1-3: determining the quantity $M_{c\text{-}max}$ as the quantity of candidate downlink transmission opportunities in a second time unit corresponding to the first time unit with index n-K1; on a specific carrier among the plurality of carriers.

Optionally, in the Manner 1-2, if there are a plurality of second time units corresponding to the first time unit with index n-K1; on one carrier, then the candidate downlink transmission opportunities in the second time unit corresponding to the first time unit with index n-K1; on the one carrier are a union set of candidate downlink transmission opportunities in the plurality of second time units;

in the Manner 1-3, if there are a plurality of second time units corresponding to the first time unit with index $n\text{-}K1_i$ on the specific carrier, then the candidate downlink transmission opportunities in the second time unit corresponding to the first time unit with index $n\text{-}K1_i$ on the specific carrier are a union set of candidate downlink transmission opportunities in the plurality of second time units.

Optionally, candidate downlink transmission opportunities in a second time unit on a carrier are determined based on all SLIVs in a TDRA table or based on a valid SLIV in the TDRA table, and the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

Optionally, when the candidate downlink transmission opportunities in one second time unit on one carrier are determined based on the valid SLIV in the TDRA table, it is determined whether an SLIV is valid in at least one of following ways:

when the TDRA table is the TDRA table shared by the plurality of carriers, for each of the plurality of carriers, it is judged in a second time unit whether an SLIV in the TDRA table includes an uplink symbol configured on the current carrier; in response to that the SLIV in the TDRA table does not include the uplink symbol configured on the current carrier, the SLIV is determined to be valid; in response to that the SLIV in the TDRA table includes the uplink symbol configured on the current carrier, the SLIV is determined to be invalid; or, when the SLIV includes an uplink symbol in the second time unit corresponding to each of the plurality of carriers, the SLIV is determined to be invalid, otherwise the SLIV is determined to be valid;

when the TDRA table is a TDRA table configured for the DCI, a row in the TDRA table corresponds to an SLIV group with a plurality of SLIVs, and each SLIV in the SLIV group corresponds to each of the plurality of carriers, then: when each of the SLIVs includes an uplink symbol in a second time unit on a corresponding carrier, the SLIV group is determined to be invalid, otherwise the SLIV group is determined to be valid;

when the TDRA table is a TDRA table corresponding to a respective one of the plurality of carriers, for each of the plurality of carriers, it is judged in a second time unit whether an SLIV in a TDRA table corresponding to the current carrier includes an uplink symbol configured on the current carrier; in response to that the SLIV in the TDRA table corresponding to the current carrier does not include the uplink symbol configured on the current carrier, the SLIV is determined to be valid; in response to that the SLIV in the TDRA table corresponding to the current carrier includes the uplink symbol configured on the current carrier, the SLIV is determined to be invalid;

and, if a downlink transmission with M time repetitions is configured for a carrier, M second time units for transmission repetitions need to be determined based on a second time unit corresponding to the first time unit on one carrier; when the SLIV includes no uplink symbol in at least one of the M second time units for transmission repetitions, the SLIV is determined to be valid, otherwise the SLIV is determined to be invalid.

Optionally, when the number $M_c$ of candidate downlink transmission opportunities in a second time unit corresponding to the first time unit with index $n\text{-}K1_i$ on one of the plurality of carriers is less than $M_{c\text{-}max}$, it is determined that $M_c$ candidate downlink transmission opportunities on the one carrier correspond to first $M_c$ candidate downlink transmission opportunities or last $M_c$ candidate downlink transmission opportunities among the $M_{c\text{-}max}$ candidate downlink transmission opportunities.

Optionally, the processor is specifically configured to:

determine the quantity of HARQ-ACK bits corresponding to the set of candidate downlink transmission opportunities corresponding to the plurality of carriers included in the HARQ-ACK codebook;

map an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

Optionally, the processor is specifically configured to:

determine a mapping position of the HARQ-ACK of the downlink transmission in the HARQ-ACK codebook according to a specific carrier among the plurality of carriers, when the DCI schedules the downlink transmission on the plurality of carriers; and/or

determine a mapping position of the HARQ-ACK of the downlink transmission in the HARQ-ACK codebook according to a carrier on which the downlink transmission is performed, when the DCI schedules the downlink transmission on one of the plurality of carriers.

Optionally, the processor is specifically configured to:

determine a candidate downlink transmission opportunity of the downlink transmission, among the $M_{c\text{-}max}$ candidate downlink transmission opportunities of a first time unit with index $n-K1_i$ corresponding to a second time unit where the downlink transmission is performed on the specific carrier, and map the HARQ-ACK of the downlink transmission to an HARQ-ACK position corresponding to the candidate downlink transmission opportunity of the downlink transmission in the HARQ-ACK codebook;

determine a candidate downlink transmission opportunity of the downlink transmission, among the $M_{c\text{-}max}$ candidate downlink transmission opportunities of a first time unit with index $n-K1_i$ corresponding to a second time unit where the downlink transmission is performed on a carrier on which the downlink transmission is performed, and map the HARQ-ACK of the downlink transmission to an HARQ-ACK position corresponding to the candidate downlink transmission opportunity of the downlink transmission in the HARQ-ACK codebook.

Optionally, the processor is specifically configured to:

take an HARQ-ACK codebook corresponding to a specific carrier among the plurality of carriers as the HARQ-ACK codebook corresponding to the plurality of carriers; or

take candidate downlink transmission opportunities corresponding to a specific carrier among the plurality of carriers as candidate downlink transmission opportunities corresponding to the plurality of carriers, and generate the HARQ-ACK codebook based on the candidate downlink transmission opportunities corresponding to the plurality of carriers.

Optionally, an HARQ-ACK codebook corresponding to a specific carrier among the plurality of carriers is taken as the HARQ-ACK codebook corresponding to the plurality of carriers, or, candidate downlink transmission opportunities corresponding to a specific carrier among the plurality of carriers are taken as candidate downlink transmission opportunities corresponding to the plurality of carriers, and the HARQ-ACK codebook is generated based on the candidate downlink transmission opportunities corresponding to the plurality of carriers, in response to satisfying one or any combination of following conditions:

the plurality of carriers has a same TDRA table, the plurality of carriers has a same slot structure, the plurality of carriers has a same SCS, SLIVs on the plurality of carriers except the specific carrier are included in a TDRA table of the specific carrier, or the DCI always schedules downlink transmission on one or more carriers including the specific carrier among the plurality of carriers.

Optionally, the specific carrier is a carrier with a smallest or largest index among the plurality of carriers, or a carrier with a smallest or largest SCS among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

Optionally, HARQ-ACKs for the downlink transmission scheduled by the DCI on the plurality of carriers and a downlink transmission scheduled by the DCI on one carrier are not transmitted in a same PUCCH or in a same first time unit.

Optionally, the first time unit includes: one of a predefined time period, subframe, slot, or subslot composed of A symbols, and A is a positive integer; and/or

the second time unit includes: one of a predefined time period, subframe, slot or subslot composed of B symbols, and B is a positive integer;

definitions of the first time unit and the second time unit are same or different.

Optionally, the HARQ-ACK codebook is generated in a semi-static manner; and/or the downlink transmission includes at least one of a PDSCH or a PDCCH indicating downlink SPS resource release.

Another embodiment of the application provides an information communication apparatus, which includes a memory and a processor, and the memory is configured to store program instructions, and the processor is configured to invoke the program instructions stored in the memory and perform the following process in accordance with the obtained program:

determining that an HARQ-ACK codebook is generated with a plurality of carriers as a group, when one DCI is used to schedule one downlink transmission on the plurality of carriers;
receiving the HARQ-ACK codebook.

Optionally, the processor is specifically configured to:

when the HARQ-ACK codebook is received in a first time unit with index n, determine each first time unit with index $n-K1_i$ according to each value $K1_i$ in a feedback timing K1 set, and determine a quantity $M_{c-max}$ of candidate downlink transmission opportunities of each first time unit with index $n-K1_i$;
cascade $M_{c-max}$ candidate downlink transmission opportunities of each first time unit with index $n-K1_i$ together according to a fixed order of corresponding $K1_i$ values within the feedback timing K1 set, to form a set of candidate downlink transmission opportunities corresponding to the plurality of carriers;
determine that the HARQ-ACK codebook is generated according to the set of candidate downlink transmission opportunities corresponding to the plurality of carriers.

Optionally, the quantity $M_{c-max}$ is determined in one of following manners:

Manner 1-1: determining the quantity $M_{c-max}$ as the maximum quantity of candidate downlink transmission opportunities in each second time unit for which an HARQ-ACK feedback is performed in the first time unit with index n on each of the plurality of carriers;
Manner 1-2: for each first time unit with index $n-K1_i$, determining the quantity $M_{c-max}$ as the maximum number of candidate downlink transmission opportunities in a second time unit corresponding to the first time unit with index $n-K1_i$ on each of the plurality of carriers;
Manner 1-3: determining the quantity $M_{c-max}$ as the number of candidate downlink transmission opportunities in a second time unit corresponding to the first time unit with index n-K1; on a specific carrier among the plurality of carriers.

Optionally, in the Manner 1-2, if there are a plurality of second time units corresponding to the first time unit with index n-K1; on one carrier, then the candidate downlink transmission opportunities in the second time unit corresponding to the first time unit with index $n-K1_i$ on the one carrier are a union set of candidate downlink transmission opportunities in the plurality of second time units;
in the Manner 1-3, if there are a plurality of second time units corresponding to the first time unit with index $n-K1_i$ on the specific carrier, then the candidate downlink transmission opportunities in the second time unit corresponding to the first time unit with index $n-K1_i$ on the specific carrier are a union set of candidate downlink transmission opportunities in the plurality of second time units.

Optionally, candidate downlink transmission opportunities in one second time unit on one carrier are determined based on all SLIVs in a TDRA table or based on a valid SLIV in the TDRA table, and the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

Optionally, when the candidate downlink transmission opportunities in one second time unit on one carrier are determined based on the valid SLIV in the TDRA table, whether an SLIV is valid is determined in at least one of following ways:

when the TDRA table is a TDRA table shared by the plurality of carriers, for each of the plurality of carriers, it is judged in a second time unit whether an SLIV in the TDRA table includes an uplink symbol configured on the current carrier; in response to that the SLIV in the TDRA table does not include the uplink symbol configured on the current carrier, the SLIV is determined to be valid; in response to that the SLIV in the TDRA table includes the uplink symbol configured on the current carrier, the SLIV is determined to be invalid; or, when the SLIV includes an uplink symbol in the second time unit corresponding to each of the plurality of carriers, the SLIV is determined to be invalid, otherwise the SLIV is determined to be valid;
when the TDRA table is a TDRA table configured for the DCI, a row in the TDRA table corresponds to an SLIV group with a plurality of SLIVs, and each SLIV in the SLIV group corresponds to each of the plurality of carriers, then: when each of the SLIVs includes an uplink symbol in a second time unit on a corresponding carrier, the SLIV group is determined to be invalid, otherwise the SLIV group is determined to be valid;
when the TDRA table is a TDRA table corresponding to a respective one of the plurality of carriers, for each of the plurality of carriers, it is judged in a second time unit whether an SLIV in a TDRA table corresponding to the current carrier includes an uplink symbol configured on the current carrier; in response to that the SLIV in the TDRA table corresponding to the current carrier does not include the uplink symbol configured on the current carrier, the SLIV is determined to be valid; in response to that the SLIV in the TDRA table corresponding to the current carrier includes the uplink symbol configured on the current carrier, the SLIV is determined to be invalid;

and, if a downlink transmission with M time repetitions is configured for a carrier, M second time units for transmission repetitions need to be determined based on a second time unit corresponding to the first time unit on one carrier; when the SLIV includes no uplink symbol in at least one of the M second time units for transmission repetitions, the SLIV is determined to be valid, otherwise the SLIV is determined to be invalid.

Optionally, when the number $M_c$ of candidate downlink transmission opportunities in a second time unit corresponding to the first time unit with index n-K1; on one of the plurality of carriers is less than $M_{c-max}$, the $M_c$ candidate downlink transmission opportunities on the carrier are determined to correspond to first $M_c$ candidate downlink transmission opportunities or last $M_c$ candidate downlink transmission opportunities among the $M_{c-max}$ candidate downlink transmission opportunities.

Optionally, the processor is configured to:

determine the quantity of HARQ-ACK bits corresponding to the set of candidate downlink transmission opportunities corresponding to the plurality of carriers included in the HARQ-ACK codebook;

determine that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

Optionally, the processor is configured to:

determine a mapping position of the HARQ-ACK of the downlink transmission in the HARQ-ACK codebook according to a specific carrier among the plurality of carriers, when the DCI schedules the downlink transmission on the plurality of carriers; and/or

determine a mapping position of the HARQ-ACK of the downlink transmission in the HARQ-ACK codebook according to a carrier on which the downlink transmission is performed, when the DCI schedules the downlink transmission on one of the plurality of carriers.

Optionally, the processor is configured to:

determine a candidate downlink transmission opportunity of the downlink transmission, among the $M_{c-max}$ candidate downlink transmission opportunities of the first time unit with index n-K1$_i$ corresponding to a second time unit where the downlink transmission is performed on the specific carrier, and determine that the HARQ-ACK of the downlink transmission is mapped to an HARQ-ACK position corresponding to the candidate downlink transmission opportunity of the downlink transmission in the HARQ-ACK codebook;

determine a candidate downlink transmission opportunity of the downlink transmission, among $M_{c-max}$ candidate downlink transmission opportunities of the first time unit with index n-K1$_i$ corresponding to a second time unit where the downlink transmission is performed on a carrier on which the downlink transmission is performed, and determine that the HARQ-ACK of the downlink transmission is mapped to an HARQ-ACK position corresponding to the candidate downlink transmission opportunity of the downlink transmission in the HARQ-ACK codebook.

Optionally, the processor is configured to:

determine that the HARQ-ACK codebook corresponding to the plurality of carriers is an HARQ-ACK codebook corresponding to a specific carrier among the plurality of carriers; or

take candidate downlink transmission opportunities corresponding to a specific carrier among the plurality of carriers as candidate downlink transmission opportunities corresponding to the plurality of carriers, and determine that the HARQ-ACK codebook is generated based on the candidate downlink transmission opportunities corresponding to the plurality of carriers.

Optionally, it is determined that the HARQ-ACK codebook corresponding to the plurality of carriers is an HARQ-ACK codebook corresponding to a specific carrier among the plurality of carriers, or, candidate downlink transmission opportunities corresponding to a specific carrier among the plurality of carriers are taken as a candidate downlink transmission opportunities corresponding to the plurality of carriers, and it is determined that the HARQ-ACK codebook is generated based on the candidate downlink transmission opportunities corresponding to the plurality of carriers in response to satisfying one or any combination of following conditions:

the plurality of carriers has a same TDRA table, the plurality of carriers has a same slot structure, the plurality of carriers has a same SCS, SLIVs on the plurality of carriers except the specific carrier are included in a TDRA table of the specific carrier, or the DCI always schedules downlink transmission on one or more carriers including the specific carrier among the plurality of carriers.

Optionally, the specific carrier is a carrier with a smallest or largest index among the plurality of carriers, or a carrier with a smallest or largest SCS among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

Optionally, HARQ-ACKs for the downlink transmission scheduled by the DCI on the plurality of carriers and a downlink transmission scheduled by the DCI on one carrier are not received in a same PUCCH or in a same first time unit.

Optionally, the first time unit includes: one of a predefined time period, subframe, slot, or subslot composed of A symbols, and A is a positive integer; and/or

the second time unit includes: one of a predefined time period, subframe, slot or subslot composed of B symbols, and B is a positive integer;
definitions of the first time unit and the second time unit are same or different.

Optionally, the HARQ-ACK codebook is generated in a semi-static manner; and/or the downlink transmission includes at least one of a PDSCH or a PDCCH indicating downlink SPS resource release.

Another embodiment of the application provides a computer storage medium storing the computer executable instructions which are configured to cause the computer to perform any one of the above-mentioned methods.

**Brief Description of the Drawings**

In order to illustrate the technical solutions in the embodiments of the application more clearly, the accompanying figures which need to be used in describing the embodiments will be introduced below briefly. Obviously the accompanying figures described below are only some embodiments of the application, and other accompanying figures can also be obtained by those ordinary skilled in the art according to these accompanying figures without creative labor.

FIG. 1 is a schematic diagram showing the sending of 8-bit HARQ-ACK on the determined PUCCH resource in an uplink slot n by a terminal according to an embodiment of the application.
FIG. 2 is a schematic diagram showing the sending of 7-bit HARQ-ACK on the determined PUCCH resource in an uplink slot n by a terminal according to an embodiment of the application.
FIG. 3 is a schematic flowchart of an information communication method at the terminal side according to an embodiment of the application.
FIG. 4 is a schematic flowchart of an information communication method at the network side according to an embodiment of the application.
FIG. 5 is a structural schematic diagram of an information communication apparatus at the terminal side according to an embodiment of the application.
FIG. 6 is a structural schematic diagram of an information communication apparatus at the network side according to an embodiment of the application.
FIG. 7 is a structural schematic diagram of another information communication apparatus at the terminal side according to an embodiment of the application.
FIG. 8 is a structural schematic diagram of another information communication apparatus at the network side according to an embodiment of the application.

**Detailed Description**

The technical solutions in the embodiments of the application will be described clearly and completely below in combination with the accompanying drawings in the embodiments of the application. Obviously, the described embodiments are only a part of the embodiments of the application but not all the embodiments. Based upon the embodiments of the application, all of other embodiments obtained by those ordinary skilled in the art without creative work pertain to the protection scope of the application.

In order to increase the scheduling efficiency and save the DCI overhead, it may be necessary to consider the manner of using the one DCI to schedule a plurality of carriers in the New Radio (NR) Release 17 (Rel-17). One of the implementations is: the one DCI schedules one PDSCH over a plurality of carriers, that is, the data carried by one PDSCH is mapped to a set of physical resources corresponding to the plurality of carriers for transmission in terms of resource mapping without increasing the number of PDSCHs scheduled by the DCI in terms of data transmission, so that the one DCI schedules the simultaneous transmissions across the plurality of carriers. In this way, the generation method of the semi-static HARQ-ACK codebook in the prior art is no longer applicable. Therefore, the information communication methods and apparatuses provided in the embodiments of the application can be used to provide a technical solution of communicating the HARQ-ACK in the static HARQ-ACK codebook manner in this case.

Here, the method and apparatus are based on the same application concept. Since the principle of the method to solve the problem in is similar to that of apparatus, the implementations of the apparatus and method can refer to each other, and the repeated description thereof will be omitted.

The technical solutions provided by the embodiments of the application may be applicable to various systems, especially 5G systems. For example, the applicable systems may be: Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Universal Mobile Telecommunication System (UMTS), Worldwide interoperability for Microwave Access (WiMAX) system, 5G system and 5G NR system, etc. These systems all include terminal devices and network devices.

The terminal device involved in the embodiments of the application may be a device for providing the voice and/or data connectivity to the user, a handheld device with the wireless connection function, or other processing device connected to the wireless modem. In different systems, the terminal device may have different names. For example, in a 5G system, the terminal device may be referred to as User Equipment (UE). The wireless terminal device can communicate with one or more core networks via the Radio Access Network (RAN), and the wireless terminal device can be a mobile terminal, such as a mobile telephone (or called "cellular" telephone), and a computer with the mobile terminal, for example, can be a portable, pocket, handheld, computer built-in or vehicle-carried mobile device, and they exchange the voice and/or data with the radio access network. For example, Personal Communication Service (PCS) telephone, cordless telephone, Session Initiation Protocol (SIP) telephone, Wireless Local Loop (WLL) station, Personal Digital Assistant (PDA) and other devices. The wireless terminal device can also be called system, subscriber unit, subscriber station, mobile station, mobile, remote station, access point, remote terminal, access terminal, user terminal, user agent, user device, which is not limited in the embodiments of the application.

The network device involved in the embodiments of the application may be a base station, which may include a plurality of cells. Depending on specific application scenarios, the base station may also be called access point, or may refer to the device in the access network communicating with the wireless terminal via one or more sectors over the air interface or other names. The network device may be used to perform the inter-conversion between the received air frame and Internet Protocol (IP) packet, and used as the router between the wireless terminal device and the rest of the access network, and the rest of the access network may include IP networks. The network device may further coordinate the attribute management of the air interface. For example, the network device involved in the embodiments of the application can be a network device (Base Transceiver Station (BTS)) in the Global System of Mobile communication (GSM) or Code Division Multiple Access (CDMA), or can be a network device (NodeB) in the Wideband Code Division Multiple Access (WCDMA), or can be an evolutional network device (evolutional Node B (eNB or e-NodeB)) in the Long Term Evolution (LTE) system, a 5G base station in the 5G network architecture (next generation system), or can be a Home evolved Node B (HeNB), a relay node, femto, pico, etc., which is not limited in the embodiments of the application.

The embodiments of the application will be described below in detail with reference to the drawings of the specification. It should be noted that the showing order of the embodiments of the application only represents the sequential order of the embodiments, but does not represent the pros and cons of the technical solutions provided by the embodiments.

The flexible timing relationship is supported in the new wireless communication system (i.e., 5G NR (5 Generation New RAT)). For the Physical Downlink Shared CHannel (PDSCH), the Physical Downlink Control CHannel (PDCCH) carrying its scheduling information indicates the scheduling timing relationship (Scheduling timing, i.e., K0) between the PDSCH and the PDCCH, and the feedback timing relationship (HARQ-ACK timing, i.e., K1) between the PDSCH and its corresponding HARQ-ACK. Specifically, the Time Domain Resource Assignment (TDRA) indication field in the Downlink Control Information (DCI) format used by the PDCCH indicates the slot offset K0 between the slot where the PDSCH is located and the slot where the PDCCH (or DCI, because the DCI has the specific transmission format of the PDCCH, and they are considered equivalent in terms of describing the scheduling and feedback relationship) is located. The indication field of PDSCH-to-HARQ_feedback timing in the DCI format indicates the number K1 of slots between the ending of the PDSCH and the beginning of the HARQ-ACK, that is, the PDSCH communication is performed in slot n, while the HARQ-ACK communication is performed in slot n+K1.

Both semi-static and dynamic HARQ-ACK codebook generation methods are supported in the 5G NR system. The so-called HARQ-ACK codebook refers to an HARQ-ACK feedback sequence generated for the downlink transmission (including PDSCH and SPS PDSCH release) with the HARQ-ACK feedback at the same time domain position or on a same uplink channel.

For the semi-static codebook, a set $M_c$ of positions of downlink transmissions requiring HARQ-ACK feedback in a slot or sub-slot n on each carrier c (specifically, on the currently-activated Bandwidth Partial (BWP) on this carrier) can be determined according to the HARQ-ACK timing value in the K1 set, and then the HARQ-ACK codebook communicated in the slot or sub-slot n can be determined according to the set $M_c$.

In the technical solution provided by the embodiments of the application, when the one DCI supports to schedule transmission of one PDSCH on a plurality of carriers (from the function of the DCI, it may be allowed to schedule the transmission of one PDSCH on a plurality of carriers; for such DCI, when scheduling the PDSCH transmission, one implementation is that such DCI always schedules the transmission of one PDSCH over a plurality of carriers, and another implementation is to not limit the number of carriers over which the PDSCH actually scheduled by the DCI, for example, a certain scheduling of the DCI may be scheduling transmission of one PDSCH on one carrier, and another scheduling of the DCI may be scheduling PDSCH transmissions on a plurality of carriers). For the plurality of carriers that can be scheduled by the DCI, one HARQ-ACK codebook is determined with the plurality of carriers as a group, that is, the plurality of carriers that can be scheduled by the DCI are grouped into a group, and one HARQ-ACK codebook is uniformly generated, as shown in the following examples.

Manner 1: when the HARQ-ACK codebook is communicated in a first time unit with index n (that is, when HARQ-ACK transmission is configured to be performed in the first time unit with index n for the downlink transmission scheduled by the DCI, the HARQ-ACK codebook communicated in the first time unit with index n needs to be generated), each first time unit with index $n-K1_i$ is determined according to each value $K1_i$ in the feedback timing K1 set, and the number $M_{c-max}$ of candidate downlink transmission opportunities (or may also be called the number of HARQ-ACK positions, where one position corresponds to an HARQ-ACK of one downlink transmission, and one HARQ-ACK position may correspond to an HARQ-ACK of one or more bits, specifically depending on the number of HARQ-ACK bits corresponding to one downlink transmission) of each first time unit with index $n-K1_i$ is determined.

The $M_{c-max}$ candidate downlink transmission opportunities corresponding to respective first time units $n-K1_i$; corresponding to the first time unit with index n for communicating the HARQ-ACK is cascaded together according to a fixed order of corresponding K1 values, to form a set of candidate downlink transmission opportunities corresponding to the plurality of carriers, and the HARQ-ACK codebook communicated in the first time unit with index n includes the number of HARQ-ACK bits corresponding to the set of candidate downlink transmission opportunities.

The HARQ-ACK in the HARQ-ACK codebook is mapped to the corresponding position in the HARQ-ACK codebook according to the correspondence between the received downlink transmissions and the downlink transmission opportunity in the set of candidate downlink transmission opportunities.

Here, the quantity $M_{c-max}$ may be obtained, for example, in the following manners.

Manner 1-1: the quantity $M_{c-max}$ is the maximum quantity of candidate downlink transmission opportunities in each second time unit for which an HARQ-ACK feedback is performed in the first time unit with index n on each of the plurality of carriers.

The Manner 1-1 is applicable to any case, including the independent scheduling timing (that is, different K0 values) or common scheduling timing (that is, the same K0 value) for a plurality of carriers in the design of scheduling timing. The specific time unit scheduled on each carrier can be respectively obtained based on the same K0 value according to the predetermined rule.

Manner 1-2: for each first time unit with index $n-K1_i$, the quantity $M_{c-max}$ is the maximum quantity of candidate downlink transmission opportunities in a second time unit corresponding to the first time unit with index $n-K1_i$ on each of the plurality of carriers.

If there are a plurality of second time units corresponding to the first time unit with index $n-K1_i$ on a carrier, then the candidate downlink transmission opportunities in the second time unit corresponding to the first time unit with index $n-K1_i$ on the carrier are a union set of candidate downlink transmission opportunities in the plurality of second time units (specifically obtained by cascading the candidate downlink transmission opportunity sets corresponding respectively to the plurality of second time units together in the sequential order of the second time units).

The Manner 1-2 may be applicable to the common scheduling timing, that is, when the first time unit with index $n-K1_i$ is known, the second time unit on each carrier corresponding to the first time unit with index $n-K1_i$ may be obtained according to a predetermined scheduling timing rule. That is, the second time unit on each scheduled carrier with the first time unit with index $n-K1_i$ as a reference may be inferred according to the scheduling and feedback timing, that is, the second time unit corresponding to the first time unit with index $n-K1_i$ on each carrier is fixed and not variable. Of course, it is not excluded that the Manner 1-2 is applied to other scenarios.

For example, assuming that a plurality of carriers scheduled by the one DCI have the same Sub-Carrier Space (SCS) and K0 is the same, then the DCI schedules the transmission of PDSCH in the same slot determined according to the value of K0 over the plurality of carriers, and the feedback timing defines that the last PUCCH slot that overlaps with the slot where the PDSCH is located (that is, a slot determined according to the SCS of the PUCCH transmission, that is, a slot on the carrier that communicates the PUCCH) is taken as the reference slot with K1=0, to thereby find the slot where the HARQ-ACK transmission is located according to the value of K1. Then, according to an inverted process, when the HARQ-ACK is communicated in the slot n, the reference slot n-K1 with K1=0 can be obtained according to one K1 value, and then the slot on the scheduled carrier that overlaps with this slot is obtained to thereby know which slot on the scheduled carrier corresponds to the reference slot n-K1, so that $M_{c-max}$ can be determined according to the corresponding candidate downlink transmission opportunities in these determined slots.

The difference between this manner from the Manner 1-1 is that the Manner 1-1 is to take the maximum value of $M_c$ in all possible slots for which HARQ-ACK feedback is performed in slot n according to various combinations of K0 and K1 on a plurality of carriers. That is, it is assumed that the uplink and downlink carriers have the same SCS, K1={1,2}, and there may be slots n-2 and n-1 that needs HARQ-ACK feedback in slot n on each of the carrier 1 and carrier 2, where the numbers of downlink transmission opportunities in slots n-2 and n-1 on the carrier 1 may be 3 and 2, respectively; and the numbers of downlink transmission opportunities in slots n-2 and n-1 on the carrier 2 are 5 and 4, respectively. Then, in the Manner 1-1, $M_{c-max}$=max(3, 2, 5, 4)=5 is determined, that is, each of the first time units (i.e., slots with indexes n-1 and n-2) corresponding to the slot n (the slot for communicating HARQ-ACK) determined according to the value of K1 corresponds to $M_{c-max}$=5 candidate downlink transmission opportunities, so the set of candidate downlink transmission opportunities corresponding to a plurality of carriers includes 5+5=10 candidates downlink transmission opportunities. In the Manner 1-2, the reference slot n-1 is obtained according to K1=1, and the slots of the carrier 1 and carrier 2 corresponding to n-1 are assumed to be n-1, so $M_{c-max}$=max(2,4)=4 is determined for the reference slot n-1; the reference slot n-2 is obtained according to KI=2, and the slots of the carrier 1 and carrier 2 corresponding to n-2 are assumed to be n-2, so $M_{c-max}$=max(3,5)=5 is determined for the reference slot n-2. That is, the first time units (i.e., slots with indexes n-1 and n-2) corresponding to the slot n (the slot for communicating HARQ-ACK) determined according to the value of K1 correspond to $M_{c-max}$=4 and 5 candidate downlink transmission opportunities respectively, so the set of candidate downlink transmission opportunities corresponding to a plurality of carriers includes 4+5=9 candidates downlink transmission opportunities.

Manner 1-3: the quantity $M_{c-max}$ is the number of candidate downlink transmission opportunities in a second time unit corresponding to the first time unit with index $n-K1_i$ on a specific carrier among the plurality of carriers.

In the Manner 1-3, since the candidate downlink transmission opportunities are determined according to one of the carriers, if the DCI only schedules the transmission of PDSCH on one carrier and the transmission carrier is not the specific carrier, the situation that the candidate downlink transmission opportunities on the specific carrier cannot include the HARQ-ACK position corresponding to the PDSCH transmission on this one carrier may appear. In this case, schedule is required by the base station to ensure that the HARQ-ACK when the DCI only schedules the transmission of PDSCH on one carrier is not multiplexed with that when the DCI schedules the transmission of the PDSCH over a plurality of carriers, or the base station schedules in such a way that each of the PDSCH transmissions scheduled on other non-specific carriers corresponds to one candidate downlink transmission opportunity in $M_{c-max}$.

If there are a plurality of second time units corresponding to the first time unit with index $n-K1_i$ on the specific carrier, then the candidate downlink transmission opportunities in the second time unit corresponding to the first time unit with index n-K1; on this carrier are a union set of candidate downlink transmission opportunities in the plurality of second time units.

Here, one downlink transmission opportunity corresponds to an HARQ-ACK feedback of X bits, and X depends on configuration parameters of PDSCH, for example, whether it is single Transport Block (TB), multi-TB or Code Block Group (CBG) transmission, whether to use HARQ-ACK spatial bundling in case of multi-TB transmission, etc.

Here, the candidate downlink transmission opportunities in each second time unit are determined based on all Start and Length Indicator Values (SLIVs) in a Time Domain Resource Assignment (TDRA) table or based on an SLIV (that is, a valid SLIV) that does not conflict with a configured uplink symbol (specifically, which may be configured by high-level signaling) in the TDRA table; and the TDRA table is a TDRA table shared by the plurality of carriers or a TDRA table configured for the DCI or a TDRA table corresponding to a respective one of the plurality of carriers (that is, the TDRA tables of different carriers are configured independently, and not necessarily the same).

For example, in the Manner 1-1, the candidate downlink transmission opportunities contained in each second time unit are determined based on all SLIVs in the TDRA table, that is, whether the SLIV is valid (collides with the configured uplink symbol) is not judged, and no SLIV is removed. Of course, the validity judgment may also be performed. For the second time unit on each carrier, it may be firstly judged whether an SLIV in the TDRA table is valid, and the candidate downlink transmission opportunities are determined based on the valid SLIV In the Manner 1-2, for the second time unit on each carrier, it may be firstly judged whether an SLIV in the TDRA table is valid, and the candidate downlink transmission opportunities are determined based on the valid SLIV Of course, the validity judgment may also be not performed. For the second time unit on each carrier, the candidate downlink transmission opportunities are determined according to all SLIVs in the TDRA table. In the Manner 1-3, for the second time unit on a specific carrier, it may be firstly judged whether an SLIV in the TDRA table is valid, and the candidate downlink transmission opportunities are determined based on the valid SLIV Of course, the validity judgment may also be not made. For the second time unit on the specific carrier, the candidate downlink transmission opportunities are directly determined according to all SLIVs in the TDRA table.

For example, when judging whether an SLIV is valid:

in the case that the common TDRA table is used, for each of the plurality of carriers, it is judged in a second time unit whether an SLIV in the TDRA table includes an uplink symbol configured on this carrier (inclusion indicates collision); if the SLIV in the TDRA table does not include an uplink symbol configured on this carrier, the SLIV is determined to be valid; if the SLIV in the TDRA table includes an uplink symbol configured on this carrier, the SLIV is determined to be invalid; or, the SLIV is determined to be invalid only when the SLIV includes an uplink symbol in the second time unit on all the plurality of carriers, and the SLIV is considered to be valid in other cases (that is, when the SLIV includes no uplink symbol in a second time unit corresponding to at least one of the plurality of carriers, the SLIV is determined to be valid);

in the case that the TDRA table corresponding separately to each carrier is used, for each of the plurality of carriers, it is judged in a second time unit whether an SLIV in the TDRA table corresponding to this carrier includes an uplink symbol configured on this carrier (inclusion indicates collision); if SLIV in the TDRA table corresponding to this carrier does not include an uplink symbol configured on this carrier, the SLIV is determined to be valid;

in the case that the TDRA table configured for the DCI is used, when at least one row of SLIVs included in the TDRA table correspond to an SLIV group in which each SLIV corresponds to each of the plurality of carriers, then: when each of the SLIVs includes an uplink symbol in the second time unit in a corresponding carrier, the SLIV group is determined to be invalid, otherwise the SLIV group is determined to be valid (that is, when an SLIV among the SLIVs includes no uplink symbol in a second time unit on at least one of corresponding carriers, the SLIV is determined to be valid).

Here, in the above-mentioned manner, if the PDSCH transmission with M time repetitions is configured for the current carrier, M second time units for transmission repetitions is determined based on a second time unit corresponding to the first time unit with index $n-K1_i$ (for example, the second time unit is a time unit with index m, and then the time units with indexes m-1, m-2, ..., m-M+1 are further determined, and these M time units as a set of time units for transmission repetitions). When an SLIV includes no uplink symbol in at least one of the M second time units for transmission repetitions, the SLIV is determined to be valid, otherwise the SLIV is determined to be invalid (that is, when the SLIV includes an uplink symbol in each of the M second time units for transmission repetitions, the SLIV is determined to be invalid).

When the number $M_c$ of candidate downlink transmission opportunities in a second time unit corresponding to the first time unit with index $n-K1_i$ on one of the plurality of carriers is less than $M_{c-max}$, it is determined that $M_c$ candidate downlink transmission opportunities on the carrier correspond to first $M_c$ candidate downlink transmission opportunities or last $M_c$ candidate downlink transmission opportunities among the $M_{c-max}$ candidate downlink transmission opportunities; and there is a one-to-one correspondence when $M_c$ is equal to $M_{c-max}$).

When the DCI schedules PDSCH transmission over a plurality of carriers, a mapping position of the HARQ-ACK of the PDSCH in the HARQ-ACK codebook is determined according to a specific carrier for the PDSCH transmission among the plurality of carriers specifically as following.

A candidate downlink transmission opportunity of the PDSCH is determined, among $M_{c-max}$ candidate downlink transmission opportunities of the first time unit with index $n-K1_i$ corresponding to a second time unit where the downlink transmission is performed on the specific carrier (that is, according to the definition of feedback timing, the second time unit on this carrier is determined in reference to the first time unit with index n-KI;, that is, the first time unit with index $n-K1_i$ is the time unit corresponding to K1=0), and the HARQ-ACK of the PDSCH is mapped to an HARQ-ACK position corresponding to the corresponding candidate downlink transmission opportunity in the HARQ-ACK codebook.

When the DCI schedules the PDSCH transmission on one of the plurality of carriers, a mapping position of the HARQ-ACK of the PDSCH in the HARQ-ACK codebook is determined according to the carrier where the PDSCH transmission is performed specifically as following.

A downlink transmission opportunity of the PDSCH is determined, among $M_{c-max}$ candidate downlink transmission opportunities of the first time unit with index $n-K1_i$ corresponding to a second time unit where the downlink transmission is performed on the carrier where the PDSCH transmission is performed (that is, according to the definition of feedback timing, the second time unit on this carrier is determined in reference to the first time unit with index $n-K1_i$, that is, the first time unit with index $n-K1_i$ is the time unit corresponding to K1=0), and the HARQ-ACK of the PDSCH is mapped to an HARQ-ACK position corresponding to the corresponding candidate downlink transmission opportunity in the HARQ-ACK codebook.

Manner 2: an HARQ-ACK codebook corresponding to a specific carrier among the plurality of carriers is taken as the HARQ-ACK codebook corresponding to the plurality of carriers; or candidate downlink transmission opportunities corresponding to a specific carrier among the plurality of carriers is taken as candidate downlink transmission opportunities corresponding to the plurality of carriers, and the HARQ-ACK codebook corresponding to the plurality of carriers is generated based on the candidate downlink transmission opportunities. For the specific process of determining the HARQ-ACK codebook or candidate downlink transmission opportunity for each carrier, please reference to the prior art and detail will not be described here.

In the Manner 2, it is necessary to be specific to a particular scenario; otherwise, the situation may occur that the HARQ-ACK determined according to the specific carrier cannot be included in the HARQ-ACK feedback position of the PDSCH transmission scheduled on another non-specific carrier; for example, the Manner 2 is used when at least one of the following conditions is met (one or more of the conditions may be met according to the predefined rule):

the TDRA tables on the plurality of carriers are the same;
the slot structures (that is, which slots are uplink slots, which slots are downlink slots, which symbols are uplink or downlink symbols in one slot, and the slots or symbols that are not specified as uplink or downlink slots or symbols are flexible) on the plurality of carriers are the same;
the plurality of carriers have the same SCS;
the SLIVs on the plurality of carriers except the specific carrier are included in the TDRA table for the specific carrier;
the DCI always schedules the PDSCH transmission on one or more carriers including the specific carrier among the plurality of carriers.

Of course, it is also possible to use the Manner 2 without restriction that the above conditions must be met. In this case, the scheduling of the base station can avoid the situation that the HARQ-ACK determined according to the specific carrier cannot be included in the HARQ-ACK feedback position of the PDSCH scheduled for transmission on another non-specific carrier, or when this situation occurs, it is considered that the scheduled PDSCH has no HARQ-ACK feedback.

In the above manner, the specific carrier may be a carrier with the smallest or largest index among the plurality of carriers, or a carrier with the smallest or largest SCS among the plurality of carriers (if the plurality of carriers have the same SCS, this carrier may be any carrier or a carrier with the smallest or largest index among the carriers with the same SCS), or a carrier pre-indicated by high-layer signaling, or a carrier used as the scheduling timing reference when the DCI schedules the plurality of carriers (that is, when the DCI schedules the PDSCH transmission over the plurality of carriers, the scheduling timing in which slot the PDSCH is communicated on each carrier is obtained with this carrier as the reference, that is, K0 is obtained with this carrier as the reference), or a carrier used as the HARQ-ACK feedback timing reference when the DCI schedules the plurality of carriers, that is, when the DCI schedules the PDSCH transmission over the plurality of carriers, the feedback timing in which slot or sub-slot the HARQ-ACK for the PDSCH is fed back is obtained with this specific carrier as the reference, that is, one slot on the carrier communicating the PUCCH is found as the reference point of K1=0 according to the end position of the PDSCH on this specific carrier.

Optionally, HARQ-ACKs for the PDSCH transmission scheduled by the DCI on a plurality of carriers and the PDSCH transmission scheduled by the DCI on one carrier are not communicated in a same PUCCH.

Optionally, the first time unit may include: a predefined time period or subframe or slot or subslot or the like composed of A symbols, and A is a positive integer.

Optionally, the second time unit may include: a predefined time period or subframe or slot or subslot or the like composed of B symbols, and B is a positive integer.

Optionally, the definitions of the first time unit and the second time unit may be the same or different. For example, both the first time unit and the second time unit are slots, or the first time unit is a sub-slot and the second time unit is a slot.

Optionally, when the semi-static HARQ-ACK codebook is configured for use, the HARQ-ACK codebook for the plurality of carriers is determined in one of the above manners.

The terminal determines the HARQ-ACK codebook in the above manner and sends it to the base station; and the base station determines that the HARQ-ACK codebook is generated with the plurality of carriers as a group in the above manner, receives the HARQ-ACK codebook, and decodes the HARQ-ACK of the PDSCH correspondingly received on the plurality of carriers in the HARQ-ACK codebook according to an inverted process of the process in which the terminal generates the HARQ-ACK codebook.

The above-mentioned case in which the DCI schedules transmission of one PDSCH on one or more carriers may also be replaced by the case in which the DCI indicating the SPS resource release is communicated on one or more carriers, and the same applies.

Several specific embodiments are given below for illustration.

Embodiment 1 (Manner 1): assuming that both the first time unit and the second time unit are slots, assuming that the DCI can schedule transmission of one PDSCH on carrier 1 and carrier 2 and the two carriers have the same SCS, and assuming the K1 set = {1,2}, then:

Manner A: the judgement on whether the SLIV is valid is not made, because each slot over the same carrier corresponds to the same number of candidate downlink transmission opportunities without considering the effect of the event whether the uplink and downlink divisions in different slots (that is, one slot may contain A1 uplink symbols, one slot may contain A2 uplink symbols, and the positions of the uplink symbols may also be different) are the same on the event whether the SLIV in the TDRA is valid in different slots. The terminal only needs to obtain the candidate downlink transmission opportunities corresponding to one slot on each carrier according to the SLIV in the TDRA table corresponding to the carrier in the SLIV grouping manner in the prior art, thereby obtaining $M_{c-max}$. Assuming that 4 candidate downlink transmission opportunities are determined according to an SLIV set in the corresponding TDRA table in each slot on the carrier 1, and 3 candidate downlink transmission opportunities are determined according to an SLIV set in the corresponding TDRA table in each slot on the carrier 2, then it is determined that $M_{c-max}=4$. When the HARQ-ACK codebook is communicated in the uplink slot n, the uplink slot n-1 and the uplink slot n-2 corresponding to the uplink slot n may be determined respectively according to each value in the K1 set. Since the uplink and downlink SCSs are the same, it is assumed that the definition of feedback timing of each carrier is to take the last uplink slot overlapping with the downlink transmission in a downlink slot as the reference point of K1=0, then all downlink slots overlap with an uplink slot in time under this definition of feedback timing (assuming there is no deviation of slot numbers between carriers) can be considered. Alternatively, the index of the corresponding downlink slot may be obtained in the way of

$$\left\lfloor \left(n_{\mathrm{U}} - K_{1,k}\right) \cdot 2^{\mu_{\mathrm{DL}} - \mu_{\mathrm{UL}}} \right\rfloor + n_{\mathrm{D}}$$

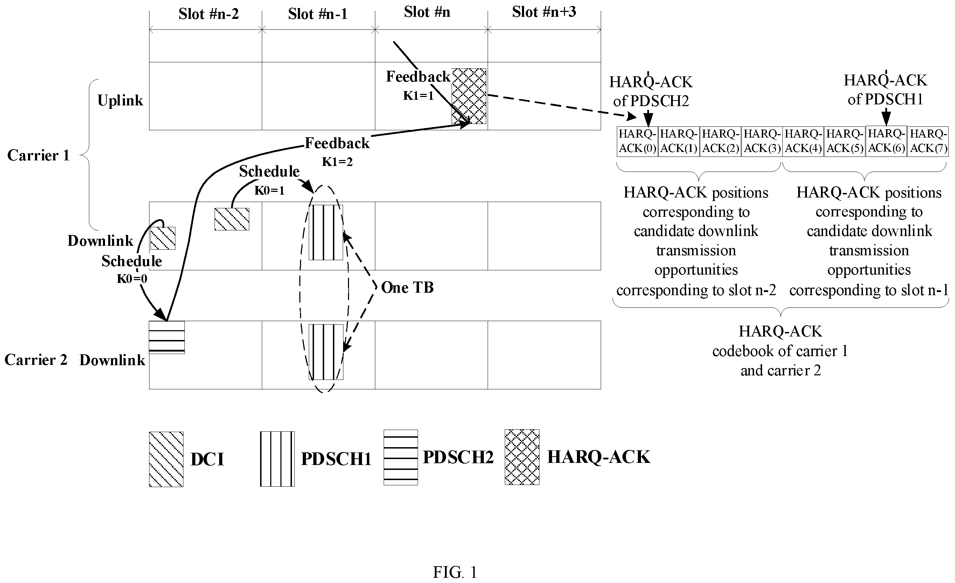

($n_u$ is the uplink slot n, $K_{1,k}$ is a value in the K1 set, $n_{\mathrm{D}}$ is a non-negative integer of $n_{\mathrm{D}}$ < $\max(2^{\mu_{\mathrm{DL}} - \mu_{\mathrm{UL}}}, 1)$, $\mu_{\mathrm{DL}}$ is the index corresponding to the SCS of the downlink transmission, and $\mu_{\mathrm{UL}}$ is the index corresponding to the SCS of the uplink transmission). Based on the above manner, it can be seen that the downlink slot (that is, the slot for PDSCH transmission) corresponding to the uplink slot n-1 is slot n-1 on both the carrier 1 and carrier 2, and the downlink slot (that is, the slot for PDSCH transmission) corresponding to the uplink slot n-2 is slot n-2 on both the carrier 1 and carrier 2, then the HARQ-ACK codebook in the uplink slot n is a codebook including the candidate downlink transmission opportunities corresponding to the slot n-1 and slot n-2 on the carrier 1 and carrier 2. That is, assuming that the HARQ-ACK bit corresponding to each candidate downlink transmission opportunity is 1 (of course, in other embodiments, it may corresponds to X bits, where X is related to the configuration of downlink transmission, such as 2-TB transmission and no spatial bundling; 2 bits is possible and 4 CBGs are configured, 4 bits is possible, etc.), then the HARQ-ACK codebook corresponding to the carrier 1 and carrier 2 in the uplink slot n contains the 8-bit information, and the first 4 bits correspond to 4 candidate downlink transmission opportunities corresponding to the slot n-2, and the last 4 bits correspond to 4 candidate downlink transmission opportunities corresponding to the slot n-1. If there is transmission of PDSCH scheduled on the carrier 1 and carrier 2 in the downlink slot n-1, it is assumed that its SLIV corresponds to the third one of the candidate downlink transmission opportunities in the slot where its transmission is performed, that is, corresponds to the third candidate downlink transmission opportunity among $M_{c-max}=4$ candidate downlink transmission opportunities corresponding to the uplink slot n-1 (the uplink slot corresponding to this downlink slot n-1), then the HARQ-ACK of the PDSCH is mapped to the third bit position in the 4-bit HARQ-ACK corresponding to the uplink slot n-1 (that is, the seventh bit position in the 8-bit HARQ-ACK codebook). If there is transmission of PDSCH scheduled only on the carrier 2 in the downlink slot n-2, it is assumed that its SLIV corresponds to the first one of the candidate downlink transmission opportunities in the slot n-2 of the carrier 2 (assuming that 3 candidate downlink transmission opportunities in the slot n-2 on the carrier 2 correspond to the first three of $M_{c-max}=4$ candidate downlink transmission opportunities corresponding to the uplink slot n-2, then the downlink transmission opportunity corresponding to this PDSCH corresponds to the first one of $M_{c-max}=4$ candidate downlink transmission opportunities corresponding to the uplink slot n-2), then the HARQ-ACK of the PDSCH is mapped to the first bit position in the 4-bit HARQ-ACK corresponding to the uplink slot n-2 (that is, the first bit position in the 8-bit HARQ-ACK codebook). The terminal sends the 8-bit HARQ-ACK on the determined PUCCH resource in the uplink slot n, as shown in FIG. 1; and in the same way as above, the base station may determine that the terminal has sent the 8-bit HARQ-ACK codebook in the uplink slot n, receive the 8-bit HARQ-ACK codebook on the corresponding resource, and obtain the HARQ-ACK of the scheduled PDSCH from the 8-bit HARQ-ACK codebook in the same way as above.

Here, the manner to determine the candidate downlink transmission opportunities according to the TDRA table can adopt that in the prior art. For example, for a terminal that only supports receiving one unicast PDSCH in one slot, it is directly determined that each slot of each carrier corresponds to one candidate downlink transmission opportunity, that is, $M_{c-max}=1$; for a terminal that supports receiving more than one unicast PDSCH in one slot, all SLIVs in the TDRA table corresponding to each carrier are grouped according to the SLIV grouping method in the prior art to obtain a plurality of SLIV groups, and each SLIV group corresponds to one candidate downlink transmission opportunity, thereby obtaining the candidate downlink transmission opportunities in each slot on each carrier.

Here, there may be HARQ-ACKs corresponding to other PDSCHs in the 8-bit HARQ-ACK codebook, and the process of mapping the HARQ-ACKs of these PDSCHs to the 8-bit HARQ-ACK codebook is similar to the above, which will not be described here. The PDSCHs corresponding to the 8-bit HARQ-ACK codebook may be all scheduled for transmission on a plurality of carriers, or may be partially scheduled for transmission on a plurality of carriers and partially scheduled on one carrier.

Here, the TDRA tables corresponding to carriers may be the same or different, specifically depending on the configuration and usage mode of the TDRA tables. Any configuration mode can be processed in the manner provided in the embodiments of the application. If a TDRA table is shared by the carrier 1 and carrier 2, for example, if a TDRA table is configured for the DCI scheduling over carrier 1 and carrier 2 and it is specified that this TDRA table is applicable to the carrier 1 and carrier 2, or if the high-level signaling directly configures a TDRA table for the carrier 1 and carrier 2 simultaneously scheduled by one DCI, for the determination of time domain resources for these two carriers. Of course, other configuration modes are also possible, as long as the final result is the same TDRA table for both carriers. In the above Manner A, it is only necessary to obtain a candidate downlink transmission opportunity set corresponding to a slot according to the SLIVs in this TDRA table based on the SLIV grouping method in the prior art. This is the same for the carrier 1 and carrier 2, and there is no need to process the carrier 1 and carrier 2 respectively, so that the number of transmission opportunities in this candidate downlink transmission opportunity set can be regarded as $M_{c\text{-max}}$. If the TDRA table is independent for the carrier 1 and carrier 2, for example, one TDRA table is configured by the high-level signaling for each of the carrier 1 and carrier 2, where the combinations of the SLIV set contained in each TDRA table and K0 are not exactly the same, or one TDRA table is configured for the DCI or for both carriers, where each row in the table contains a combination of two SLIVs, and each SLIV corresponds to one carrier, as shown in Table 1 below. That is, the TDRA indication field in the DCI indicates an index, and the SLIV and K0 corresponding to each of the carrier 1 and carrier 2 may be obtained according to the table (of course, K0 may be the same or different for the two carriers; if the same, a common K0 column may also be reserved for the carrier 1 and carrier 2 in the Table 1). Of course, there may be other configuration modes to realize the independent TDRA table configuration of two carriers. Since the SLIV sets contained in the TDRA tables of two carriers may be different, it is necessary to determine a candidate downlink transmission opportunity set corresponding to each carrier for the two TDRA tables, and the obtained numbers of candidate downlink transmission opportunities in one slot on the carrier 1 and carrier 2 may be different. In this case, the maximum value is taken as $M_{c\text{-max}}$. However, for the carrier with the number of actually corresponding candidate downlink transmission opportunities being less than $M_{c\text{-max}}$, it can be specified that this carrier corresponds to the first or last few of $M_{c\text{-max}}$ downlink transmission opportunities. Thus, for the PDSCH transmission on the carrier with the number of corresponding candidate downlink transmission opportunities being less than $M_{c\text{-max}}$, the position in the HARQ-ACK codebook to which the HARQ-ACK of the PDSCH is mapped is determined according to the correspondence between the downlink transmission opportunity of the PDSCH on this carrier and an opportunity among the $M_{c\text{-max}}$ downlink transmission opportunities.

Here, in the above embodiment, since the SCSs of the uplink transmission and the downlink transmission are the same and there is no slot offset between different carriers (that is, the slot indexes are not aligned, for example, the slot n on the carrier 1 corresponds to the slot n-p on the carrier 2, where p is the number of offset slots), the uplink slots and downlink slots are in a one-to-one correspondence, and have the same indexes. When the SCSs of the uplink transmission and the downlink transmission are different, there may be a situation that one uplink slot corresponds to multiple downlink slots. For example, it is assumed that the SCS of the carrier 1 is 15 kHz and the SCS of the carrier 2 is 30 kHz. According to the same assumption as above, an uplink slot n-1 on the carrier 1 corresponds to the slots 2n-2 and 2n-1 on the carrier 2. Then, the sum of the numbers of candidate downlink transmission opportunities corresponding to these two slots is taken as the candidate downlink transmission opportunities of the second time unit corresponding to the slot n-1 on the carrier 2, and compared with the candidate downlink transmission opportunities of the second time unit corresponding to the slot n-1 on the carrier 1, and the maximum value in the carrier 1 and carrier 2 is taken as $M_{c\text{-max}}$. Moreover, under other feedback timing definitions, no matter the SCSs are the same or different, other situations such as different numbers of downlink slots corresponding to the same uplink slot on the carrier 1 and carrier 2 may also occur. As long as the terminal and the base station can uniquely determine the correspondence between downlink slots on the carrier 1 and carrier 2 (that is, which slot on the carrier 1 and which slot on the carrier 2 are used to simultaneously communicate a PDSCH can be known, that is, these two slots correspond to the uplink slot n-1 or n-2 on the carrier 1 and carrier 2 respectively), the numbers of candidate downlink transmission opportunities in the slots on the corresponding carrier 1 and carrier 2 may be determined in the above Manners 1-2 and 1-3, to thereby take the maximum value as the number of downlink transmission opportunities corresponding to the uplink slot. In the Manner 1-1, $M_{c\text{-max}}$ covers the possible candidate downlink transmission opportunities of all slots on all carriers, so there is no limitation on whether there is a correlation between downlink slots corresponding to the same uplink slot n-1 or n-2 on the two carriers. For example, if the DCI separately indicates the transmission slot (K0) and feedback slot (K1) of the PDSCH on each carrier, the HARQ-ACK feedback may also be performed in the slot n when one PDSCH is communicated in any two slots on the carrier 1 and carrier 2. In this case, since it is not known which two slots on the carrier 1 and carrier 2 correspond to an uplink slot n-1, it is necessary to determine the candidate downlink transmission opportunities corresponding to the uplink slots with indexes n-1 and n-2 according to the maximum value of candidate downlink transmission opportunities contained in all slots and reserve the corresponding HARQ-ACK feedback position.

Table 1: TDRA table

| | Carrier 1 | | | Carrier 2 | |
|---|---|---|---|---|---|
| Index | SLIV (start symbol, symbol length) | K0 | SLIV (start symbol, symbol length) | K0 |
| 0 | 1,7 | 1 | 2,6 | 1 |
| 1 | 2,9 | 1 | 3,8 | 1 |
| 2 | 10,2 | 2 | 5,5 | 2 |
| ... | ... | ... | ... | ... |

Manner B: it is judged whether an SLIV is valid, regardless of whether each carrier corresponds to the same TDRA table. Since the slot structures (which symbols in a slot are configured as downlink symbols and which symbols are configured as uplink symbols) on different carriers are different, and the slot structures of different slots on the same carrier may also be different, there is a need to judge whether an SLIV is valid for each slot on each carrier, so as to obtain the candidate downlink transmission opportunities corresponding to this slot based on the valid SLIV in the current slot. The numbers of candidate downlink transmission opportunities obtained from different carriers or different slots of the same carrier may be different. The advantage of judging whether the SLIV is valid is that the redundancy in the HARQ-ACK codebook can be reduced to a certain extent on the basis of ensuring the stability of the HARQ-ACK codebook, that is, the HARQ-ACK position is reserved only for the subsequent downlink transmission opportunity corresponding to the SLIV for which the downlink transmission may actually occur.

Specifically, in the same manner as the above Manner A, it can be obtained that the slot corresponding to the uplink slot n-1 on the carrier 1 and carrier 2 is n-1, and the slot corresponding to the uplink slot n-2 is n-2. It is determined whether each SLIV in the TDRA table is valid (i.e., whether this SLIV contains an uplink symbol; if so, this SLIV is invalid; if not, this SLIV is valid) in the slots with indexes n-1 and n-2 on the carrier 1 and carrier 2, respectively. The candidate downlink transmission opportunities contained in each slot of each carrier are determined based on the valid SLIV That is, when the terminal supports receiving only one unicast PDSCH in one second time unit, if the second time unit contains at least one valid SLIV, then it is determined that the second time unit contains one candidate downlink transmission opportunity (otherwise, no downlink transmission opportunity, that is, if the second time unit contains no valid SLIV, then it is determined that there is no candidate downlink transmission opportunity in the second time unit). When the terminal supports receiving more than one unicast PDSCH in one second time unit, the candidate downlink transmission opportunities in the second time unit are determined based on the valid SLIV determined in the second time unit. It is assumed that the number of candidate downlink transmission opportunities determined in the slot n-1 on the carrier 1 is 3 (that is, since the validity of the SLIV is judged, one candidate downlink transmission opportunity is reduced compared to the Manner A), the number of candidate downlink transmission opportunities determined in the slot n-2 on the carrier 1 is 4, the number of candidate downlink transmission opportunities determined in the slot n-1 on the carrier 2 is 2 (that is, since the validity of the SLIV is judged, one candidate downlink transmission opportunity is reduced compared to the Manner A), and the number of candidate downlink transmission opportunities determined in the slot n-2 on the carrier 2 is 3.

In the Manner 1-1, the number of candidate downlink transmission opportunities corresponding to each uplink slot (that is, slot n-1 or slot n-2) is determined as $M_{c-max}$=max (3, 4, 2, 3)=4. That is, when assuming that the HARQ-ACK corresponding to each candidate downlink transmission opportunity is 1 bit, similar to the above Manner A, it is determined that the HARQ-ACK codebook communicated in the uplink slot n corresponding to a plurality of carriers is 8 bits. Then, in the case where the DCI schedules the transmission of one PDSCH on the carrier 1 and carrier 2 or on one of these carriers, the generation of the HARQ-ACK codebook and the determination of the mapping position of the HARQ-ACK of the PDSCH in the codebook are the same as those in the above Manner A, and will not be repeated.

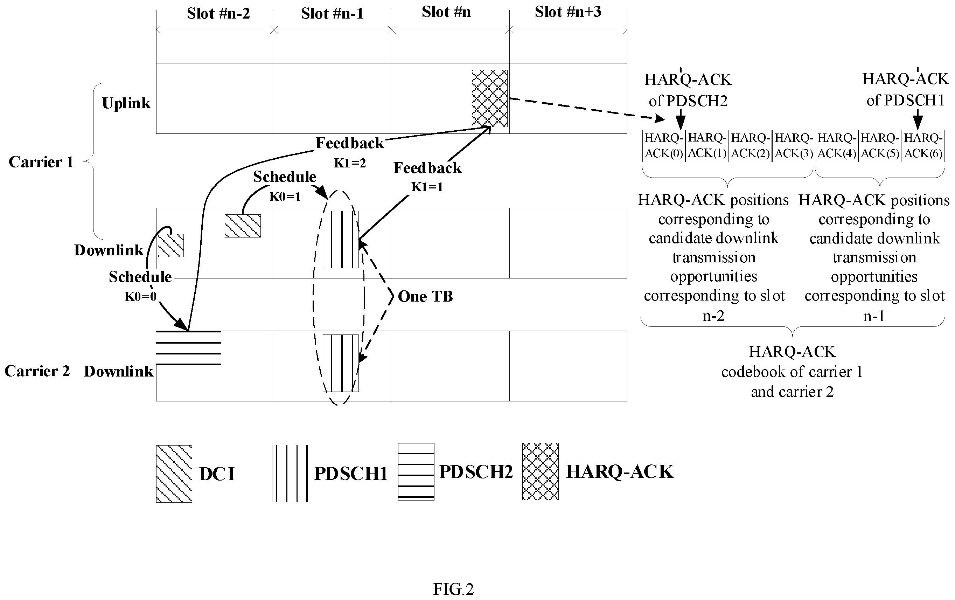

In the Manner 1-2, $M_{c-max}$=max(3,2)=3 corresponding to the uplink slot n-1 and $M_{c-max}$=max(4,3)=4 corresponding to the uplink slot n-2 are determined, thereby determining that the HARQ-ACK codebook communicated in the uplink slot n corresponding to the plurality of carriers is 7 bits, where the first 4 bits correspond to $M_{c-max}$=4 candidate downlink transmission opportunities corresponding to the uplink slot n-2 (namely, including the downlink transmission opportunities of the carrier 1 and carrier 2 in the slot n-2), and the last 3 bits correspond to $M_{c-max}$=3 candidate downlink transmission opportunities corresponding to the uplink slot n-1 (namely, including the downlink transmission opportunities of the carrier 1 and carrier 2 in the slot n-1). If there is a PDSCH transition scheduled on the carrier 1 and carrier 2 in the downlink slot n-1, it is assumed that its SLIV corresponds to the third one of the candidate downlink transmission opportunities in the slot where its transmission is performed, that is, corresponds to the third candidate downlink transmission opportunity among $M_{c-max}$=3 candidate downlink transmission opportunities corresponding to the uplink slot n-1 (the uplink slot corresponding to this downlink slot n-1), then the HARQ-ACK of the PDSCH is mapped to the third bit position in the 3-bit HARQ-ACK corresponding to the uplink slot n-1 (that is, the seventh bit position in the 7-bit HARQ-ACK codebook). If there is a PDSCH transmission scheduled only on the carrier 2 in the downlink slot n-2, it is assumed that its SLIV corresponds to the first one of the candidate downlink transmission opportunities in the slot n-2 of the carrier 2 (assuming that 3 candidate downlink transmission opportunities in the slot n-2 on the carrier 2 correspond to the first three of $M_{c-max}$=4 candidate downlink transmission opportunities corresponding to the uplink slot n-2, then the downlink transmission opportunity corresponding to this PDSCH corresponds to the first one of $M_{c-max}$=4 candidate downlink transmission opportunities corresponding to the uplink slot n-2), then the HARQ-ACK of the PDSCH is mapped to the first bit position in the 4-bit HARQ-ACK corresponding to the uplink slot n-2 (that is, the first bit position in the 7-bit HARQ-ACK codebook). The terminal sends the 7-bit HARQ-ACK on the determined PUCCH resource in the uplink slot n, as shown in FIG. 2; and in the same way as above, the base station may determine that the terminal has sent the 7-bit HARQ-ACK codebook in the uplink slot n, receive the 8-bit HARQ-ACK codebook on the corresponding resource, and obtain the HARQ-ACK of the scheduled PDSCH from the 7-bit HARQ-ACK codebook in the same way as above.

In the Manner 1-3, assuming that the specific carrier is carrier 1 (which may be a specific carrier determined according to a specific rule or obtained by signaling notification in advance, and the specific method is not limited), then $M_{c-max}$ corresponding to the uplink slot n-1 (that is, the number of candidate downlink transmission opportunities in the slot n-1 corresponding to the uplink slot n-1 on the carrier 1) is determined as 3, and $M_{c-max}$ corresponding to the uplink slot n-2 (that is, the number of candidate downlink transmission opportunities in the slot n-2 corresponding to the uplink slot n-2 on the carrier 1) is determined as 4, and further, the specific manner to obtain the HARQ-ACK codebook is the same as the above Manner 1-2 and will not be repeated. Here, since the number of candidate downlink transmission opportunities contained in each slot on the carrier 1 is not less than the number of candidate downlink transmission opportunities contained in the corresponding slot on the carrier 2, even if the base station sends the DCI to schedule transmission of one PDSCH only in a certain slot on the carrier 2, the downlink transmission on the carrier 2 can always be included in the HARQ-ACK codebook determined according to the candidate downlink transmission opportunities of the carrier 1. This is because the number of candidate downlink transmission opportunities of the carrier 2 is a subset of the number of candidate downlink transmission opportunities in the corresponding slot on the carrier 1.

Embodiment 2 (Manner 2): when supporting that the one DCI schedules transmission of one PDSCH on carrier 1 and carrier 2, it is assumed that the carrier 1 is a specific carrier and other assumptions are the same as those in the above Manners A and B, then the HARQ-ACK codebook may be determined for the carrier 1 according to the existing technology. For example, when the SLIV validity is not judged, it is determined that 4 candidate downlink transmission opportunities are included in each of the slots with indexes n-1 and n-2 on the carrier 1 corresponding respectively to the uplink slots with indexes n-1 and n-2, so as to obtain a 8-bit HARQ-ACK codebook. It may also be possible to determine the number of candidate downlink transmission opportunities included on the carrier 1 in the slots with indexes n-1 and n-2 according to the existing technology, and then this number is respectively taken as the numbers of candidate downlink transmission opportunities corresponding to the uplink slots with indexes n-1 and n-2, to thereby obtain a 8-bit HARQ-ACK codebook. The manner to perform HARQ-ACK mapping on the PDSCH transmission scheduled by the DCI simultaneously on the carrier 1 and carrier 2 or the PDSCH transmission scheduled by the DCI on a carrier is the same as the Manner A, and will not be repeated here.

For example, when the SLIV validity is judged, it is determined that 3 and 4 candidate downlink transmission opportunities are respectively included in the slots with indexes n-1 and n-2 on the carrier 1 corresponding respectively to the uplink slots with indexes n-1 and n-2, so as to obtain a 7-bit HARQ-ACK codebook. It may also be possible to determine the number of candidate downlink transmission opportunities included on the carrier 1 in the slots with indexes n-1 and n-2 according to the existing technology, and then this number is respectively taken as the numbers of candidate downlink transmission opportunities corresponding to the uplink slots with indexes n-1 and n-2, to thereby obtain a 7-bit HARQ-ACK codebook. The manner to perform HARQ-ACK mapping on the PDSCH transmission scheduled by the DCI simultaneously on the carrier 1 and carrier 2 or the PDSCH transmission scheduled by the DCI on a carrier is the same as the Manner B, and will not be repeated here.

When the DCI schedules the transmission of one PDSCH on one or more carriers including no specific carrier among the plurality of carriers, the HARQ-ACK of the PDSCH is mapped according to the candidate downlink transmission opportunity corresponding to the SLIV corresponding to the PDSCH in the second time unit corresponding to the specific carrier. That is, this PDSCH is communicated in the slot n on the carrier 2, and the carrier 1 is a specific carrier, so one slot needs to be determined on the carrier 1, where this slot is a slot corresponding to the slot n on the carrier 2. For example, according to the scheduling timing design, when the DCI schedules two carriers simultaneously, this slot is a slot that is scheduled simultaneously with the slot n on the carrier 2, e.g., a slot that can be determined according to the same K0 value. One SLIV same as the SLIV used by this PDSCH is found in the corresponding slot in the carrier 1, so as to obtain one candidate downlink transmission opportunity corresponding to this PDSCH in this slot on the carrier 1. Then, the mapping position of the HARQ-ACK of the PDSCH in the HARQ-ACK codebook of the carrier 1 may be obtained by using the position of this slot on the carrier 1 according to this candidate downlink transmission opportunity.

In the above embodiments, there is no restriction on the specific scheduling implementation when the DCI schedules the transmission of one PDSCH on the carrier 1 and carrier 2. For example, the DCI may contain the scheduling indication information for the carrier 1 and carrier 2 respectively, to independently indicate the scheduling information (such as time domain resources (including SLIV and K0), frequency domain resources, MCS, DMRS port, etc.) on the carrier 1 and carrier 2; or the DCI may contain only one set of indicator fields, where the provided scheduling information is shared by two carriers, that is, for example, the TDRA indicator field in the DCI indicates an SLIV and K0, and then one time domain transmission position is determined according to this SLIV and K0 on each carrier, etc.; or some indicator fields in the DCI independently indicate for two carrier, and some indicator fields are shared by two carrier, and so on. Any scheme that can implement the event that the one DCI schedules the transmission of one PDSCH over a plurality of carriers may be applied here.

In the above embodiments, the same applies when the unit of K1 is changed from slot to sub-slot; the same applies when the SCSs of the carrier 1 and carrier 2 are different; and the same applies when the DCI schedules the transmission of one PDSCH on more carriers.

To sum up, in the technical solution provided by the embodiments of the application, when the one DCI can schedule the transmission of one PDSCH on a plurality of carriers, an HARQ-ACK is jointly determined with the plurality of carriers as a group, instead of determining the HARQ-ACK codebooks respectively for all the carrier and then cascading them together. That is, the embodiments of the application provide a method of how to determine the HARQ-ACK codebook of a plurality of carriers when the DCI schedules the transmission of one PDSCH on the plurality of carriers, so as to avoid the codebook redundancy caused by determining the HARQ-ACK codebooks respectively for all the carrier and then cascading them together in the prior art, ensure the consistency of understanding of the HARQ-ACK transmission between the base station and the terminal, reduce the redundancy of the HARQ-ACK, and improve the HARQ-ACK transmission performance and efficiency.

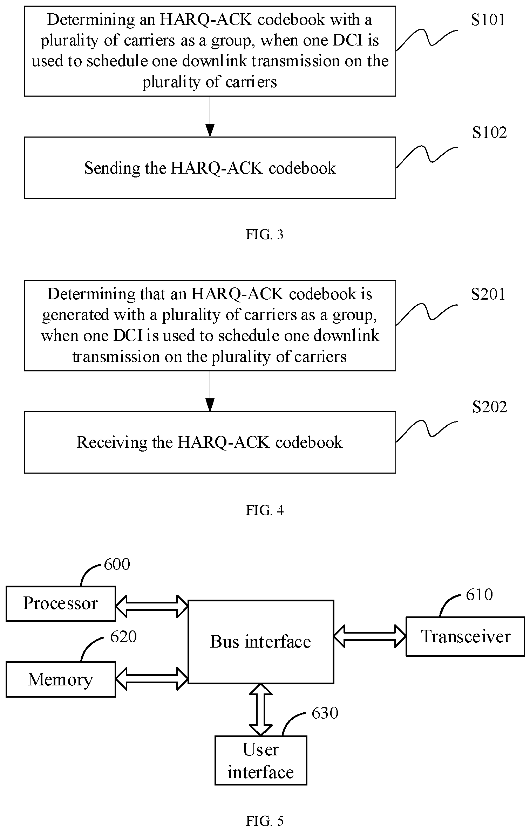

On the terminal side, referring to FIG. 3, an information communication method according to an embodiment of the application includes the following.

S101: determining an HARQ-ACK codebook with a plurality of carriers as a group, when one DCI is used to schedule one downlink transmission on the plurality of carriers.

Here, the step of determining the HARQ-ACK codebook with the plurality of carriers as a group is: taking the plurality of carriers as a group, and generating an HARQ-ACK codebook for this group of carriers.

S102: sending the HARQ-ACK codebook.

Optionally (corresponding to the above Manner 1), determining the HARQ-ACK codebook includes:

when the HARQ-ACK codebook is transmitted in a first time unit with index n (that is, when HARQ-ACK transmission for the downlink transmission scheduled by the DCI needs to be performed in the first time unit with index n, the HARQ-ACK codebook communicated in the first time unit with index n needs to be generated), determining a first time unit with index $n-K1_i$ according to each value K1; in a feedback timing K1 set, and determining the number $M_{c-max}$ of candidate downlink transmission opportunities corresponding the first time unit with index $n-K1_i$;

cascading $M_{c-max}$ candidate downlink transmission opportunities corresponding to each first time unit with index $n-K1_i$ together according to a fixed order of corresponding K1 values with the feedback timing K1 set, to form a set of candidate downlink transmission opportunities corresponding to the plurality of carriers;

determining the HARQ-ACK codebook according to the set of candidate downlink transmission opportunities corresponding to the plurality of carriers.

Optionally, the quantity $M_{c-max}$ is determined in one of following manners:

Manner 1-1: determining the quantity $M_{c-max}$ as the maximum number of candidate downlink transmission opportunities in each second time unit for which an HARQ-ACK feedback is performed in the first time unit with index n on each of the plurality of carriers;

Manner 1-2: for each first time unit with index $n-K1_i$, determining the quantity $M_{c-max}$ as the maximum number of candidate downlink transmission opportunities in a second time unit corresponding to the first time unit with index $n-K1_i$ on a respective one of the plurality of carriers;

Manner 1-3: determining the quantity $M_{c-max}$ as the number of candidate downlink transmission opportunities in a second time unit corresponding to the first time unit with index $n-K1_i$ on a specific carrier among the plurality of carriers.

Optionally, in the Manner 1-2, if there are a plurality of second time units corresponding to the first time unit with index n-K1; on one carrier, then the candidate downlink transmission opportunities in the second time unit corresponding to the first time unit with index $n-K1_i$ on the one carrier are a union set of candidate downlink transmission opportunities in the plurality of second time units (specifically obtained by cascading the candidate downlink transmission opportunity sets corresponding respectively to the plurality of second time units together in the sequential order of the second time units);

in the Manner 1-3, if there are a plurality of second time units corresponding to the first time unit with index $n-K1_i$ on the

specific carrier, then the candidate downlink transmission opportunities in the second time unit corresponding to the first time unit with index $n-K1_i$ on the specific carrier are a union set of candidate downlink transmission opportunities in the plurality of second time units.

Optionally, candidate downlink transmission opportunities in a second time unit on a carrier are determined based on all SLIVs in a TDRA table or based on a valid SLIV in the TDRA table, and the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

Optionally, when the candidate downlink transmission opportunities in one second time unit on one carrier are determined based on the valid SLIV in the TDRA table, whether an SLIV is valid is determined in at least one of following ways:

when the TDRA table is a TDRA table shared by the plurality of carriers, for each of the plurality of carriers, it is judged in a second time unit whether an SLIV in the TDRA table includes an uplink symbol configured on the current carrier; in response to that the SLIV in the TDRA table does not include the uplink symbol configured on the current carrier, the SLIV is determined to be valid; in response to that the SLIV in the TDRA table includes the uplink symbol configured on the current carrier, the SLIV is determined to be invalid; or, when the SLIV includes an uplink symbol in the second time unit corresponding to each of the plurality of carriers, the SLIV is determined to be invalid, otherwise the SLIV is determined to be valid, that is, when the SLIV includes no uplink symbol in a second time unit corresponding to at least one of the plurality of carriers, the SLIV is determined to be valid;

when the TDRA table is a TDRA table configured for the DCI, a row in the TDRA table corresponds to an SLIV group with a plurality of SLIVs, and each SLIV in the SLIV group corresponds to each of the plurality of carriers, then: when each of the SLIVs includes an uplink symbol in a second time unit on a corresponding carrier, the SLIV group is determined to be invalid, otherwise the SLIV group is determined to be valid, that is, when an SLIV among the SLIVs includes no uplink symbol in a second time unit on at least one of corresponding carriers, the SLIV is determined to be valid;

when the TDRA table is a TDRA table corresponding to a respective one of the plurality of carriers, for each of the plurality of carriers, it is judged in a second time unit whether an SLIV in a TDRA table corresponding to the current carrier includes an uplink symbol configured on the current carrier; in response to that the SLIV in the TDRA table corresponding to the current carrier does not include the uplink symbol configured on the current carrier, the SLIV is determined to be valid; in response to that the SLIV in the TDRA table corresponding to the current carrier includes the uplink symbol configured on the current carrier, the SLIV is determined to be invalid;

here, if a downlink transmission with M time repetitions is configured for a carrier, M second time units for transmission repetitions need to be determined based on a second time unit corresponding to the first time unit on a carrier; when the SLIV includes no uplink symbol in at least one of the M second time units for transmission repetitions, the SLIV is determined to be valid, otherwise the SLIV is determined to be invalid, that is, when the SLIV includes an uplink symbol in each of the M second time units for transmission repetitions, the SLIV is determined to be invalid.

Optionally, when the number $M_c$ of candidate downlink transmission opportunities in a second time unit corresponding to the first time unit with index $n-K1_i$ on one of the plurality of carriers is less than $M_{c-max}$, it is determined that $M_c$ candidate downlink transmission opportunities on the one carrier correspond to first $M_c$ candidate downlink transmission opportunities or last $M_c$ candidate downlink transmission opportunities among the $M_{c-max}$ candidate downlink transmission opportunities.

Optionally, determining the HARQ-ACK codebook according to the set of candidate downlink transmission opportunities corresponding to the plurality of carriers, includes:

determining the number of HARQ-ACK bits corresponding to the set of candidate downlink transmission opportunities corresponding to the plurality of carriers included in the HARQ-ACK codebook; and one downlink transmission opportunity corresponds to an HARQ-ACK feedback of X bits, and X depends on configuration parameters of PDSCH, for example, whether it is single TB, multi-TB or CBG transmission, whether to use HARQ-ACK spatial bundling if multi-TB transmission, etc.;

mapping an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

Optionally, mapping an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers, includes:

when the DCI schedules the downlink transmission on the plurality of carriers, determining a mapping position of the HARQ-ACK of the downlink transmission in the HARQ-ACK codebook according to a specific carrier among the plurality of carriers; and/or

when the DCI schedules the downlink transmission on one of the plurality of carriers, determining a mapping position of the HARQ-ACK of the downlink transmission in the HARQ-ACK codebook according to the carrier on which the downlink transmission is performed.

Optionally, determining a mapping position of the HARQ-ACK of the downlink transmission in the HARQ-ACK codebook according to a specific carrier among the plurality of carriers, includes:

determining a candidate downlink transmission opportunity of the downlink transmission, among the $M_{c\text{-max}}$ candidate downlink transmission opportunities of the first time unit with index $n\text{-}K1_i$ corresponding to a second time unit where the downlink transmission is performed on the specific carrier, and mapping the HARQ-ACK of the downlink transmission to an HARQ-ACK position corresponding to the candidate downlink transmission opportunity of the downlink transmission in the HARQ-ACK codebook;

determining a mapping position of the HARQ-ACK of the downlink transmission in the HARQ-ACK codebook according to a carrier on which the downlink transmission is performed, includes:

determining a candidate downlink transmission opportunity of the downlink transmission, among the $M_{c\text{-max}}$ candidate downlink transmission opportunities of the first time unit with index $n\text{-}K1_i$ corresponding to a second time unit where the downlink transmission is performed on a carrier on which the downlink transmission is performed, and mapping the HARQ-ACK of the downlink transmission to an HARQ-ACK position corresponding to the candidate downlink transmission opportunity of the downlink transmission in the HARQ-ACK codebook.

Optionally (corresponding to the Manner 2), determining the HARQ-ACK codebook includes:

taking an HARQ-ACK codebook corresponding to a specific carrier among the plurality of carriers as the HARQ-ACK codebook corresponding to the plurality of carriers; or

taking candidate downlink transmission opportunities corresponding to a specific carrier among the plurality of carriers as candidate downlink transmission opportunities corresponding to the plurality of carriers, and generating the HARQ-ACK codebook based on the candidate downlink transmission opportunities corresponding to the plurality of carriers.

Optionally, the HARQ-ACK codebook corresponding to the specific carrier among the plurality of carriers is taken as the HARQ-ACK codebook corresponding to the plurality of carriers, or the candidate downlink transmission opportunities corresponding to the specific carrier among the plurality of carriers are taken as the candidate downlink transmission opportunities corresponding to the plurality of carriers, and the HARQ-ACK codebook is generated based on the candidate downlink transmission opportunities corresponding to the plurality of carriers, in response to satisfying one or any combinations of following conditions:

the plurality of carriers has a same TDRA table, the plurality of carriers has a same slot structure, the plurality of carriers has a same SCS, SLIVs on the plurality of carriers except the specific carrier are included in a TDRA table of the specific carrier, or the DCI always schedules downlink transmission on one or more carriers including the specific carrier among the plurality of carriers.

Optionally, the specific carrier is a carrier with a smallest or largest index among the plurality of carriers, or a carrier with a smallest or largest SCS among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

Optionally, HARQ-ACKs of the downlink transmission scheduled by the DCI on the plurality of carriers and a downlink transmission scheduled by the DCI on one carrier are not communicated in a same PUCCH or in a same first time unit.

Optionally, the first time unit includes: one of a predefined time period, subframe, slot, or subslot composed of A symbols, and A is a positive integer; and/or

the second time unit includes: one of a predefined time period, subframe, slot or subslot composed of B symbols, and B is a positive integer;

definitions of the first time unit and the second time unit are same or different.

Optionally, the HARQ-ACK codebook is generated in a semi-static manner; and/or the downlink transmission includes at least one of a PDSCH or a PDCCH indicating downlink SPS resource release.

Correspondingly, referring to FIG. 4, on the base station side, an information communication method according to an embodiment of the application includes the following.

S201: determining that an HARQ-ACK codebook is generated with a plurality of carriers as a group, when one DCI is used to schedule one downlink transmission on the plurality of carriers.

S202: receiving the HARQ-ACK codebook.

Optionally, determining that the HARQ-ACK codebook is generated with the plurality of carriers as a group, includes:

when the HARQ-ACK codebook is received in a first time unit with index n, determining each first time unit with index $n-K1_i$ according to each value $K1_i$ in a feedback timing K1 set, and determining the quantity $M_{c-max}$ of candidate downlink transmission opportunities of each first time unit with index $n-K1_i$;

cascading $M_{c-max}$ candidate downlink transmission opportunities of each first time unit with index $n-K1_i$ together according to a fixed order of corresponding $K1_i$ values within the feedback timing K1 set, to form a set of candidate downlink transmission opportunities corresponding to the plurality of carriers;

determining that the HARQ-ACK codebook is generated according to the set of candidate downlink transmission opportunities corresponding to the plurality of carriers.

Optionally, the $M_{c-max}$ is determined in one of following manners:

Manner 1-1: determining the quantity $M_{c-max}$ as a maximum quantity of candidate downlink transmission opportunities in each second time unit for which an HARQ-ACK feedback is performed in the first time unit with index n on each of the plurality of carriers;

Manner 1-2: for each first time unit with index $n-K1_i$, determining the quantity $M_{c-max}$ as a maximum quantity of candidate downlink transmission opportunities in a second time unit corresponding to the first time unit with index $n-K1_i$ on each of the plurality of carriers;

Manner 1-3: determining the quantity $M_{c-max}$ as a quantity of candidate downlink transmission opportunities in a second time unit corresponding to the first time unit with index $n-K1_i$ on a specific carrier among the plurality of carriers.

Optionally, in the Manner 1-2, if there are a plurality of second time units corresponding to the first time unit with index $n-K1_i$ on one carrier, then the candidate downlink transmission opportunities in the second time unit corresponding to the first time unit with index $n-K1_i$ on the one carrier are a union set of candidate downlink transmission opportunities in the plurality of second time units;

in the Manner 1-3, if there are a plurality of second time units corresponding to the first time unit with index $n-K1_i$ on the specific carrier, then the candidate downlink transmission opportunities in the second time unit corresponding to the first time unit with index $n-K1_i$ on the specific carrier are a union set of candidate downlink transmission opportunities in the plurality of second time units.

Optionally, candidate downlink transmission opportunities in a second time unit on a carrier are determined based on all SLIVs in a TDRA table or based on a valid SLIV in the TDRA table, and the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

Optionally, when the candidate downlink transmission opportunities in one second time unit on one carrier are determined based on the valid SLIV in the TDRA table, whether an SLIV is valid is determined in at least one of following ways:

when the TDRA table is a TDRA table shared by the plurality of carriers, for each of the plurality of carriers, it is judged in a second time unit whether an SLIV in the TDRA table includes an uplink symbol configured on the current carrier; in response to that the SLIV in the TDRA table does not include the uplink symbol configured on the current carrier, the SLIV is determined to be valid; in response to that the SLIV in the TDRA table includes the uplink symbol configured on the current carrier, the SLIV is determined to be invalid; or, when the SLIV includes an uplink symbol in the second time unit corresponding to each of the plurality of carriers, the SLIV is determined to be invalid, otherwise the SLIV is determined to be valid;

when the TDRA table is a TDRA table configured for the DCI, a row in the TDRA table corresponds to an SLIV group with a plurality of SLIVs, and each SLIV in the SLIV group corresponds to each of the plurality of carriers, then: when each of the SLIVs includes an uplink symbol in a second time unit on a corresponding carrier, the SLIV group is determined to be invalid, otherwise the SLIV group is determined to be valid;

when the TDRA table is a TDRA table corresponding to a respective one of the plurality of carriers, for each of the plurality of carriers, it is judged in a second time unit whether an SLIV in a TDRA table corresponding to the current carrier includes an uplink symbol configured on the current carrier; in response to that the SLIV in the TDRA table corresponding to the current carrier does not include the uplink symbol configured on the current carrier, the SLIV is determined to be valid; in response to that the SLIV in the TDRA table corresponding to the current carrier includes the uplink symbol configured on the current carrier, the SLIV is determined to be invalid;

and, if a downlink transmission with M time repetitions is configured for a carrier, M second time units for transmission repetitions need to be determined based on a second time unit corresponding to the first time unit on one carrier; when the SLIV includes no uplink symbol in at least one of the M second time units for transmission repetitions, the SLIV is determined to be valid, otherwise the SLIV is determined to be invalid.

Optionally, when the number $M_c$ of candidate downlink transmission opportunities in a second time unit corresponding to the first time unit with index n-K1; on one of the plurality of carriers is less than $M_{c\text{-max}}$, the $M_c$ candidate downlink transmission opportunities on the carrier are determined to correspond to first $M_c$ candidate downlink transmission opportunities or last $M_c$ candidate downlink transmission opportunities among the $M_{c\text{-max}}$ candidate downlink transmission opportunities.

Optionally, determining that the HARQ-ACK codebook is generated according to the set of candidate downlink transmission opportunities corresponding to the plurality of carriers, includes:

determining the number of HARQ-ACK bits corresponding to the set of candidate downlink transmission opportunities corresponding to the plurality of carriers included in the HARQ-ACK codebook;

determining that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

Optionally, determining that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers, includes:

when the DCI schedules the downlink transmission on the plurality of carriers, determining a mapping position of the HARQ-ACK of the downlink transmission in the HARQ-ACK codebook according to a specific carrier among the plurality of carriers; and/or

when the DCI schedules the downlink transmission on one of the plurality of carriers, determining a mapping position of the HARQ-ACK of the downlink transmission in the HARQ-ACK codebook according to a carrier on which the downlink transmission is performed.

Optionally, determining a mapping position of the HARQ-ACK of the downlink transmission in the HARQ-ACK codebook according to a specific carrier among the plurality of carriers, includes:

determining a candidate downlink transmission opportunity of the downlink transmission, among the $M_{c\text{-max}}$ candidate downlink transmission opportunities of the first time unit with index n-K1$_i$ corresponding to a second time unit where the downlink transmission is performed on the specific carrier, and determining that the HARQ-ACK of the downlink transmission is mapped to an HARQ-ACK position corresponding to the candidate downlink transmission opportunity of the downlink transmission in the HARQ-ACK codebook;

determining a mapping position of the HARQ-ACK of the downlink transmission in the HARQ-ACK codebook according to a carrier on which the downlink transmission is performed, includes:

determining a candidate downlink transmission opportunity of the downlink transmission, among the $M_{c\text{-max}}$ candidate downlink transmission opportunities of the first time unit with index n-K1$_i$ corresponding to a second time unit where the downlink transmission is performed on a carrier on which the downlink transmission is performed, and determining that the HARQ-ACK of the downlink transmission is mapped to an HARQ-ACK position corresponding to the candidate downlink transmission opportunity of the downlink transmission in the HARQ-ACK codebook.

Optionally, determining that the HARQ-ACK codebook is generated with the plurality of carriers as a group, includes:

determining that the HARQ-ACK codebook corresponding to the plurality of carriers is an HARQ-ACK codebook corresponding to a specific carrier among the plurality of carriers; or

taking candidate downlink transmission opportunities corresponding to a specific carrier among the plurality of carriers as candidate downlink transmission opportunities corresponding to the plurality of carriers, and determining that the HARQ-ACK codebook is generated based on the candidate downlink transmission opportunities corresponding to the plurality of carriers.

Optionally, it is determined that the HARQ-ACK codebook corresponding to the plurality of carriers is an HARQ-ACK codebook corresponding to a specific carrier among the plurality of carriers, or, candidate downlink transmission opportunities corresponding to a specific carrier among the plurality of carriers are taken as candidate downlink transmission opportunities corresponding to the plurality of carriers, and it is determined that the HARQ-ACK codebook is generated based on the candidate downlink transmission opportunities corresponding to the plurality of carriers, in response to satisfying one or any combination of following conditions:

the plurality of carriers has a same TDRA table, the plurality of carriers has a same slot structure, the plurality of carriers has a same SCS, SLIVs on the plurality of carriers except the specific carrier are included in a TDRA table of the specific carrier, or the DCI always schedules downlink transmission on one or more carriers including the specific carrier among the plurality of carriers.

Optionally, the specific carrier is a carrier with a smallest or largest index among the plurality of carriers, or a carrier with a smallest or largest SCS among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

Optionally, HARQ-ACKs of the downlink transmission scheduled by the DCI on the plurality of carriers and a downlink transmission scheduled by the DCI on one carrier are not communicated in a same PUCCH or in a same first time unit.

Optionally, the first time unit includes: one of a predefined time period, subframe, slot, or subslot composed of A symbols, and A is a positive integer; and/or

the second time unit includes: one of a predefined time period, subframe, slot or subslot composed of B symbols, and B is a positive integer;

definitions of the first time unit and the second time unit are same or different.

Optionally, the HARQ-ACK codebook is generated in a semi-static manner; and/or the downlink transmission includes at least one of a PDSCH or a PDCCH indicating downlink SPS resource release.

On the terminal side, referring to FIG. 5, an information communication apparatus according to an embodiment of the application includes:

a processor 600 configured to read programs in a memory 620 to perform the process of:

determining an HARQ-ACK codebook with a plurality of carriers as a group, when one DCI is used to schedule one downlink transmission on the plurality of carriers;

sending the HARQ-ACK codebook.

Optionally, determining the HARQ-ACK codebook includes:

when the HARQ-ACK codebook is transmitted in a first time unit with index n (that is, when HARQ-ACK transmission for the downlink transmission scheduled by the DCI needs to be performed in the first time unit with index n, the HARQ-ACK codebook communicated in the first time unit with index n needs to be generated), determining each first time unit with index $n-K1_i$ according to each value $K1_i$ in a feedback timing K1 set, and determining a quantity $M_{c-max}$ of candidate downlink transmission opportunities of each first time unit with index $n-K1_i$;

cascading $M_{c-max}$ candidate downlink transmission opportunities of each first time unit with index $n-K1_i$ together according to a fixed order of corresponding $K1_i$ values within the feedback timing K1 set, to form a set of candidate downlink transmission opportunities corresponding to the plurality of carriers;

determining the HARQ-ACK codebook according to the set of candidate downlink transmission opportunities corresponding to the plurality of carriers.

Optionally, the quantity $M_{c-max}$ is determined in one of following manners:

Manner 1-1: determining the quantity $M_{c-max}$ as the maximum number of candidate downlink transmission opportunities in each second time unit for which an HARQ-ACK feedback is performed in the first time unit with index n on each of the plurality of carriers;

Manner 1-2: for each first time unit with index $n-K1_i$, determining the quantity $M_{c-max}$ as the maximum number of candidate downlink transmission opportunities in a second time unit corresponding to the first time unit with index $n-K1_i$ on a respective one of the plurality of carriers;

Manner 1-3: determining the quantity $M_{c\text{-max}}$ as the number of candidate downlink transmission opportunities in a second time unit corresponding to the first time unit with index $n\text{-}K1_i$ on a specific carrier among the plurality of carriers.

Optionally, in the Manner 1-2, if there are a plurality of second time units corresponding to the first time unit with index n-K1; on one carrier, then the candidate downlink transmission opportunities in the second time unit corresponding to the first time unit with index $n\text{-}K1_i$ on the one carrier are a union set of candidate downlink transmission opportunities in the plurality of second time units (specifically obtained by cascading the candidate downlink transmission opportunity sets corresponding respectively to the plurality of second time units together in the sequential order of the second time units);

in the Manner 1-3, if there are a plurality of second time units corresponding to the first time unit with index $n\text{-}K1_i$ on the specific carrier, then the candidate downlink transmission opportunities in the second time unit corresponding to the first time unit with index $n\text{-}K1_i$ on the specific carrier are a union set of candidate downlink transmission opportunities in the plurality of second time units.

Optionally, candidate downlink transmission opportunities in a second time unit on a carrier are determined based on all SLIVs in a TDRA table or based on a valid SLIV in the TDRA table, and the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

Optionally, when the candidate downlink transmission opportunities in one second time unit on one carrier are determined based on the valid SLIV in the TDRA table, whether an SLIV is valid is determined in at least one of following ways:

when the TDRA table is a TDRA table shared by the plurality of carriers, for each of the plurality of carriers, it is judged in a second time unit whether an SLIV in the TDRA table includes an uplink symbol configured on the current carrier; in response to that the SLIV in the TDRA table does not include the uplink symbol configured on the current carrier, the SLIV is determined to be valid; in response to that the SLIV in the TDRA table includes the uplink symbol configured on the current carrier, the SLIV is determined to be invalid; or, when the SLIV includes an uplink symbol in the second time unit corresponding to each of the plurality of carriers, the SLIV is determined to be invalid, otherwise the SLIV is determined to be valid, that is, when the SLIV includes no uplink symbol in a second time unit corresponding to at least one of the plurality of carriers, the SLIV is determined to be valid;

when the TDRA table is a TDRA table configured for the DCI, a row in the TDRA table corresponds to an SLIV group with a plurality of SLIVs, and each SLIV in the SLIV group corresponds to each of the plurality of carriers, then: when each of the SLIVs includes an uplink symbol in a second time unit on a corresponding carrier, the SLIV group is determined to be invalid, otherwise the SLIV group is determined to be valid, that is, when an SLIV among the SLIVs includes no uplink symbol in a second time unit on at least one of corresponding carriers, the SLIV is determined to be valid;

when the TDRA table is a TDRA table corresponding to a respective one of the plurality of carriers, for each of the plurality of carriers, it is judged in a second time unit whether an SLIV in a TDRA table corresponding to the current carrier includes an uplink symbol configured on the current carrier; in response to that the SLIV in the TDRA table corresponding to the current carrier does not include the uplink symbol configured on the current carrier, the SLIV is determined to be valid; in response to that the SLIV in the TDRA table corresponding to the current carrier includes the uplink symbol configured on the current carrier, the SLIV is determined to be invalid;

here, if a downlink transmission with M time repetitions is configured for a carrier, M second time units for transmission repetitions need to be determined based on a second time unit corresponding to the first time unit on a carrier; when the SLIV includes no uplink symbol in at least one of the M second time units for transmission repetitions, the SLIV is determined to be valid, otherwise the SLIV is determined to be invalid, that is, when the SLIV includes an uplink symbol in each of the M second time units for transmission repetitions, the SLIV is determined to be invalid.

Optionally, when the number $M_c$ of candidate downlink transmission opportunities in a second time unit corresponding to the first time unit with index $n\text{-}K1_i$ on one of the plurality of carriers is less than $M_{c\text{-max}}$, it is determined that $M_c$ candidate downlink transmission opportunities on the one carrier correspond to first $M_c$ candidate downlink transmission opportunities or last $M_c$ candidate downlink transmission opportunities among the $M_{c\text{-max}}$ candidate downlink transmission opportunities.

Optionally, determining the HARQ-ACK codebook according to the set of candidate downlink transmission opportunities corresponding to the plurality of carriers, includes:

determining the number of HARQ-ACK bits corresponding to the set of candidate downlink transmission opportunities corresponding to the plurality of carriers included in the HARQ-ACK codebook; and one downlink transmission opportunity corresponds to an HARQ-ACK feedback of X bits, and X depends on configuration parameters of PDSCH, for example, whether it is single TB, multi-TB or CBG transmission, whether to use HARQ-ACK spatial bundling if multi-TB transmission, etc.;

mapping an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

Optionally, mapping an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers, includes:

when the DCI schedules the downlink transmission on the plurality of carriers, determining a mapping position of the HARQ-ACK of the downlink transmission in the HARQ-ACK codebook according to a specific carrier among the plurality of carriers; and/or

when the DCI schedules the downlink transmission on one of the plurality of carriers, determining a mapping position of the HARQ-ACK of the downlink transmission in the HARQ-ACK codebook according to the carrier on which the downlink transmission is performed.

Optionally, determining a mapping position of the HARQ-ACK of the downlink transmission in the HARQ-ACK codebook according to a specific carrier among the plurality of carriers, includes:

a candidate downlink transmission opportunity of the downlink transmission, among the $M_{c\text{-}max}$ candidate downlink transmission opportunities of a first time unit with index n-K1; corresponding to a second time unit where the downlink transmission is performed on the specific carrier, and mapping the HARQ-ACK of the downlink transmission to an HARQ-ACK position corresponding to the candidate downlink transmission opportunity of the downlink transmission in the HARQ-ACK codebook;

determining a mapping position of the HARQ-ACK of the downlink transmission in the HARQ-ACK codebook according to a carrier on which the downlink transmission is performed, includes:

determining a candidate downlink transmission opportunity of the downlink transmission, among the $M_{c\text{-}max}$ candidate downlink transmission opportunities of a first time unit with index $n\text{-}K1_i$ corresponding to a second time unit where the downlink transmission is performed on a carrier on which the downlink transmission is performed, and mapping the HARQ-ACK of the downlink transmission to an HARQ-ACK position corresponding to the candidate downlink transmission opportunity of the downlink transmission in the HARQ-ACK codebook.

Optionally, determining the HARQ-ACK codebook includes:

taking an HARQ-ACK codebook corresponding to a specific carrier among the plurality of carriers as the HARQ-ACK codebook corresponding to the plurality of carriers; or

taking candidate downlink transmission opportunities corresponding to a specific carrier among the plurality of carriers as candidate downlink transmission opportunities corresponding to the plurality of carriers, and generating the HARQ-ACK codebook based on the candidate downlink transmission opportunities corresponding to the plurality of carriers.

Optionally, an HARQ-ACK codebook corresponding to a specific carrier among the plurality of carriers is taken as the HARQ-ACK codebook corresponding to the plurality of carriers, or, candidate downlink transmission opportunities corresponding to a specific carrier among the plurality of carriers are taken as candidate downlink transmission opportunities corresponding to the plurality of carriers, and the HARQ-ACK codebook is generated based on the candidate downlink transmission opportunities corresponding to the plurality of carriers, in response to satisfying one or any combination of following conditions:

the plurality of carriers has a same TDRA table, the plurality of carriers has a same slot structure, the plurality of carriers has a same SCS, SLIVs on the plurality of carriers except the specific carrier are included in a TDRA table of the specific carrier, or the DCI always schedules downlink transmission on one or more carriers including the specific carrier among the plurality of carriers.

Optionally, the specific carrier is a carrier with a smallest or largest index among the plurality of carriers, or a carrier with a smallest or largest SCS among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

Optionally, HARQ-ACKs of the downlink transmission scheduled by the DCI on the plurality of carriers and a downlink transmission scheduled by the DCI on one carrier are not transmitted in a same PUCCH or in a same first time unit.

Optionally, the first time unit includes: one of a predefined time period, subframe, slot, or subslot composed of A symbols, and A is a positive integer; and/or

the second time unit includes: one of a predefined time period, subframe, slot or subslot composed of B symbols, and B is a positive integer;
definitions of the first time unit and the second time unit are same or different.

Optionally, the HARQ-ACK codebook is generated in a semi-static manner; and/or the downlink transmission includes at least one of a PDSCH or a PDCCH indicating downlink SPS resource release.

A transceiver 610 is configured to receive and send the data under the control of the processor 600.

Here, in FIG. 5, the bus architecture may include any numbers of interconnected buses and bridges, and specifically link various circuits of one or more processors represented by the processor 600 and the memory represented by the memory 620. The bus architecture may further link various other circuits such as peripheral device, voltage regulator and power management circuit, which are all well known in the art and thus will not be further described again herein. The bus interface provides an interface. The transceiver 610 may be a plurality of elements, i.e., include a transmitter and a receiver, and provide the units for communicating with various other devices over the transmission media. For different user equipments, the user interface 630 may also be the interface capable of inter-connecting or exter-connecting with the required devices, and the connected devices include but not limited to keypad, display, loudspeaker, microphone, joystick and the like.

The processor 600 is responsible for managing the bus architecture and general processing, and the memory 620 may store the data used by the processor 600 when performing the operations.

Optionally, the processor 600 may be Central Processing Unit (CPU), Application Specific Integrated Circuit (ASIC), Field-Programmable Gate Array (FPGA) or Complex Programmable Logic Device (CPLD).

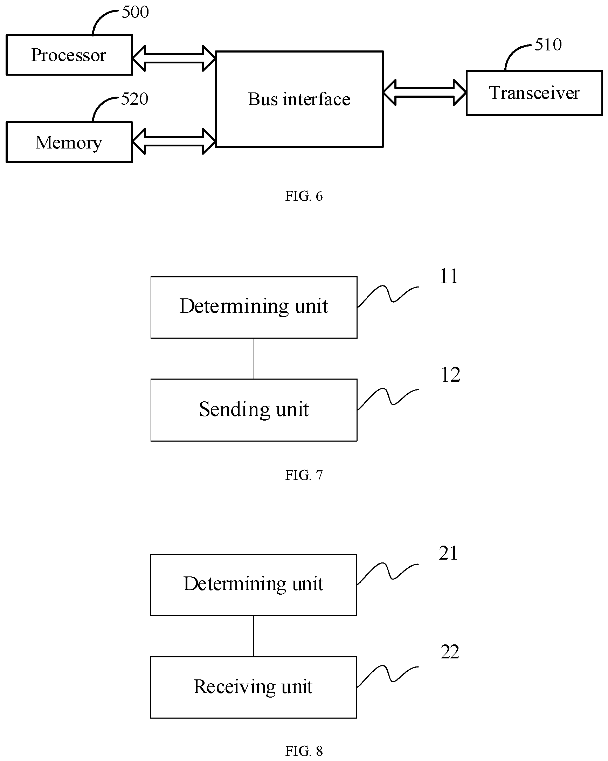

On the base station side, referring to FIG. 6, an information communication apparatus according to an embodiment of the application includes:

a processor 500 configured to read programs in a memory 520 to perform the process of:

determining that an HARQ-ACK codebook is generated with a plurality of carriers as a group, when one DCI is used to schedule one downlink transmission on the plurality of carriers;
receiving the HARQ-ACK codebook.

Optionally, determining that the HARQ-ACK codebook is generated with the plurality of carriers as a group, includes:

when the HARQ-ACK codebook is received in a first time unit with index n, determining each first time unit with index $n-K1_i$ according to each value $K1_i$ in a feedback timing K1 set, and determining a quantity $M_{c-max}$ of candidate downlink transmission opportunities of each first time unit with index $n-K1_i$;
cascading $M_{c-max}$ candidate downlink transmission opportunities of each first time unit with index $n-K1_i$ together according to a fixed order of corresponding $K1_i$ values within the feedback timing K1 set, to form a set of candidate downlink transmission opportunities corresponding to the plurality of carriers;
determining that the HARQ-ACK codebook is generated according to the set of candidate downlink transmission opportunities corresponding to the plurality of carriers.

Optionally, the quantity $M_{c-max}$ is determined in one of following manners:

Manner 1-1: determining the quantity $M_{c-max}$ as the maximum number of candidate downlink transmission opportunities in each second time unit for which an HARQ-ACK feedback is performed in the first time unit with index n on each of the plurality of carriers;
Manner 1-2: for each first time unit with index $n-K1_i$, determining the quantity $M_{c-max}$ as the maximum number of candidate downlink transmission opportunities in a second time unit corresponding to the first time unit with index $n-K1_i$ on each of the plurality of carriers;
Manner 1-3: determining the quantity $M_{c-max}$ as the number of candidate downlink transmission opportunities in a second time unit corresponding to the first time unit with index $n-K1_i$ on a specific carrier among the plurality of carriers.

Optionally, in the Manner 1-2, if there are a plurality of second time units corresponding to the first time unit with index $n-K1_i$ on one carrier, then the candidate downlink transmission opportunities in the second time unit corresponding to the first time unit with index n-K1; on the one carrier are a union set of candidate downlink transmission opportunities in the plurality of second time units;

in the Manner 1-3, if there are a plurality of second time units corresponding to the first time unit with index $n-K1_i$ on the specific carrier, then the candidate downlink transmission opportunities in the second time unit corresponding to the first time unit with index $n-K1_i$ on the specific carrier are a union set of candidate downlink transmission opportunities in the plurality of second time units.

Optionally, candidate downlink transmission opportunities in one second time unit on one carrier are determined based on all SLIVs in a TDRA table or based on a valid SLIV in the TDRA table, and the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

Optionally, when the candidate downlink transmission opportunities in one second time unit on one carrier are determined based on the valid SLIV in the TDRA table, whether an SLIV is valid is determined in at least one of following ways:

when the TDRA table is a TDRA table shared by the plurality of carriers, for each of the plurality of carriers, it is judged in a second time unit whether an SLIV in the TDRA table includes an uplink symbol configured on the current carrier; in response to that the SLIV in the TDRA table does not include the uplink symbol configured on the current carrier, the SLIV is determined to be valid; in response to that the SLIV in the TDRA table includes the uplink symbol configured on the current carrier, the SLIV is determined to be invalid; or, when the SLIV includes an uplink symbol in the second time unit corresponding to each of the plurality of carriers, the SLIV is determined to be invalid, otherwise the SLIV is determined to be valid;

when the TDRA table is a TDRA table configured for the DCI, a row in the TDRA table corresponds to an SLIV group with a plurality of SLIVs, and each SLIV in the SLIV group corresponds to each of the plurality of carriers, then: when each of the SLIVs includes an uplink symbol in a second time unit on a corresponding carrier, the SLIV group is determined to be invalid, otherwise the SLIV group is determined to be valid;

when the TDRA table is a TDRA table corresponding to a respective one of the plurality of carriers, for each of the plurality of carriers, it is judged in a second time unit whether an SLIV in a TDRA table corresponding to the current carrier includes an uplink symbol configured on the current carrier; in response to that the SLIV in the TDRA table corresponding to the current carrier does not include the uplink symbol configured on the current carrier, the SLIV is determined to be valid; in response to that the SLIV in the TDRA table corresponding to the current carrier includes the uplink symbol configured on the current carrier, the SLIV is determined to be invalid;

and, if a downlink transmission with M time repetitions is configured for a carrier, M second time units for transmission repetitions need to be determined based on a second time unit corresponding to the first time unit on one carrier; when the SLIV includes no uplink symbol in at least one of the M second time units for transmission repetitions, the SLIV is determined to be valid, otherwise the SLIV is determined to be invalid.

Optionally, when the number $M_c$ of candidate downlink transmission opportunities in a second time unit corresponding to the first time unit with index $n-K1_i$ on one of the plurality of carriers is less than $M_{c-max}$, the $M_c$ candidate downlink transmission opportunities on the carrier are determined to correspond to first $M_c$ candidate downlink transmission opportunities or last $M_c$ candidate downlink transmission opportunities among the $M_{c-max}$ candidate downlink transmission opportunities.

Optionally, determining that the HARQ-ACK codebook is generated according to the set of candidate downlink transmission opportunities corresponding to the plurality of carriers, includes:

determining the number of HARQ-ACK bits corresponding to the set of candidate downlink transmission opportunities corresponding to the plurality of carriers included in the HARQ-ACK codebook;
determining that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

Optionally, determining that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers, includes:

when the DCI schedules the downlink transmission on the plurality of carriers, determining a mapping position of the HARQ-ACK of the downlink transmission in the HARQ-ACK codebook according to a specific carrier among the plurality of carriers; and/or
when the DCI schedules the downlink transmission on one of the plurality of carriers, determining a mapping position of the HARQ-ACK of the downlink transmission in the HARQ-ACK codebook according to a carrier on which the downlink transmission is performed.

Optionally, determining a mapping position of the HARQ-ACK of the downlink transmission in the HARQ-ACK codebook according to a specific carrier among the plurality of carriers, includes:

determining a candidate downlink transmission opportunity of the downlink transmission, among the $M_{c-max}$ candidate downlink transmission opportunities of the first time unit with index $n-K1_i$ corresponding to a second time unit where the downlink transmission is performed on the specific carrier, and determining that the HARQ-ACK of the downlink transmission is mapped to an HARQ-ACK position corresponding to the candidate downlink transmission opportunity of the downlink transmission in the HARQ-ACK codebook;
determining a mapping position of the HARQ-ACK of the downlink transmission in the HARQ-ACK codebook according to a carrier on which the downlink transmission is performed, includes:
determining a candidate downlink transmission opportunity of the downlink transmission, among $M_{c-max}$ candidate downlink transmission opportunities of the first time unit with index $n-K1_i$ corresponding to a second time unit where the downlink transmission is performed on a carrier on which the downlink transmission is performed, and determining that the HARQ-ACK of the downlink transmission is mapped to an HARQ-ACK position corresponding to the candidate downlink transmission opportunity of the downlink transmission in the HARQ-ACK codebook.

Optionally, determining that the HARQ-ACK codebook is generated with the plurality of carriers as a group, includes:

determining that the HARQ-ACK codebook corresponding to the plurality of carriers is an HARQ-ACK codebook corresponding to a specific carrier among the plurality of carriers; or
taking candidate downlink transmission opportunities corresponding to a specific carrier among the plurality of carriers as candidate downlink transmission opportunities corresponding to the plurality of carriers, and determining that the HARQ-ACK codebook is generated based on the candidate downlink transmission opportunities corresponding to the plurality of carriers.

Optionally, it is determined that the HARQ-ACK codebook corresponding to the plurality of carriers is an HARQ-ACK codebook corresponding to a specific carrier among the plurality of carriers, or, candidate downlink transmission opportunities corresponding to a specific carrier among the plurality of carriers are taken as a candidate downlink transmission opportunities corresponding to the plurality of carriers, and it is determined that the HARQ-ACK codebook is generated based on the candidate downlink transmission opportunities corresponding to the plurality of carriers in response to satisfying one or any combination of following conditions:
the plurality of carriers has a same TDRA table, the plurality of carriers has a same slot structure, the plurality of carriers has a same SCS, SLIVs on the plurality of carriers except the specific carrier are included in a TDRA table of the specific carrier, or the DCI always schedules downlink transmission on one or more carriers including the specific carrier among the plurality of carriers.

Optionally, the specific carrier is a carrier with a smallest or largest index among the plurality of carriers, or a carrier with a smallest or largest SCS among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

Optionally, HARQ-ACKs of the downlink transmission scheduled by the DCI on the plurality of carriers and a downlink transmission scheduled by the DCI on one carrier are not received in a same PUCCH or in a same first time unit.

Optionally, the first time unit includes: one of a predefined time period, subframe, slot, or subslot composed of A symbols, and A is a positive integer; and/or

the second time unit includes: one of a predefined time period, subframe, slot or subslot composed of B symbols, and B is a positive integer;
definitions of the first time unit and the second time unit are same or different.

Optionally, the HARQ-ACK codebook is generated in a semi-static manner; and/or the downlink transmission includes at least one of a PDSCH or a PDCCH indicating downlink SPS resource release.

A transceiver 510 is configured to receive and send the data under the control of the processor 500.

Here, in FIG.6, the bus architecture can include any numbers of interconnected buses and bridges, and specifically link various circuits of one or more processors represented by the processor 500 and the memory represented by the memory 520. The bus architecture may further link various other circuits such as peripheral device, voltage regulator and power management circuit, which are all well known in the art and thus will not be further described again herein. The bus interface provides an interface. The transceiver 510 may be a plurality of elements, i.e., include a transmitter and a receiver, and provide the units for communicating with various other devices over the transmission media. The processor 500 is responsible for managing the bus architecture and general processing, and the memory 520 may store the data used by the processor 500 when performing the operations.

The processor 500 may be Central Processing Unit (CPU), Application Specific Integrated Circuit (ASIC), Field-Programmable Gate Array (FPGA) or Complex Programmable Logic Device (CPLD).

On the terminal side, referring to FIG. 7, another information communication apparatus according to an embodiment of the application includes:

a determining unit 11, configured to determine an HARQ-ACK codebook with a plurality of carriers as a group, when one DCI is used to schedule one downlink transmission on the plurality of carriers;

a sending unit 12, configured to send the HARQ-ACK codebook.

The information communication apparatus on the terminal side also has the function of executing various processing procedures described in the above-mentioned information communication method on the terminal side, for example, how the determining unit determines the HARQ-ACK codebook, etc., which will not be repeated here.

On the base station side, referring to FIG. 8, another information communication apparatus according to an embodiment of the application includes:

a determining unit 21, configured to determine that an HARQ-ACK codebook is generated with a plurality of carriers as a group, when one DCI is used to schedule one downlink transmission on the plurality of carriers;

a receiving unit 22, configured to receive the HARQ-ACK codebook.

The information communication apparatus on the base station side also has the function of executing various processing procedures described in the above-mentioned information communication method on the base station side, for example, how the determining unit specifically determines the HARQ-ACK codebook, etc., which will not be repeated here.

It should be noted that the division of units in the embodiments of the application is illustrative, and is merely a kind of logical function division, and there may be other division methods in actual implementations. In addition, the functional units in each embodiment of the application may be integrated into one processing unit, or each unit may exist alone physically, or two or more units may be integrated into one unit. The above-mentioned integrated units can be implemented in the form of hardware, or can be implemented in the form of software functional units.

When the integrated unit is implemented in the form of software functional unit and sold or used as an independent product, it may be stored in a computer readable storage medium. Based on such understanding, the technical solution of the application essentially or a part that contributes to the prior art or all or a part of the technical solution may be embodied in the form of software product. The computer software product is stored in a storage medium, and includes several instructions used to enable a computer device (which may be a personal computer, server, or network device, etc.) or a processor to perform all or some of the steps of the methods of various embodiments of the application. The above-mentioned storage medium includes: USB flash drive, mobile hard disk, Read-Only Memory (ROM), Random Access Memory (RAM), magnetic disk or compact disc or various media that can store the program codes.

An embodiment of the application provides a computing device, which can specifically be a desktop computer, a portable computer, a smart phone, a tablet computer, a Personal Digital Assistant (PDA) or the like. The computing device can include a Center Processing Unit (CPU), a memory, input/output devices and the like. The input device can include a keyboard, a mouse, a touch screen and the like, and the output device can include a display device such as Liquid Crystal Display (LCD), Cathode Ray Tube (CRT) or the like.

The memory can include a Read-Only Memory (ROM) and a Random Access Memory (RAM), and provide the program instructions and data stored in the memory to the processor. In an embodiment of the application, the memory may be used to store the program of any one of the methods provided by the embodiments of the application.

The processor invokes the program instructions stored in the memory and is configured to perform any one of the methods provided by the embodiments of the application in accordance with the obtained program instructions.

An embodiment of the application provides a computer storage medium for storing the computer program instructions used by the apparatuses provided by the embodiments of the application described above, where the computer storage medium contains the program for performing any one of the methods provided by the embodiments of the application described above.

The computer storage medium may be any available media or data storage device accessible to the computer, including but not limited to magnetic memory (e.g., floppy disk, hard disk, magnetic tape, Magnetic Optical disc (MO) or the like), optical memory (e.g., CD, DVD, BD, HVD or the like), semiconductor memory (e.g., ROM, EPROM, EEPROM, nonvolatile memory (NAND FLASH), Solid State Disk (SSD)) or the like.

The methods provided by the embodiments of the application may be applied to the terminal devices, and may also be applied to the network devices.

Here, the terminal device can also be referred to as the User Equipment ("UE" for short), Mobile Station ("MS" for short), Mobile Terminal ("MT" for short) or the like. Optionally, the terminal can has the ability of communicating with one or more core networks via the Radio Access Network (RAN). For example, the terminal can be a mobile telephone (or called "cellular" telephone), or a computer with the mobile property. For example, the terminal can also be a portable, pocket, handheld, computer built-in or vehicle-carried mobile device.

The network device may be a base station (e.g., access point), which means the device in the access network communicating with the wireless terminal via one or more sectors over the air interface. The base station may be used to perform the inter-conversion between the received air frame and the IP packet, and used as the router between the wireless terminal and the rest of the access network, and the rest of the access network may include Internet Protocol (IP) networks. The base station may further coordinate the attribute management of the air interface. For example, the base station can be the BTS in the GSM or CDMA, or can be the NodeB in the WCDMA, or can be the NodeB or eNB or e-NodeB (evolutional Node B) in the LTE, or can be the gNB in the 5G system, or the like, which is not limited in the embodiments of the application.

The processing flows of the above methods may be implemented by a software program, which may be stored in a storage medium. When the stored software program is invoked, the above method steps are performed.

It should be understood by those skilled in the art that the embodiments of the application can provide methods, systems and computer program products. Thus the application can take the form of hardware embodiments alone, software embodiments alone, or embodiments combining the software and hardware aspects. Also the application can take the form of computer program products implemented on one or more computer usable storage mediums (including but not limited to magnetic disk memories, optical memories and the like) containing computer usable program codes therein.

The application is described by reference to the flow charts and/or the block diagrams of the methods, the devices (systems) and the computer program products according to the embodiments of the application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the application without departing from the spirit and scope of the application. Thus the application is also intended to encompass these modifications and variations therein as long as these modifications and variations to the application come into the scope of the claims of the application and their equivalents.

**Claims**

**1.** An information communication method, comprising:

determining a Hybrid Automatic Repeat reQuest, HARQ-ACK, codebook with a plurality of carriers as a group, in response to Downlink Control Information, DCI, being used to schedule one downlink transmission on the plurality of carriers;

sending the HARQ-ACK codebook.

2. The method according to claim 1, wherein determining the HARQ-ACK codebook comprises:

determining each first time unit with index n-K1; according to each value K1; in a feedback timing K1 set, and determining a quantity $M_{c-max}$ of candidate downlink transmission opportunities of each first time unit with index n-K1;, when the HARQ-ACK codebook is transmitted in a first time unit with index n;

cascading $M_{c-max}$ candidate downlink transmission opportunities of each first time unit with index n-K1; together according to a fixed order of corresponding K1; values within the feedback timing K1 set, to form a set of candidate downlink transmission opportunities corresponding to the plurality of carriers;

determining the HARQ-ACK codebook according to the set of candidate downlink transmission opportunities corresponding to the plurality of carriers.

3. The method according to claim 2, wherein the quantity $M_{c-max}$ is determined in one of following manners:

Manner 1-1: determining the quantity $M_{c-max}$ as a maximum quantity of candidate downlink transmission opportunities in each second time unit for which an HARQ-ACK feedback is performed in the first time unit with index n on each of the plurality of carriers;

Manner 1-2: for each first time unit with index $n-K1_i$, determining the quantity $M_{c-max}$ as a maximum quantity of candidate downlink transmission opportunities in a second time unit corresponding to the first time unit with index n-K1; on each of the plurality of carriers;

Manner 1-3: determining the quantity $M_{c-max}$ as a quantity of candidate downlink transmission opportunities in a second time unit corresponding to the first time unit with index $n-K1_i$ on a specific carrier among the plurality of carriers.

4. The method according to claim 3, wherein,

in the Manner 1-2, if there are a plurality of second time units corresponding to the first time unit with index n-K1; on one carrier, then the candidate downlink transmission opportunities in the second time unit corresponding to the first time unit with index n-K1; on the one carrier are a union set of candidate downlink transmission opportunities in the plurality of second time units;

in the Manner 1-3, if there are a plurality of second time units corresponding to the first time unit with index n-K1; on the specific carrier, then the candidate downlink transmission opportunities in the second time unit corresponding to the first time unit with index $n-K1_i$ on the specific carrier are a union set of candidate downlink transmission opportunities in the plurality of second time units.

5. The method according to claim 3, wherein candidate downlink transmission opportunities in a second time unit on a carrier are determined based on all Start and Length Indicator Values, SLIVs, in a Time Domain Resource Assignment, TDRA, table or based on a valid SLIV in the TDRA table; wherein the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

6. The method according to claim 5, wherein when the candidate downlink transmission opportunities in the second time unit on the carrier are determined based on the valid SLIV in the TDRA table, whether an SLIV is valid is determined in at least one of following ways:

when the TDRA table is the TDRA table shared by the plurality of carriers, for each of the plurality of carriers, determining in a second time unit whether an SLIV in the TDRA table comprises an uplink symbol configured on a current carrier; in response to that the SLIV in the TDRA table does not comprise the uplink symbol configured on the current carrier, the SLIV is determined to be valid; in response to that the SLIV in the TDRA table comprises the uplink symbol configured on the current carrier, the SLIV is determined to be invalid; or, when the SLIV comprises an uplink symbol in the second time unit corresponding to each of the plurality of carriers, the SLIV is determined to be invalid, otherwise the SLIV is determined to be valid;

when the TDRA table is the TDRA table configured for the DCI, a row in the TDRA table corresponds to an SLIV group with a plurality of SLIVs, and each SLIV in the SLIV group corresponds to each of the plurality of carriers: when each of the SLIVs comprises an uplink symbol in a second time unit on a corresponding carrier, the SLIV group is determined to be invalid, otherwise the SLIV group is determined to be valid;

when the TDRA table is the TDRA table corresponding to a respective one of the plurality of carriers, for each of the plurality of carriers, determining in a second time unit whether an SLIV in a TDRA table corresponding to the current carrier comprises an uplink symbol configured on the current carrier; in response to that the SLIV in the TDRA table corresponding to the current carrier does not comprise the uplink symbol configured on the current carrier, the SLIV is determined to be valid; in response to that the SLIV in the TDRA table corresponding to the current carrier comprises the uplink symbol configured on the current carrier, the SLIV is determined to be invalid;

wherein, if a downlink transmission with M time repetitions is configured for a carrier, M second time units for transmission repetitions is determined based on a second time unit corresponding to the first time unit on the carrier; when the SLIV comprises no uplink symbol in at least one of the M second time units for transmission repetitions, the SLIV is determined to be valid, otherwise the SLIV is determined to be invalid.

7. The method according to claim 2, wherein, when a quantity $M_c$ of candidate downlink transmission opportunities in the second time unit corresponding to the first time unit with index n-K1; on a carrier of the plurality of carriers is less than $M_{c-max}$, the $M_c$ candidate downlink transmission opportunities on the carrier are determined to correspond to first $M_c$ candidate downlink transmission opportunities or last $M_c$ candidate downlink transmission opportunities among the $M_{c-max}$ candidate downlink transmission opportunities.

8. The method according to claim 2, wherein determining the HARQ-ACK codebook according to the set of candidate downlink transmission opportunities corresponding to the plurality of carriers, comprises:

    determining a quantity of HARQ-ACK bits corresponding to the set of candidate downlink transmission opportunities corresponding to the plurality of carriers in the HARQ-ACK codebook;
    mapping an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

9. The method according to claim 8, wherein the mapping the HARQ-ACK of the downlink transmission to the corresponding HARQ-ACK position in the HARQ-ACK codebook according to the correspondence between the downlink transmission and the candidate downlink transmission opportunity in the set of candidate downlink transmission opportunities corresponding to the plurality of carriers, comprises:

    when the DCI schedules the downlink transmission on the plurality of carriers, determining the mapping position of the HARQ-ACK of the downlink transmission in the HARQ-ACK codebook according to a specific carrier among the plurality of carriers; and/or
    when the DCI schedules the downlink transmission on one of the plurality of carriers, determining the mapping position of the HARQ-ACK of the downlink transmission in the HARQ-ACK codebook according to a carrier on which the downlink transmission is performed.

10. The method according to claim 9, wherein the determining the mapping position of the HARQ-ACK of the downlink transmission in the HARQ-ACK codebook according to the specific carrier among the plurality of carriers, comprises:

    determining a candidate downlink transmission opportunity of the downlink transmission, among the $M_{c-max}$ candidate downlink transmission opportunities of the first time unit with index n-K1; corresponding to a second time unit where the downlink transmission is performed on the specific carrier, and mapping the HARQ-ACK of the downlink transmission to an HARQ-ACK position corresponding to the candidate downlink transmission opportunity of the downlink transmission in the HARQ-ACK codebook;
    determining the mapping position of the HARQ-ACK of the downlink transmission in the HARQ-ACK codebook according to a carrier on which the downlink transmission is performed, comprises:
    determining a candidate downlink transmission opportunity of the downlink transmission, among the $M_{c-max}$ candidate downlink transmission opportunities of the first time unit with index n-K1; corresponding to a second time unit where the downlink transmission is performed on a carrier on which the downlink transmission is performed, and mapping the HARQ-ACK of the downlink transmission to an HARQ-ACK position corresponding to the candidate downlink transmission opportunity of the downlink transmission in the HARQ-ACK codebook.

11. The method according to claim 1, wherein determining the HARQ-ACK codebook comprises:

    taking an HARQ-ACK codebook corresponding to a specific carrier among the plurality of carriers as the HARQ-ACK codebook corresponding to the plurality of carriers; or

taking candidate downlink transmission opportunities corresponding to a specific carrier among the plurality of carriers as candidate downlink transmission opportunities corresponding to the plurality of carriers, and generating the HARQ-ACK codebook based on the candidate downlink transmission opportunities corresponding to the plurality of carriers.

12. The method according to claim 1, wherein an HARQ-ACK codebook corresponding to a specific carrier among the plurality of carriers is taken as the HARQ-ACK codebook corresponding to the plurality of carriers, or, candidate downlink transmission opportunities corresponding to a specific carrier among the plurality of carriers are taken as candidate downlink transmission opportunities corresponding to the plurality of carriers, and the HARQ-ACK codebook is generated based on the candidate downlink transmission opportunities corresponding to the plurality of carriers, in response to satisfying one or any combination of following conditions:

the plurality of carriers has a same TDRA table, the plurality of carriers has a same slot structure, the plurality of carriers has a same SCS, SLIVs on the plurality of carriers except the specific carrier are comprised in a TDRA table of the specific carrier, or the DCI always schedules downlink transmission on one or more carriers comprising the specific carrier among the plurality of carriers.

13. The method according to any one of claims 2-12, wherein the specific carrier is a carrier with a smallest or largest index among the plurality of carriers, or a carrier with a smallest or largest Sub-Carrier Spacing, SCS, among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

14. The method according to any one of claims 1-12, wherein HARQ-ACKs for the downlink transmission scheduled by the DCI on the plurality of carriers and a downlink transmission scheduled by the DCI on one carrier are not transmitted in a same Physical Uplink Control Channel, PUCCH, or in a same first time unit.

15. The method according to any one of claims 2-10, wherein:

the first time unit comprises: one of a predefined time period, subframe, slot, or subslot composed of A symbols, wherein A is a positive integer; and/or

the second time unit comprises: one of a predefined time period, subframe, slot or subslot composed of B symbols, wherein B is a positive integer;

definitions of the first time unit and the second time unit are same or different.

16. The method according to claim 1, wherein the HARQ-ACK codebook is generated in a semi-static manner; and/or the downlink transmission comprises at least one of a Physical Downlink Shared Channel, PDSCH, or a PDCCH indicating downlink Semi-Persistent Scheduling, SPS, resource release.

17. An information communication method, comprising:

determining that a Hybrid Automatic Repeat reQuest, HARQ-ACK, codebook is generated with a plurality of carriers as a group, in response to Downlink Control Information, DCI, being used to schedule one downlink transmission on the plurality of carriers;

receiving the HARQ-ACK codebook.

18. The method according to claim 17, wherein determining that the HARQ-ACK codebook is generated with the plurality of carriers as a group, comprises:

determining each first time unit with index n-K1; according to each value K1; in a feedback timing K1 set, and determining a quantity $M_{c-max}$ of candidate downlink transmission opportunities of each first time unit with index n-K1;, when the HARQ-ACK codebook is received in a first time unit with index n;

cascading $M_{c-max}$ candidate downlink transmission opportunities of each first time unit with index $n-K1_i$ together according to a fixed order of corresponding $K1_i$ values within the feedback timing K1 set, to form a set of candidate downlink transmission opportunities corresponding to the plurality of carriers;

determining that the HARQ-ACK codebook is generated according to the set of candidate downlink transmission opportunities corresponding to the plurality of carriers.

**19.** The method according to claim 18, wherein the quantity $M_{c-max}$ is determined in one of following manners:

Manner 1-1: determining the quantity $M_{c-max}$ as a maximum quantity of candidate downlink transmission opportunities in each second time unit for which an HARQ-ACK feedback is performed in the first time unit with index n on each of the plurality of carriers;

Manner 1-2: for each first time unit with index $n-K1_i$, determining the quantity $M_{c-max}$ as a maximum quantity of candidate downlink transmission opportunities in a second time unit corresponding to the first time unit with index n-K1; on each of the plurality of carriers;

Manner 1-3: determining the quantity $M_{c-max}$ as a quantity of candidate downlink transmission opportunities in a second time unit corresponding to the first time unit with index $n-K1_i$ on a specific carrier among the plurality of carriers.

**20.** The method according to claim 19, wherein,

in the Manner 1-2, if there are a plurality of second time units corresponding to the first time unit with index n-K1; on one carrier, then the candidate downlink transmission opportunities in the second time unit corresponding to the first time unit with index n-K1; on the one carrier are a union set of candidate downlink transmission opportunities in the plurality of second time units;

in the Manner 1-3, if there are a plurality of second time units corresponding to the first time unit with index n-K1; on the specific carrier, then the candidate downlink transmission opportunities in the second time unit corresponding to the first time unit with index $n-K1_i$ on the specific carrier are a union set of candidate downlink transmission opportunities in the plurality of second time units.

**21.** The method according to claim 19, wherein candidate downlink transmission opportunities in a second time unit on a carrier are determined based on all Start and Length Indicator Values, SLIVs, in a Time Domain Resource Assignment, TDRA, table or based on a valid SLIV in the TDRA table; wherein the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

**22.** The method according to claim 21, wherein when the candidate downlink transmission opportunities in the second time unit on the carrier are determined based on the valid SLIV in the TDRA table, whether an SLIV is valid is determined in at least one of following ways:

when the TDRA table is the TDRA table shared by the plurality of carriers, for each of the plurality of carriers, determining in a second time unit whether an SLIV in the TDRA table comprises an uplink symbol configured on a current carrier; in response to that the SLIV in the TDRA table does not comprise the uplink symbol configured on the current carrier, the SLIV is determined to be valid; in response to that the SLIV in the TDRA table comprises the uplink symbol configured on the current carrier, the SLIV is determined to be invalid; or, when the SLIV comprises an uplink symbol in the second time unit corresponding to each of the plurality of carriers, the SLIV is determined to be invalid, otherwise the SLIV is determined to be valid;

when the TDRA table is the TDRA table configured for the DCI, a row in the TDRA table corresponds to an SLIV group with a plurality of SLIVs, and each SLIV in the SLIV group corresponds to each of the plurality of carriers: when each of the SLIVs comprises an uplink symbol in a second time unit on a corresponding carrier, the SLIV group is determined to be invalid, otherwise the SLIV group is determined to be valid;

when the TDRA table is the TDRA table corresponding to a respective one of the plurality of carriers, for each of the plurality of carriers, determining in a second time unit whether an SLIV in a TDRA table corresponding to the current carrier comprises an uplink symbol configured on the current carrier; in response to that the SLIV in the TDRA table corresponding to the current carrier does not comprise the uplink symbol configured on the current carrier, the SLIV is determined to be valid; in response to that the SLIV in the TDRA table corresponding to the current carrier comprises the uplink symbol configured on the current carrier, the SLIV is determined to be invalid;

wherein, if a downlink transmission with M time repetitions is configured for a carrier, M second time units for transmission repetitions is determined based on a second time unit corresponding to the first time unit on the carrier; when the SLIV comprises no uplink symbol in at least one of the M second time units for transmission repetitions, the SLIV is determined to be valid, otherwise the SLIV is determined to be invalid.

**23.** The method according to claim 18, wherein, when a quantity $M_c$ of candidate downlink transmission opportunities in the second time unit corresponding to the first time unit with index n-K1; on a carrier of the plurality of carriers is less than $M_{c-max}$, the $M_c$ candidate downlink transmission opportunities on the carrier are determined to correspond to first $M_c$ candidate downlink transmission opportunities or last $M_c$ candidate downlink transmission opportunities among the $M_{c-max}$ candidate downlink transmission opportunities.

24. The method according to claim 18, wherein determining that the HARQ-ACK codebook is generated according to the set of candidate downlink transmission opportunities corresponding to the plurality of carriers, comprises:

    determining a quantity of HARQ-ACK bits corresponding to the set of candidate downlink transmission opportunities corresponding to the plurality of carriers in the HARQ-ACK codebook;
    determining that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

25. The method according to claim 24, wherein determining that the HARQ-ACK of the downlink transmission is mapped to the corresponding HARQ-ACK position in the HARQ-ACK codebook according to the correspondence between the downlink transmission and the candidate downlink transmission opportunity in the set of candidate downlink transmission opportunities corresponding to the plurality of carriers, comprises:

    when the DCI schedules the downlink transmission on the plurality of carriers, determining the mapping position of the HARQ-ACK of the downlink transmission in the HARQ-ACK codebook according to a specific carrier among the plurality of carriers; and/or
    when the DCI schedules the downlink transmission on one of the plurality of carriers, determining the mapping position of the HARQ-ACK of the downlink transmission in the HARQ-ACK codebook according to a carrier on which the downlink transmission is performed.

26. The method according to claim 25, wherein the determining the mapping position of the HARQ-ACK of the downlink transmission in the HARQ-ACK codebook according to the specific carrier among the plurality of carriers, comprises:

    determining a candidate downlink transmission opportunity of the downlink transmission, among the $M_{c-max}$ candidate downlink transmission opportunities of the first time unit with index n-K1; corresponding to a second time unit where the downlink transmission is performed on the specific carrier, and determining that the HARQ-ACK of the downlink transmission is mapped to an HARQ-ACK position corresponding to the candidate downlink transmission opportunity of the downlink transmission in the HARQ-ACK codebook;
    determining the mapping position of the HARQ-ACK of the downlink transmission in the HARQ-ACK codebook according to the carrier on which the downlink transmission is performed, comprises:
    determining a candidate downlink transmission opportunity of the downlink transmission, among the $M_{c-max}$ candidate downlink transmission opportunities of the first time unit with index n-K1; corresponding to a second time unit where the downlink transmission is performed on a carrier on which the downlink transmission is performed, and determining that the HARQ-ACK of the downlink transmission is mapped to an HARQ-ACK position corresponding to the candidate downlink transmission opportunity of the downlink transmission in the HARQ-ACK codebook.

27. The method according to claim 17, wherein determining that the HARQ-ACK codebook is generated with the plurality of carriers as a group, comprises:

    determining that the HARQ-ACK codebook corresponding to the plurality of carriers is an HARQ-ACK codebook corresponding to a specific carrier among the plurality of carriers; or
    taking candidate downlink transmission opportunities corresponding to a specific carrier among the plurality of carriers as candidate downlink transmission opportunities corresponding to the plurality of carriers, and determining that the HARQ-ACK codebook is generated based on the candidate downlink transmission opportunities corresponding to the plurality of carriers.

28. The method according to claim 17, wherein it is determined that the HARQ-ACK codebook corresponding to the plurality of carriers is an HARQ-ACK codebook corresponding to a specific carrier among the plurality of carriers, or, candidate downlink transmission opportunities corresponding to a specific carrier among the plurality of carriers are taken as candidate downlink transmission opportunities corresponding to the plurality of carriers, and it is determined that the HARQ-ACK codebook is generated based on the candidate downlink transmission opportunities corresponding to the plurality of carriers, in response to satisfying one or any combination of following conditions: the plurality of carriers has a same TDRA table, the plurality of carriers has a same slot structure, the plurality of carriers has a same SCS, SLIVs on the plurality of carriers except the specific carrier are comprised in a TDRA table of the specific carrier, or the DCI always schedules downlink transmission on one or more carriers comprising the specific carrier among the plurality of carriers.

29. The method according to any one of claims 18-28, wherein the specific carrier is a carrier with a smallest or largest index among the plurality of carriers, or a carrier with a smallest or largest Sub-Carrier Spacing, SCS, among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

30. The method according to any one of claims 17-28, wherein HARQ-ACKs for the downlink transmission scheduled by the DCI on the plurality of carriers and a downlink transmission scheduled by the DCI on one carrier are not received in a same Physical Uplink Control Channel, PUCCH, or in a same first time unit.

31. The method according to any one of claims 18-28, wherein the first time unit comprises: one of a predefined time period, subframe, slot, or subslot composed of A symbols, wherein A is a positive integer; and/or

    the second time unit comprises: one of a predefined time period, subframe, slot or subslot composed of B symbols, wherein B is a positive integer;
    definitions of the first time unit and the second time unit are same or different.

32. The method according to claim 17, wherein the HARQ-ACK codebook is generated in a semi-static manner; and/or the downlink transmission comprises at least one of a Physical Downlink Shared Channel, PDSCH, or a PDCCH indicating downlink Semi-Persistent Scheduling, SPS, resource release.

33. An information communication apparatus, comprising:

    a determining unit, configured to determine a Hybrid Automatic Repeat reQuest, HARQ-ACK, codebook with a plurality of carriers as a group, in response to Downlink Control Information, DCI, being used to schedule one downlink transmission on the plurality of carriers;
    a sending unit, configured to send the HARQ-ACK codebook.

34. The apparatus according to claim 33, wherein the determining unit is specifically configured to:

    determine each first time unit with index $n-K1_i$ according to each value $K1_i$ in a feedback timing K1 set, and determine a quantity $M_{c-max}$ of candidate downlink transmission opportunities of each first time unit with index $n-K1_i$, when the HARQ-ACK codebook is transmitted in a first time unit with index n;
    cascade $M_{c-max}$ candidate downlink transmission opportunities of each first time unit with index $n-K1_i$ together according to a fixed order of corresponding $K1_i$ values within the feedback timing K1 set, to form a set of candidate downlink transmission opportunities corresponding to the plurality of carriers;
    determine the HARQ-ACK codebook according to the set of candidate downlink transmission opportunities corresponding to the plurality of carriers.

35. The apparatus according to claim 34, wherein the quantity $M_{c-max}$ is determined in one of following manners:

    Manner 1-1: determining the quantity $M_{c-max}$ as a maximum quantity of candidate downlink transmission opportunities in each second time unit for which an HARQ-ACK feedback is performed in the first time unit with index n on each of the plurality of carriers;
    Manner 1-2: for each first time unit with index $n-K1_i$, determining the quantity $M_{c-max}$ as a maximum quantity of candidate downlink transmission opportunities in a second time unit corresponding to the first time unit with index $n-K1_i$ on each of the plurality of carriers;
    Manner 1-3: determining the quantity $M_{c-max}$ as a quantity of candidate downlink transmission opportunities in a second time unit corresponding to the first time unit with index $n-K1_i$ on a specific carrier among the plurality of carriers.

36. The apparatus according to claim 35, wherein,

in the Manner 1-2, if there are a plurality of second time units corresponding to the first time unit with index n-K1; on one carrier, then the candidate downlink transmission opportunities in the second time unit corresponding to the first time unit with index n-K1; on the one carrier are a union set of candidate downlink transmission opportunities in the plurality of second time units;

in the Manner 1-3, if there are a plurality of second time units corresponding to the first time unit with index n-K1; on the specific carrier, then the candidate downlink transmission opportunities in the second time unit corresponding to the first time unit with index n-K1$_i$ on the specific carrier are a union set of candidate downlink transmission opportunities in the plurality of second time units.

37. The apparatus according to claim 35, wherein candidate downlink transmission opportunities in a second time unit on a carrier are determined based on all Start and Length Indicator Values, SLIVs, in a Time Domain Resource Assignment, TDRA, table or based on a valid SLIV in the TDRA table; wherein the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

38. The apparatus according to claim 37, wherein when the candidate downlink transmission opportunities in the second time unit on the carrier are determined based on the valid SLIV in the TDRA table, whether an SLIV is valid is determined in at least one of following ways:

   when the TDRA table is the TDRA table shared by the plurality of carriers, for each of the plurality of carriers, determining in a second time unit whether an SLIV in the TDRA table comprises an uplink symbol configured on a current carrier; in response to that the SLIV in the TDRA table does not comprise the uplink symbol configured on the current carrier, the SLIV is determined to be valid; in response to that the SLIV in the TDRA table comprises the uplink symbol configured on the current carrier, the SLIV is determined to be invalid; or, when the SLIV comprises an uplink symbol in the second time unit corresponding to each of the plurality of carriers, the SLIV is determined to be invalid, otherwise the SLIV is determined to be valid;
   when the TDRA table is the TDRA table configured for the DCI, a row in the TDRA table corresponds to an SLIV group with a plurality of SLIVs, and each SLIV in the SLIV group corresponds to each of the plurality of carriers, then: when each of the SLIVs comprises an uplink symbol in a second time unit on a corresponding carrier, the SLIV group is determined to be invalid, otherwise the SLIV group is determined to be valid;
   when the TDRA table is the TDRA table corresponding to a respective one of the plurality of carriers, for each of the plurality of carriers, determining in a second time unit whether an SLIV in a TDRA table corresponding to the current carrier comprises an uplink symbol configured on the current carrier; in response to that the SLIV in the TDRA table corresponding to the current carrier does not comprise the uplink symbol configured on the current carrier, the SLIV is determined to be valid; in response to that the SLIV in the TDRA table corresponding to the current carrier comprises the uplink symbol configured on the current carrier, the SLIV is determined to be invalid;
   wherein, if a downlink transmission with M time repetitions is configured for a carrier, M second time units for transmission repetitions is determined based on a second time unit corresponding to the first time unit on the carrier; when the SLIV includes no uplink symbol in at least one of the M second time units for transmission repetitions, the SLIV is determined to be valid, otherwise the SLIV is determined to be invalid.

39. The apparatus according to claim 34, wherein, when a quantity $M_c$ of candidate downlink transmission opportunities in the second time unit corresponding to the first time unit with index n-K1; on a carrier of the plurality of carriers is less than $M_{c\text{-max}}$, the $M_c$ candidate downlink transmission opportunities on the carrier are determined to correspond to first $M_c$ candidate downlink transmission opportunities or last $M_c$ candidate downlink transmission opportunities among the $M_{c\text{-max}}$ candidate downlink transmission opportunities.

40. The apparatus according to claim 34, wherein the determining unit is configured to:

   determine a quantity of HARQ-ACK bits corresponding to the set of candidate downlink transmission opportunities corresponding to the plurality of carriers in the HARQ-ACK codebook;
   map an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

41. The apparatus according to claim 40, wherein the determining unit is configured to:

when the DCI schedules the downlink transmission on the plurality of carriers, determine the mapping position of the HARQ-ACK of the downlink transmission in the HARQ-ACK codebook according to a specific carrier among the plurality of carriers; and/or

when the DCI schedules the downlink transmission on one of the plurality of carriers, determine the mapping position of the HARQ-ACK of the downlink transmission in the HARQ-ACK codebook according to a carrier on which the downlink transmission is performed.

42. The apparatus according to claim 41, wherein the determining unit is configured to:

determine a candidate downlink transmission opportunity of the downlink transmission, among the $M_{c-max}$ candidate downlink transmission opportunities of the first time unit with index n-K1; corresponding to a second time unit where the downlink transmission is performed on the specific carrier, and map the HARQ-ACK of the downlink transmission to an HARQ-ACK position corresponding to the candidate downlink transmission opportunity of the downlink transmission in the HARQ-ACK codebook;

determine a candidate downlink transmission opportunity of the downlink transmission, among the $M_{c-max}$ candidate downlink transmission opportunities of the first time unit with index n-K1; corresponding to a second time unit where the downlink transmission is performed on a carrier on which the downlink transmission is performed, and map the HARQ-ACK of the downlink transmission to an HARQ-ACK position corresponding to the candidate downlink transmission opportunity of the downlink transmission in the HARQ-ACK codebook.

43. The apparatus according to claim 33, wherein the determining unit is configured to:

take an HARQ-ACK codebook corresponding to a specific carrier among the plurality of carriers as the HARQ-ACK codebook corresponding to the plurality of carriers; or

take candidate downlink transmission opportunities corresponding to a specific carrier among the plurality of carriers as candidate downlink transmission opportunities corresponding to the plurality of carriers, and generate the HARQ-ACK codebook based on the candidate downlink transmission opportunities corresponding to the plurality of carriers.

44. The apparatus according to claim 33, wherein an HARQ-ACK codebook corresponding to a specific carrier among the plurality of carriers is taken as the HARQ-ACK codebook corresponding to the plurality of carriers, or, candidate downlink transmission opportunities corresponding to a specific carrier among the plurality of carriers are taken as candidate downlink transmission opportunities corresponding to the plurality of carriers, and the HARQ-ACK codebook is generated based on the candidate downlink transmission opportunities corresponding to the plurality of carriers, in response to satisfying one or any combination of following conditions:
the plurality of carriers has a same TDRA table, the plurality of carriers has a same slot structure, the plurality of carriers has a same SCS, SLIVs on the plurality of carriers except the specific carrier are comprised in a TDRA table of the specific carrier, or the DCI always schedules downlink transmission on one or more carriers comprising the specific carrier among the plurality of carriers.

45. The apparatus according to any one of claims 34-44, wherein the specific carrier is a carrier with a smallest or largest index among the plurality of carriers, or a carrier with a smallest or largest Sub-Carrier Spacing, SCS, among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

46. The apparatus according to any one of claims 33-44, wherein HARQ-ACKs for the downlink transmission scheduled by the DCI on the plurality of carriers and a downlink transmission scheduled by the DCI on one carrier are not transmitted in a same Physical Uplink Control Channel, PUCCH, or in a same first time unit.

47. The apparatus according to any one of claims 34-42, wherein:

the first time unit comprises: one of a predefined time period, subframe, slot, or subslot composed of A symbols, wherein A is a positive integer; and/or

the second time unit comprises: one of a predefined time period, subframe, slot or subslot composed of B symbols, wherein B is a positive integer;

definitions of the first time unit and the second time unit are same or different.

**48.** The apparatus according to claim 33, wherein the HARQ-ACK codebook is generated in a semi-static manner; and/or the downlink transmission comprises at least one of a Physical Downlink Shared Channel, PDSCH, or a PDCCH indicating downlink Semi-Persistent Scheduling, SPS, resource release.

**49.** An information communication apparatus, comprising:

a determining unit, configured to determine that a Hybrid Automatic Repeat reQuest, HARQ-ACK, codebook is generated with a plurality of carriers as a group, in response to Downlink Control Information, DCI, being used to schedule one downlink transmission on the plurality of carriers;
a receiving unit, configured to receive the HARQ-ACK codebook.

**50.** The apparatus according to claim 49, wherein the determining unit is configured to:

determine each first time unit with index n-K1$_i$ according to each value K1$_i$ in a feedback timing K1 set, and determine a quantity M$_{c\text{-max}}$ of candidate downlink transmission opportunities of each first time unit with index n-K1$_i$, when the HARQ-ACK codebook is received in a first time unit with index n;
cascade M$_{c\text{-max}}$ candidate downlink transmission opportunities of each first time unit with index n-K1$_i$ together according to a fixed order of corresponding K1$_i$ values within the feedback timing K1 set, to form a set of candidate downlink transmission opportunities corresponding to the plurality of carriers;
determine that the HARQ-ACK codebook is generated according to the set of candidate downlink transmission opportunities corresponding to the plurality of carriers.

**51.** The apparatus according to claim 50, wherein the quantity M$_{c\text{-max}}$ is determined in one of following manners:

Manner 1-1: determining the quantity M$_{c\text{-max}}$ as a maximum quantity of candidate downlink transmission opportunities in each second time unit for which an HARQ-ACK feedback is performed in the first time unit with index n on each of the plurality of carriers;
Manner 1-2: for each first time unit with index n-K1$_i$, determining the quantity M$_{c\text{-max}}$ as a maximum quantity of candidate downlink transmission opportunities in a second time unit corresponding to the first time unit with index n-K1$_i$ on each of the plurality of carriers;
Manner 1-3: determining the quantity M$_{c\text{-max}}$ as a quantity of candidate downlink transmission opportunities in a second time unit corresponding to the first time unit with index n-K1$_i$ on a specific carrier among the plurality of carriers.

**52.** The apparatus according to claim 51, wherein,

in the Manner 1-2, if there are a plurality of second time units corresponding to the first time unit with index n-K1$_i$ on one carrier, then the candidate downlink transmission opportunities in the second time unit corresponding to the first time unit with index n-K1$_i$ on the one carrier are a union set of candidate downlink transmission opportunities in the plurality of second time units;
in the Manner 1-3, if there are a plurality of second time units corresponding to the first time unit with index n-K1$_i$ on the specific carrier, then the candidate downlink transmission opportunities in the second time unit corresponding to the first time unit with index n-K1$_i$ on the specific carrier are a union set of candidate downlink transmission opportunities in the plurality of second time units.

**53.** The apparatus according to claim 51, wherein candidate downlink transmission opportunities in a second time unit on a carrier are determined based on all Start and Length Indicator Values, SLIVs, in a Time Domain Resource Assignment, TDRA, table or based on a valid SLIV in the TDRA table; wherein the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

**54.** The apparatus according to claim 53, wherein when the candidate downlink transmission opportunities in the second time unit on the carrier are determined based on the valid SLIV in the TDRA table, whether an SLIV is valid is determined in at least one of following ways:

when the TDRA table is the TDRA table shared by the plurality of carriers, for each of the plurality of carriers, determining in a second time unit whether an SLIV in the TDRA table comprises an uplink symbol configured on a current carrier; in response to that the SLIV in the TDRA table does not comprise the uplink symbol configured on the current carrier, the SLIV is determined to be valid; in response to that the SLIV in the TDRA table comprises the uplink symbol configured on the current carrier, the SLIV is determined to be invalid; or, when the SLIV comprises an uplink symbol in the second time unit corresponding to each of the plurality of carriers, the SLIV is determined to be invalid, otherwise the SLIV is determined to be valid;

when the TDRA table is the TDRA table configured for the DCI, a row in the TDRA table corresponds to an SLIV group with a plurality of SLIVs, and each SLIV in the SLIV group corresponds to each of the plurality of carriers, then: when each of the SLIVs comprises an uplink symbol in a second time unit on a corresponding carrier, the SLIV group is determined to be invalid, otherwise the SLIV group is determined to be valid;

when the TDRA table is the TDRA table corresponding to a respective one of the plurality of carriers, for each of the plurality of carriers, determining in a second time unit whether an SLIV in a TDRA table corresponding to the current carrier comprises an uplink symbol configured on the current carrier; in response to that the SLIV in the TDRA table corresponding to the current carrier does not comprise the uplink symbol configured on the current carrier, the SLIV is determined to be valid; in response to that the SLIV in the TDRA table corresponding to the current carrier comprises the uplink symbol configured on the current carrier, the SLIV is determined to be invalid;

wherein, if a downlink transmission with M time repetitions is configured for a carrier, M second time units for transmission repetitions is determined based on a second time unit corresponding to the first time unit on the carrier; when the SLIV comprises no uplink symbol in at least one of the M second time units for transmission repetitions, the SLIV is determined to be valid, otherwise the SLIV is determined to be invalid.

55. The apparatus according to claim 50, wherein, when a quantity $M_c$ of candidate downlink transmission opportunities in the second time unit corresponding to the first time unit with index n-K1; on a carrier of the plurality of carriers is less than $M_{c\text{-}max}$, the $M_c$ candidate downlink transmission opportunities on the carrier are determined to correspond to first $M_c$ candidate downlink transmission opportunities or last $M_c$ candidate downlink transmission opportunities among the $M_{c\text{-}max}$ candidate downlink transmission opportunities.

56. The apparatus according to claim 50, wherein the determining unit is specifically configured to:

determine a quantity of HARQ-ACK bits corresponding to the set of candidate downlink transmission opportunities corresponding to the plurality of carriers in the HARQ-ACK codebook;
determine that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

57. The apparatus according to claim 56, wherein the determining unit is configured to:

when the DCI schedules the downlink transmission on the plurality of carriers, determine the mapping position of the HARQ-ACK of the downlink transmission in the HARQ-ACK codebook according to a specific carrier among the plurality of carriers; and/or
when the DCI schedules the downlink transmission on one of the plurality of carriers, determine the mapping position of the HARQ-ACK of the downlink transmission in the HARQ-ACK codebook according to a carrier on which the downlink transmission is performed.

58. The apparatus according to claim 57, wherein the determining unit is configured to:

determine a candidate downlink transmission opportunity of the downlink transmission, among the $M_{c\text{-}max}$ candidate downlink transmission opportunities of the first time unit with index n-K1$_i$ corresponding to a second time unit where the downlink transmission is performed on the specific carrier, and determine that the HARQ-ACK of the downlink transmission is mapped to an HARQ-ACK position corresponding to the candidate downlink transmission opportunity of the downlink transmission in the HARQ-ACK codebook;
determine a candidate downlink transmission opportunity of the downlink transmission, among the $M_{c\text{-}max}$ candidate downlink transmission opportunities of the first time unit with index n-K1$_i$ corresponding to a second time unit where the downlink transmission is performed on a carrier on which the downlink transmission is performed, and determine that the HARQ-ACK of the downlink transmission is mapped to an HARQ-ACK position corresponding to the candidate downlink transmission opportunity of the downlink transmission in the HARQ-ACK codebook.

**59.** The apparatus according to claim 49, wherein the determining unit is configured to:

determine that the HARQ-ACK codebook corresponding to the plurality of carriers is an HARQ-ACK codebook corresponding to a specific carrier among the plurality of carriers; or

take candidate downlink transmission opportunities corresponding to a specific carrier among the plurality of carriers as candidate downlink transmission opportunities corresponding to the plurality of carriers, and determine that the HARQ-ACK codebook is generated based on the candidate downlink transmission opportunities corresponding to the plurality of carriers.

**60.** The apparatus according to claim 49, wherein it is determined that the HARQ-ACK codebook corresponding to the plurality of carriers is an HARQ-ACK codebook corresponding to a specific carrier among the plurality of carriers, or, candidate downlink transmission opportunities corresponding to a specific carrier among the plurality of carriers are taken as a candidate downlink transmission opportunities corresponding to the plurality of carriers, and it is determined that the HARQ-ACK codebook is generated based on the candidate downlink transmission opportunities corresponding to the plurality of carriers, in response to satisfying one or any combination of following conditions: the plurality of carriers has a same TDRA table, the plurality of carriers has a same slot structure, the plurality of carriers has a same SCS, SLIVs on the plurality of carriers except the specific carrier are comprised in a TDRA table of the specific carrier, or the DCI always schedules downlink transmission on one or more carriers comprising the specific carrier among the plurality of carriers.

**61.** The apparatus according to any one of claims 50-60, wherein the specific carrier is a carrier with a smallest or largest index among the plurality of carriers, or a carrier with a smallest or largest Sub-Carrier Spacing, SCS, among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

**62.** The apparatus according to any one of claims 49-60, wherein HARQ-ACKs for the downlink transmission scheduled by the DCI on the plurality of carriers and a downlink transmission scheduled by the DCI on one carrier are not received in a same Physical Uplink Control Channel, PUCCH, or in a same first time unit.

**63.** The method according to any one of claims 50-60, wherein the first time unit comprises: one of a predefined time period, subframe, slot, or subslot composed of A symbols, wherein A is a positive integer; and/or

the second time unit comprises: one of a predefined time period, subframe, slot or subslot composed of B symbols, wherein B is a positive integer;
definitions of the first time unit and the second time unit are same or different.

**64.** The apparatus according to claim 49, wherein the HARQ-ACK codebook is generated in a semi-static manner; and/or the downlink transmission comprises at least one of a Physical Downlink Shared Channel, PDSCH, or a PDCCH indicating downlink Semi-Persistent Scheduling, SPS, resource release.

**65.** An information communication apparatus, comprising:

a memory configured to store program instructions;
a processor configured to invoke the program instructions stored in the memory, and in accordance with an obtained program, perform the process of:

determining a Hybrid Automatic Repeat reQuest, HARQ-ACK, codebook with a plurality of carriers as a group, in response to Downlink Control Information, DCI, being used to schedule one downlink transmission on the plurality of carriers;
sending the HARQ-ACK codebook.

**66.** The apparatus according to claim 65, wherein the processor is configured to perform:

determining each first time unit with index $n-K1_i$ according to each value $K1_i$ in a feedback timing K1 set, and determining a quantity $M_{c-max}$ of candidate downlink transmission opportunities of each first time unit with index $n-K1_i$, when the HARQ-ACK codebook is transmitted in a first time unit with index n;
cascading $M_{c-max}$ candidate downlink transmission opportunities of each first time unit with index $n-K1_i$ together

according to a fixed order of corresponding $K1_i$ values within the feedback timing K1 set, to form a set of candidate downlink transmission opportunities corresponding to the plurality of carriers;

determining the HARQ-ACK codebook according to the set of candidate downlink transmission opportunities corresponding to the plurality of carriers.

67. The apparatus according to claim 66, wherein the quantity $M_{c-max}$ is determined in one of following manners:

Manner 1-1: determining the quantity $M_{c-max}$ as a maximum quantity of candidate downlink transmission opportunities in each second time unit for which an HARQ-ACK feedback is performed in the first time unit with index n on each of the plurality of carriers;

Manner 1-2: for each first time unit with index $n-K1_i$, determining the $M_{c-max}$ as a maximum quantity of candidate downlink transmission opportunities in a second time unit corresponding to the first time unit with index n-K1; on each of the plurality of carriers;

Manner 1-3: determining the quantity $M_{c-max}$ as a quantity of candidate downlink transmission opportunities in a second time unit corresponding to the first time unit with index $n-K1_i$ on a specific carrier among the plurality of carriers.

68. The apparatus according to claim 67, wherein,

in the Manner 1-2, if there are a plurality of second time units corresponding to the first time unit with index n-K1; on one carrier, then the candidate downlink transmission opportunities in the second time unit corresponding to the first time unit with index n-K1; on the one carrier are a union set of candidate downlink transmission opportunities in the plurality of second time units;

in the Manner 1-3, if there are a plurality of second time units corresponding to the first time unit with index n-K1; on the specific carrier, then the candidate downlink transmission opportunities in the second time unit corresponding to the first time unit with index $n-K1_i$ on the specific carrier are a union set of candidate downlink transmission opportunities in the plurality of second time units.

69. The apparatus according to claim 67, wherein candidate downlink transmission opportunities in a second time unit on a carrier are determined based on all Start and Length Indicator Values, SLIVs, in a Time Domain Resource Assignment, TDRA, table or based on a valid SLIV in the TDRA table; wherein the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

70. The apparatus according to claim 69, wherein when the candidate downlink transmission opportunities in the second time unit on the carrier are determined based on the valid SLIV in the TDRA table, whether an SLIV is valid is determined in at least one of following ways:

when the TDRA table is the TDRA table shared by the plurality of carriers, for each of the plurality of carriers, determining in a second time unit whether an SLIV in the TDRA table comprises an uplink symbol configured on a current carrier; in response to that the SLIV in the TDRA table does not comprise the uplink symbol configured on the current carrier, the SLIV is determined to be valid; in response to that the SLIV in the TDRA table comprises the uplink symbol configured on the current carrier, the SLIV is determined to be invalid; or, when the SLIV comprises an uplink symbol in the second time unit corresponding to each of the plurality of carriers, the SLIV is determined to be invalid, otherwise the SLIV is determined to be valid;

when the TDRA table is the TDRA table configured for the DCI, a row in the TDRA table corresponds to an SLIV group with a plurality of SLIVs, and each SLIV in the SLIV group corresponds to each of the plurality of carriers, then: when each of the SLIVs comprises an uplink symbol in a second time unit on a corresponding carrier, the SLIV group is determined to be invalid, otherwise the SLIV group is determined to be valid;

when the TDRA table is the TDRA table corresponding to a respective one of the plurality of carriers, for each of the plurality of carriers, determining in a second time unit whether an SLIV in a TDRA table corresponding to the current carrier comprises an uplink symbol configured on the current carrier; in response to that the SLIV in the TDRA table corresponding to the current carrier does not comprise the uplink symbol configured on the current carrier, the SLIV is determined to be valid; in response to that the SLIV in the TDRA table corresponding to the current carrier comprises the uplink symbol configured on the current carrier, the SLIV is determined to be invalid;

wherein, if a downlink transmission with M time repetitions is configured for a carrier, M second time units for transmission repetitions is determined based on a second time unit corresponding to the first time unit on the carrier; when the SLIV comprises no uplink symbol in at least one of the M second time units for transmission repetitions, the SLIV is determined to be valid, otherwise the SLIV is determined to be invalid.

71. The apparatus according to claim 66, wherein, when a quantity $M_c$ of candidate downlink transmission opportunities in the second time unit corresponding to the first time unit with index n-K1; on a carrier of the plurality of carriers is less than $M_{c-max}$, the $M_c$ candidate downlink transmission opportunities on the carrier are determined to correspond to first $M_c$ candidate downlink transmission opportunities or last $M_c$ candidate downlink transmission opportunities among the $M_{c-max}$ candidate downlink transmission opportunities.

72. The apparatus according to claim 66, wherein the processor is configured to perform:

determining a quantity of HARQ-ACK bits corresponding to the set of candidate downlink transmission opportunities corresponding to the plurality of carriers in the HARQ-ACK codebook;
mapping an HARQ-ACK of a downlink transmission to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

73. The apparatus according to claim 72, wherein the processor is configured to perform:

when the DCI schedules the downlink transmission on the plurality of carriers, determining the mapping position of the HARQ-ACK of the downlink transmission in the HARQ-ACK codebook according to a specific carrier among the plurality of carriers; and/or
when the DCI schedules the downlink transmission on one of the plurality of carriers, determining the mapping position of the HARQ-ACK of the downlink transmission in the HARQ-ACK codebook according to a carrier on which the downlink transmission is performed.

74. The apparatus according to claim 73, wherein the processor is configured to perform:

determining a candidate downlink transmission opportunity of the downlink transmission, among the $M_{c-max}$ candidate downlink transmission opportunities of a first time unit with index n-K1; corresponding to a second time unit where the downlink transmission is performed on the specific carrier, and mapping the HARQ-ACK of the downlink transmission to an HARQ-ACK position corresponding to the candidate downlink transmission opportunity of the downlink transmission in the HARQ-ACK codebook;
determining a candidate downlink transmission opportunity of the downlink transmission, among the $M_{c-max}$ candidate downlink transmission opportunities of a first time unit with index n-K1; corresponding to a second time unit where the downlink transmission is performed on a carrier on which the downlink transmission is performed, and mapping the HARQ-ACK of the downlink transmission to an HARQ-ACK position corresponding to the candidate downlink transmission opportunity of the downlink transmission in the HARQ-ACK codebook.

75. The apparatus according to claim 65, wherein the processor is configured to perform:

taking an HARQ-ACK codebook corresponding to a specific carrier among the plurality of carriers as the HARQ-ACK codebook corresponding to the plurality of carriers; or
taking candidate downlink transmission opportunities corresponding to a specific carrier among the plurality of carriers as candidate downlink transmission opportunities corresponding to the plurality of carriers, and generating the HARQ-ACK codebook based on the candidate downlink transmission opportunities corresponding to the plurality of carriers.

76. The apparatus according to claim 65, wherein an HARQ-ACK codebook corresponding to a specific carrier among the plurality of carriers is taken as the HARQ-ACK codebook corresponding to the plurality of carriers, or, candidate downlink transmission opportunities corresponding to a specific carrier among the plurality of carriers are taken as candidate downlink transmission opportunities corresponding to the plurality of carriers, and the HARQ-ACK codebook is generated based on the candidate downlink transmission opportunities corresponding to the plurality of carriers, in response to satisfying one or any combination of following conditions:
the plurality of carriers has a same TDRA table, the plurality of carriers has a same slot structure, the plurality of carriers has a same SCS, SLIVs on the plurality of carriers except the specific carrier are comprised in a TDRA table of the specific carrier, or the DCI always schedules downlink transmission on one or more carriers comprising the specific carrier among the plurality of carriers.

77. The apparatus according to any one of claims 66-76, wherein the specific carrier is a carrier with a smallest or largest index among the plurality of carriers, or a carrier with a smallest or largest Sub-Carrier Spacing, SCS, among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

78. The apparatus according to any one of claims 65-76, wherein HARQ-ACKs for the downlink transmission scheduled by the DCI on the plurality of carriers and a downlink transmission scheduled by the DCI on one carrier are not transmitted in a same Physical Uplink Control Channel, PUCCH, or in a same first time unit.

79. The apparatus according to any one of claims 66-74, wherein:

the first time unit comprises: one of a predefined time period, subframe, slot, or subslot composed of A symbols, wherein A is a positive integer; and/or
the second time unit comprises: one of a predefined time period, subframe, slot or subslot composed of B symbols, wherein B is a positive integer;
definitions of the first time unit and the second time unit are same or different.

80. The apparatus according to claim 65, wherein the HARQ-ACK codebook is generated in a semi-static manner; and/or the downlink transmission comprises at least one of a Physical Downlink Shared Channel, PDSCH, or a PDCCH indicating downlink Semi-Persistent Scheduling, SPS, resource release.

81. An information communication apparatus, comprising:

a memory configured to store program instructions;
a processor configured to invoke the program instructions stored in the memory, and in accordance with an obtained program, perform the process of:

determining that a Hybrid Automatic Repeat reQuest, HARQ-ACK, codebook is generated with a plurality of carriers as a group, in response to Downlink Control Information, DCI, being used to schedule one downlink transmission on the plurality of carriers;
receiving the HARQ-ACK codebook.

82. The apparatus according to claim 81, wherein the processor is configured to perform:

determining each first time unit with index $n-K1_i$ according to each value $K1_i$ in a feedback timing K1 set, and determining a quantity $M_{c-max}$ of candidate downlink transmission opportunities of each first time unit with index $n-K1_i$, when the HARQ-ACK codebook is received in a first time unit with index n;
cascading $M_{c-max}$ candidate downlink transmission opportunities of each first time unit with index $n-K1_i$ together according to a fixed order of corresponding $K1_i$ values within the feedback timing K1 set, to form a set of candidate downlink transmission opportunities corresponding to the plurality of carriers;
determining that the HARQ-ACK codebook is generated according to the set of candidate downlink transmission opportunities corresponding to the plurality of carriers.

83. The apparatus according to claim 82, wherein the quantity $M_{c-max}$ is determined in one of following manners:

Manner 1-1: determining the quantity $M_{c-max}$ as a maximum quantity of candidate downlink transmission opportunities in each second time unit for which an HARQ-ACK feedback is performed in the first time unit with index n on each of the plurality of carriers;
Manner 1-2: for each first time unit with index $n-K1_i$, determining the quantity $M_{c-max}$ as a maximum quantity of candidate downlink transmission opportunities in a second time unit corresponding to the first time unit with index $n-K1_i$ on each of the plurality of carriers;
Manner 1-3: determining the quantity $M_{c-max}$ as a quantity of candidate downlink transmission opportunities in a second time unit corresponding to the first time unit with index $n-K1_i$ on a specific carrier among the plurality of carriers.

84. The apparatus according to claim 83, wherein,

in the Manner 1-2, if there are a plurality of second time units corresponding to the first time unit with index n-$K1_i$ on one carrier, then the candidate downlink transmission opportunities in the second time unit corresponding to the first time unit with index n-$K1_i$ on the one carrier are a union set of candidate downlink transmission opportunities in the plurality of second time units;

in the Manner 1-3, if there are a plurality of second time units corresponding to the first time unit with index n-$K1$; on the specific carrier, then the candidate downlink transmission opportunities in the second time unit corresponding to the first time unit with index n-$K1_i$ on the specific carrier are a union set of candidate downlink transmission opportunities in the plurality of second time units.

85. The apparatus according to claim 83, wherein candidate downlink transmission opportunities in a second time unit on a carrier are determined based on all Start and Length Indicator Values, SLIVs, in a Time Domain Resource Assignment, TDRA, table or based on a valid SLIV in the TDRA table; wherein the valid SLIV is an SLIV that does not conflict with a configured uplink symbol, and the TDRA table is a TDRA table shared by the plurality of carriers or a TDRA table configured for the DCI or a TDRA table corresponding to a respective one of the plurality of carriers.

86. The apparatus according to claim 85, wherein when the candidate downlink transmission opportunities in the second time unit on one carrier are determined based on the valid SLIV in the TDRA table, whether an SLIV is valid is determined in at least one of following ways:

when the TDRA table is the TDRA table shared by the plurality of carriers, for each of the plurality of carriers, determining in a second time unit whether an SLIV in the TDRA table comprises an uplink symbol configured on a current carrier; in response to that the SLIV in the TDRA table does not comprise the uplink symbol configured on the current carrier, the SLIV is determined to be valid; in response to that the SLIV in the TDRA table comprises the uplink symbol configured on the current carrier, the SLIV is determined to be invalid; or, when the SLIV comprises an uplink symbol in the second time unit corresponding to each of the plurality of carriers, the SLIV is determined to be invalid, otherwise the SLIV is determined to be valid;

when the TDRA table is the TDRA table configured for the DCI, a row in the TDRA table corresponds to an SLIV group with a plurality of SLIVs, and each SLIV in the SLIV group corresponds to each of the plurality of carriers, then: when each of the SLIVs comprises an uplink symbol in a second time unit on a corresponding carrier, the SLIV group is determined to be invalid, otherwise the SLIV group is determined to be valid;

when the TDRA table is the TDRA table corresponding to a respective one of the plurality of carriers, for each of the plurality of carriers, determining in a second time unit whether an SLIV in a TDRA table corresponding to the current carrier comprises an uplink symbol configured on the current carrier; in response to that the SLIV in the TDRA table corresponding to the current carrier does not comprise the uplink symbol configured on the current carrier, the SLIV is determined to be valid; in response to that the SLIV in the TDRA table corresponding to the current carrier comprises the uplink symbol configured on the current carrier, the SLIV is determined to be invalid;

wherein, if a downlink transmission with M time repetitions is configured for a carrier, M second time units for transmission repetitions is determined based on a second time unit corresponding to the first time unit on the carrier; when the SLIV comprises no uplink symbol in at least one of the M second time units for transmission repetitions, the SLIV is determined to be valid, otherwise the SLIV is determined to be invalid.

87. The apparatus according to claim 82, wherein, when a quantity $M_c$ of candidate downlink transmission opportunities in the second time unit corresponding to the first time unit with index n-$K1$; on a carrier of the plurality of carriers is less than $M_{c\text{-}max}$, the $M_c$ candidate downlink transmission opportunities on the carrier are determined to correspond to first $M_c$ candidate downlink transmission opportunities or last $M_c$ candidate downlink transmission opportunities among the $M_{c\text{-}max}$ candidate downlink transmission opportunities.

88. The apparatus according to claim 82, wherein the processor is specifically configured to perform:

determining a quantity of HARQ-ACK bits corresponding to the set of candidate downlink transmission opportunities corresponding to the plurality of carriers included in the HARQ-ACK codebook;

determining that an HARQ-ACK of a downlink transmission is mapped to a corresponding HARQ-ACK position in the HARQ-ACK codebook according to a correspondence between the downlink transmission and a candidate downlink transmission opportunity in the set of candidate downlink transmission opportunities corresponding to the plurality of carriers.

89. The apparatus according to claim 88, wherein the processor is configured to perform:

when the DCI schedules the downlink transmission on the plurality of carriers, determining the mapping position of the HARQ-ACK of the downlink transmission in the HARQ-ACK codebook according to a specific carrier among the plurality of carriers; and/or
when the DCI schedules the downlink transmission on one of the plurality of carriers, determining the mapping position of the HARQ-ACK of the downlink transmission in the HARQ-ACK codebook according to a carrier on which the downlink transmission is performed.

90. The apparatus according to claim 89, wherein the processor is configured to perform:

determining a candidate downlink transmission opportunity of the downlink transmission, among the $M_{c\text{-max}}$ candidate downlink transmission opportunities of the first time unit with index $n\text{-}K1_i$ corresponding to a second time unit where the downlink transmission is performed on the specific carrier, and determining that the HARQ-ACK of the downlink transmission is mapped to an HARQ-ACK position corresponding to the candidate downlink transmission opportunity of the downlink transmission in the HARQ-ACK codebook;
determining a candidate downlink transmission opportunity of the downlink transmission, among the $M_{c\text{-max}}$ candidate downlink transmission opportunities of the first time unit with index $n\text{-}K1_i$ corresponding to a second time unit where the downlink transmission is performed on a carrier on which the downlink transmission is performed, and determining that the HARQ-ACK of the downlink transmission is mapped to an HARQ-ACK position corresponding to the candidate downlink transmission opportunity of the downlink transmission in the HARQ-ACK codebook.

91. The apparatus according to claim 81, wherein the processor is configured to perform:

determining that the HARQ-ACK codebook corresponding to the plurality of carriers is an HARQ-ACK codebook corresponding to a specific carrier among the plurality of carriers; or
taking candidate downlink transmission opportunities corresponding to a specific carrier among the plurality of carriers as candidate downlink transmission opportunities corresponding to the plurality of carriers, and determining that the HARQ-ACK codebook is generated based on the candidate downlink transmission opportunities corresponding to the plurality of carriers.

92. The apparatus according to claim 81, wherein it is determined that the HARQ-ACK codebook corresponding to the plurality of carriers is an HARQ-ACK codebook corresponding to a specific carrier among the plurality of carriers, or, candidate downlink transmission opportunities corresponding to a specific carrier among the plurality of carriers are taken as a candidate downlink transmission opportunities corresponding to the plurality of carriers, and it is determined that the HARQ-ACK codebook is generated based on the candidate downlink transmission opportunities corresponding to the plurality of carriers in response to satisfying one or any combination of following conditions: the plurality of carriers has a same TDRA table, the plurality of carriers has a same slot structure, the plurality of carriers has a same SCS, SLIVs on the plurality of carriers except the specific carrier are comprised in a TDRA table of the specific carrier, or the DCI always schedules downlink transmission on one or more carriers comprising the specific carrier among the plurality of carriers.

93. The apparatus according to any one of claims 82-92, wherein the specific carrier is a carrier with a smallest or largest index among the plurality of carriers, or a carrier with a smallest or largest Sub-Carrier Spacing, SCS, among the plurality of carriers, or a carrier pre-indicated by high-layer signaling among the plurality of carriers, or a carrier used as scheduling timing reference when the DCI schedules the plurality of carriers, or a carrier used as HARQ-ACK feedback timing reference when the DCI schedules the plurality of carriers.

94. The apparatus according to any one of claims 81-92, wherein HARQ-ACKs for the downlink transmission scheduled by the DCI on the plurality of carriers and a downlink transmission scheduled by the DCI on one carrier are not received in a same Physical Uplink Control Channel, PUCCH, or in a same first time unit.

95. The apparatus according to any one of claims 82-92, wherein the first time unit comprises: one of a predefined time period, subframe, slot, or subslot composed of A symbols, wherein A is a positive integer; and/or

the second time unit comprises: one of a predefined time period, subframe, slot or subslot composed of B symbols, wherein B is a positive integer;

definitions of the first time unit and the second time unit are same or different.

96. The apparatus according to claim 81, wherein the HARQ-ACK codebook is generated in a semi-static manner; and/or the downlink transmission comprises at least one of a Physical Downlink Shared Channel, PDSCH, or a PDCCH indicating downlink Semi-Persistent Scheduling, SPS, resource release.

97. A computer storage medium, wherein the computer storage medium stores computer executable instructions which are configured to cause a computer to perform the method of any one of claims 1-32.

FIG. 1

FIG.2

Determining an HARQ-ACK codebook with a
plurality of carriers as a group, when one DCI is
used to schedule one downlink transmission on the
plurality of carriers

S101

Sending the HARQ-ACK codebook

S102

FIG. 3

Determining that an HARQ-ACK codebook is
generated with a plurality of carriers as a group,
when one DCI is used to schedule one downlink
transmission on the plurality of carriers

S201

Receiving the HARQ-ACK codebook

S202

FIG. 4

600

Processor

620

Memory

Bus interface

610

Transceiver

630

User
interface

FIG. 5

FIG. 6

FIG. 7

FIG. 8

## INTERNATIONAL SEARCH REPORT

| International application No. |
| --- |
| **PCT/CN2021/089742** |

**A. CLASSIFICATION OF SUBJECT MATTER**

H04W 72/12(2009.01)i; H04L 1/16(2006.01)i; H04L 1/18(2006.01)i; H04L 5/00(2006.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 下行控制信息, 下行传输, 物理下行共享信道, 混合自动重传请求, 反馈, 码本, 载波组, 载波聚合, 跨载波, 特定载波, 调度, DCI, PDSCH, HARQ-ACK, codebook, carriers, CCs, cross-carrier, specific carrier, schedul+

**C. DOCUMENTS CONSIDERED TO BE RELEVANT**

| Category* | Citation of document, with indication, where appropriate, of the relevant passages | Relevant to claim No. |
| --- | --- | --- |
| X | WO 2018175820 A1 (XIONG, Gang et al.) 27 September 2018 (2018-09-27) description paragraphs [0031]-[0343], figures 5-20c | 1-97 |
| A | WO 2019028845 A1 (LENOVO BEIJING LTD.) 14 February 2019 (2019-02-14) entire document | 1-97 |
| A | CN 110149172 A (ZTE CORPORATION) 20 August 2019 (2019-08-20) entire document | 1-97 |
| A | VIVO. "Remaining Issues on Cross-Carrier Scheduling with Mix Numerologies" *3GPP TSG-RAN WG1 Meeting #100bis e-Meeting R1-2001692*, 11 April 2020 (2020-04-11), entire document | 1-97 |
| A | CATT. "Discussion on HARQ-ACK Feedback for SPS PDSCH Release with Cross-Carrier Scheduling" *3GPP TSG RAN WG1 Meeting #101 e-Meeting R1-2003602*, 16 May 2020 (2020-05-16), entire document | 1-97 |

☐ Further documents are listed in the continuation of Box C.  ☑ See patent family annex.

| * Special categories of cited documents: | "T" | later document published after the international filing date or priority date and not in conflict with the application but cited to understand the principle or theory underlying the invention |
| --- | --- | --- |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
| --- | --- |
| **18 June 2021** | **16 July 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/089742**

| Patent document cited in search report | | | Publication date (day/month/year) | Patent family member(s) | | | Publication date (day/month/year) |
|---|---|---|---|---|---|---|---|
| WO | 2018175820 | A1 | 27 September 2018 | CN | 111903170 | A | 06 November 2020 |
| | | | | EP | 3603266 | A1 | 05 February 2020 |
| | | | | US | 2020022175 | A1 | 16 January 2020 |
| WO | 2019028845 | A1 | 14 February 2019 | CN | 111264040 | A | 09 June 2020 |
| | | | | EP | 3665807 | A1 | 17 June 2020 |
| | | | | IN | 202037002933 | A | 28 February 2020 |
| | | | | EP | 3665807 | A4 | 24 March 2021 |
| | | | | US | 2020374044 | A1 | 26 November 2020 |
| CN | 110149172 | A | 20 August 2019 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010467902